# EUROPEAN PATENT SPECIFICATION

(11) **EP 3 415 731 B1**
(45) Date of publication and mention of the grant of the patent: **11.03.2020**
(21) Application number: 17766709.4
(22) Date of filing: 15.03.2017
(51) Int. Cl.: F01N 3/20, B62M 7/02, F01N 3/00, F01N 13/00, G01M 17/007, F01N 11/00

(54) **SADDLE-TYPE VEHICLE**
SATTELFAHRZEUG
VÉHICULE DE TYPE À SELLE

(30) Priority: 16.03.2016 JP 2016052136
(43) Date of publication of application: 19.12.2018
(73) Proprietor: Yamaha Hatsudoki Kabushiki Kaisha, Iwata-shi, Shizuoka 438-8501 (JP)
(72) Inventor: TOMII, Ryo, Iwata-shi Shizuoka 438-8501 (JP); ITO, Takuma, Iwata-shi Shizuoka 438-8501 (JP); WAKIMURA, Makoto, Iwata-shi Shizuoka 438-8501 (JP)
(74) Representative: Stöckeler, Ferdinand
(86) International application number: PCT/JP2017/010332
(87) International publication number: WO 2017/159713

(56) References cited:
- WO-A1-2016/002956
- WO-A1-2016/002962
- JP-A- S62 178 720
- JP-A- 2001 114 181
- JP-A- 2008 008 158
- JP-A- 2008 121 581
- JP-A- 2008 121 581

## Description

### [Technical Field]

The present teaching relates to a straddled vehicle.

### [Background Art]

For example, as shown in Patent Literature 1, a straddled vehicle such as a motorcycle includes a catalyst for purifying exhaust gas. The motorcycle disclosed in Patent Literature 1 includes an engine main body and an exhaust device. The engine main body of Patent Literature 1 includes a plurality of combustion chambers. The exhaust device includes a plurality of individual exhaust pipes, a collective exhaust pipe, and a muffler. The individual exhaust pipe is provided for each single combustion chamber. The upstream ends of the plurality of individual exhaust pipes are connected to the engine main body. The downstream ends of the plurality of individual exhaust pipes are connected to the collective exhaust pipe. The downstream end of the collective exhaust pipe is connected to an exhaust gas conduit disposed in the muffler. The downstream end of the exhaust gas conduit is connected to a cylindrical catalyst case disposed in the muffler. The catalyst is disposed in the catalyst case.

In Patent Literature 1, the left wall portion and the right wall portion of the muffler are closer to each other as they are closer to the lower end. The exhaust gas conduit includes a bended portion that changes the flow direction of the exhaust gas from the front-rear direction to the vehicle width direction. The catalyst case is inclined with respect to the vehicle width direction and the up-down direction. In the motorcycle disclosed in Patent Literature 1, the following effects are obtained by such a configuration of the exhaust device. That is, while securing the bank angle, the capacity of the catalyst and the flow length of the exhaust gas are secured, thereby improving the exhaust gas purification performance. This effect can be paraphrased as follows. It is easy to secure a clearance between the vehicle body and the ground while suppressing the increase in size of the straddled vehicle. It is possible to secure a path length from the engine main body to the catalyst. By increasing the size of the catalyst, the performance of the catalyst purifying the exhaust gas can be improved.

WO 2016/002956 A1 discloses a straddled vehicle in which deterioration of the main catalyst is detectable by means of a signal from a downstream oxygen detector provided downstream of a main catalyst. Replacement of the main catalyst is suggested by providing information before the deterioration of the main catalyst reaches a predetermined level.

JP 2008 121581 A teaches calculation of an integrated value of the amount of change of an upstream air fuel ratio sensor. A catalyst conversion window width relative to an output value of a downstream air fuel ratio sensor is set based on a catalyst temperature. Then, an amount of change of the output value of the downstream air fuel ratio sensor is compared with the catalyst conversion window width and another integrated value is calculated based thereon. A deterioration diagnosis value is calculated from both integrated values and it is determined that a catalyst is deteriorated when the deterioration diagnosis value exceeds a threshold.

### [Citation List]

### [Patent Literatures]

Patent Literature 1: Japanese Unexamined Patent Publication No. 2015-108318

### [Summary of Invention]

### [Technical Problem]

In recent years, it is required to maintain the initial performance of a straddled vehicle with respect to exhaust gas purification. In order to meet this requirement, the catalyst is increased in size. However, when the size of the catalyst is increased, the layout of the exhaust device is restricted. As a result, it may be impossible to secure the path length from the engine main body to the catalyst. In addition, if the size of the catalyst is increased, the size of the straddled vehicle may increase.

In Patent Literature 1, by devising the shape of the exhaust device, it is possible to secure the degree of freedom of the layout of the exhaust device and to suppress an increase in size of the straddled vehicle while maintaining the initial performance of the straddled vehicle with respect to exhaust gas purification.

The present teaching, in a configuration different from the conventional configuration, provides a straddled vehicle which is capable of securing the degree of freedom of the layout of the exhaust device and suppressing the increase in size of the straddled vehicle while maintaining the initial performance of the straddled vehicle with respect to exhaust gas purification.

### [Solution to Problem]

As described above, in recent years, in order to maintain the initial performance of the straddled vehicle with respect to exhaust gas purification, the catalyst is increased in size. The present inventors examined the reason behind this. There are variations in the degree of deterioration of the catalyst depending on the type of situation in which the straddled vehicle is used. Even when the deterioration of the catalyst progresses, it is required to maintain the initial performance of the straddled vehicle with respect to exhaust gas purification for a longer period of time. For this reason, in general, a margin is given to the purification capability of the catalyst in the initial state. In this way, by allowing the catalyst to have a margin in purification capability, the catalyst is increased in size.

However, as a result of examination by the inventors of the present application, it has been found that the frequency at which deterioration progresses is low in a straddled vehicle. Therefore, the inventors of the present application have stopped trying to give a margin to the catalyst purification capability assuming the progressive deterioration of the catalyst, the frequency of which is low. Instead, the inventors considered maintaining the initial performance of the straddled vehicle with respect to exhaust gas purification with the following technical idea. The technical idea is to determine whether the catalyst of the straddled vehicle is deteriorated and to replace the catalyst determined to be deteriorated with a new catalyst. Thus, it is not necessary to give a margin to the purification capability of the catalyst of the straddled vehicle. Therefore, it is possible to downsize the catalyst of the straddled vehicle while maintaining the initial performance of the straddled vehicle with respect to exhaust gas purification. By downsizing the catalyst, the degree of freedom of the layout of the exhaust device of the straddled vehicle can be increased. Specifically, for example, it is possible to secure a long path length from the combustion chamber to the catalyst. In other words, the engine main body and the catalyst unit can be connected by the upstream exhaust passage member.

It is preferable to determine whether the catalyst is deteriorated when the catalyst is in an activated state. It can be determined that the catalyst is deteriorated when the catalyst does not exert the purification performance despite the fact that the engine main body is operating under the operating conditions under which the catalyst is activated.

The inventors of the present teaching conducted a test to examine the determination of whether the catalyst of the straddled vehicle is deteriorated. Then, there was a case where it was erroneously determined that the catalyst had deteriorated even though the catalyst had not deteriorated. Examining the cause, it was found that an erroneous determination may be made when the upstream exhaust passage member is exposed to water. The upstream exhaust passage member connects the engine main body to the catalyst unit. In other words, it was found that water to which the upstream exhaust passage member is exposed of the straddled vehicle is a major factor of erroneous determination. In a straddled vehicle, unlike a four-wheeled vehicle, the upstream exhaust passage member connected to the engine main body and the catalyst unit may be exposed to rainfall or water splashed up by the front wheel or the rear wheel. When the upstream exhaust passage member is exposed to water, the temperature of the exhaust gas flowing into the catalyst lowers. As a result, the temperature of the catalyst lowers. If the temperature of the catalyst is too low, the catalyst cannot exert its purification performance. Therefore, even when the catalyst is not actually deteriorated, it may be determined that the catalyst has deteriorated. Also, as a result of the test, it was found that exposition to water of the upstream exhaust passage member due to water splashed up by the wheel has a large influence on the temperature of the exhaust gas flowing into the catalyst. As described above, it is possible to downsize the catalyst by determining whether the catalyst of the straddled vehicle is deteriorated. Therefore, compared with the case where the catalyst is large, the decreased range of the temperature of the catalyst is large with respect to the decreased range of the temperature of the exhaust gas flowing into the catalyst. Due to this, erroneous determination of deterioration of the catalyst of the straddled vehicle is more likely to occur.

When the layout of the exhaust device of the straddled vehicle differs, the likeliness that the upstream exhaust passage member is exposed to water differs. Therefore, if the layout of the exhaust device of the straddled vehicle differs, even if the traveling conditions are the same, the degree of water-exposition state of the upstream exhaust passage member differs. Specifically, for example, when the length of the upstream exhaust passage member differs, the degree of water-exposition state of the upstream exhaust passage member differs. As described above, because the degree of freedom of the layout of the exhaust device of the straddled vehicle is high, the degree of water-exposition state of the upstream exhaust passage member significantly differs. In a straddled vehicle in which the degree of water-exposition state of the upstream exhaust passage member differs, the likeliness of the erroneous determination of deterioration of the catalyst differs. Therefore, it is difficult to secure the accuracy with which the deterioration of the catalyst of the straddled vehicle is determined.

In view of the above, the inventors of the present teaching considered disposing the upstream exhaust passage member of the straddled vehicle at a position which is exposed to water splashed up by the front wheel or the rear wheel, and detecting a state regarding water to which the upstream exhaust passage member is exposed, which is a problem specific to the straddled vehicle. Then, the inventors considered controlling the determination of whether the catalyst is deteriorated according to the state regarding water to which the upstream exhaust passage member is exposed, which is a problem specific to the straddled vehicle. Thus, erroneous determination of deterioration of the catalyst of the straddled vehicle can be reduced. In other words, it is possible to suppress reduction in the accuracy with which the deterioration of the catalyst is determined due to water to which the upstream exhaust passage member is exposed, which is a specific problem of the straddled vehicle. Therefore, it is not necessary to equalize the likeliness that the upstream exhaust passage member is exposed to water in order to improve the accuracy with which the deterioration of the catalyst is determined. In other words, it is not necessary to restrict the layout of the exhaust device in order to improve the accuracy with which the deterioration of the catalyst is determined. Specifically, for example, there is no restriction such as making the upstream exhaust passage members be the same in length. Therefore, it is possible to increase the degree of freedom of the layout of the exhaust device of the straddled vehicle while securing the accuracy with which the deterioration of the catalyst of the straddled vehicle is determined.

Further, the upstream exhaust passage member is disposed at a position which is exposed to water splashed up by the front wheel or the rear wheel. That is, the upstream exhaust passage member does not have to be disposed so as to prevent the upstream exhaust passage member from being exposed to water splashed up by the front wheel and the rear wheel. Therefore, the degree of freedom of the layout of the exhaust device of the straddled vehicle can be further enhanced.

Further, the upstream exhaust passage member of the straddled vehicle is disposed at a position which is exposed to water splashed up by the front wheel or the rear wheel. Due to this, the difference in temperature of the exhaust gas flowing into the catalyst is large between the case where the upstream exhaust passage member is exposed to water splashed up by the front wheel or the rear wheel and the case where it is not exposed to water. As a result, it is easy to determine whether the upstream exhaust passage member has been exposed to water splashed up by the front wheel or the rear wheel of the straddled vehicle. Therefore, it is possible to improve the accuracy with which the deterioration of the catalyst is determined according to the water-exposition state of the upstream exhaust passage member of the straddled vehicle.

In addition, by increasing the accuracy with which the deterioration of the catalyst is determined, it is possible to further reduce the margin of the purification capability of the catalyst. Therefore, the catalyst of the straddled vehicle can be further downsized. As a result, the increase in size of the straddled vehicle can be further suppressed.

As described above, whether the catalyst is deteriorated is determined by utilizing reduction in the temperature of the exhaust gas due to water to which the upstream exhaust passage member is exposed, which is a specific problem of the straddled vehicle. Then, when deterioration of the catalyst is detected, notification is made to prompt replacement of the catalyst, so that the initial performance of the catalyst can be maintained for a long period. Therefore, even if the upstream exhaust passage member is exposed to water, which is a problem specific to the straddled vehicle, the initial performance of the catalyst mounted on the straddled vehicle can be maintained for a long period.

### <1> A straddled vehicle of the present teaching includes a front wheel unit including at least one front wheel, a rear wheel unit disposed rearward of the front wheel unit in a vehicle front-rear direction and including at least one rear wheel, an engine unit which is at least partially disposed between the front wheel unit and the rear wheel unit when viewed in a vehicle left or right direction, and a notification unit electrically connected to the engine unit.

The engine unit includes an engine main body which is at least partially disposed between the front wheel unit and the rear wheel unit when viewed in the left or right direction, an exhaust device connected to the engine main body, where the exhaust device including a catalyst unit has a catalyst for purifying exhaust gas discharged from the engine main body and an upstream exhaust passage member connecting the engine main body and the catalyst unit, where at least a part of the upstream exhaust passage member is disposed at a position which is exposed to water splashed up by at least one of the front wheel unit or the rear wheel unit, an upstream exhaust passage member water exposition detection unit configured to detect a water-exposition state of the upstream exhaust passage member due to water splashed up by at least one of the front wheel unit or the rear wheel unit, and a catalyst deterioration determination unit configured to determine whether the catalyst is deteriorated when the catalyst is in an active state, where the catalyst deterioration determination unit is configured to control the determination of whether the catalyst is deteriorated based on the water-exposition state of the upstream exhaust passage member due to water splashed up by at least one of the front wheel unit or the rear wheel unit wherein the state is detected by the upstream exhaust passage member water exposition detection unit.

The notification unit makes notification when the catalyst deterioration determination unit determines that the catalyst has deteriorated.

According to this configuration, the straddled vehicle includes a front wheel unit, a rear wheel unit, an engine unit, and a notification unit. In the following description, the left-right direction, the front-rear direction, and the up-down direction are the vehicle left-right direction, the vehicle front-rear direction, and the vehicle up-down direction respectively. The front wheel unit includes at least one front wheel. The rear wheel unit is disposed rearward of the front wheel unit in the vehicle front-rear direction. The rear wheel unit includes at least one rear wheel. At least a part of the engine unit is disposed between the front wheel unit and the rear wheel unit when viewed in the left or right direction. The engine unit includes an engine main body, an exhaust device, an upstream exhaust passage member water exposition detection unit, and a catalyst deterioration determination unit. The exhaust device is connected to the engine main body. The exhaust device includes a catalyst unit and an upstream exhaust passage member. The catalyst unit has a catalyst for purifying exhaust gas discharged from the engine main body. The upstream exhaust passage member connects the engine main body and the catalyst unit. The catalyst deterioration determination unit determines whether the catalyst is deteriorated when the catalyst is in an active state. For example, it is determined whether the catalyst exerts a predetermined level of purification performance when the engine main body is operating under the operating conditions under which the catalyst is activated. When the catalyst does not exert a predetermined level of purification performance, it is determined that the catalyst deteriorates. The notification unit is electrically connected to the engine unit. The notification unit makes notification when the catalyst deterioration determination unit determines that the catalyst has deteriorated. Thus, it is possible to prompt a rider or the like to replace the deteriorated catalyst. By replacing the catalyst, the initial performance of the straddled vehicle with respect to exhaust gas purification can be maintained. Therefore, it is possible to downsize the catalyst while maintaining the initial performance of the straddled vehicle with respect to exhaust gas purification. By downsizing the catalyst, the degree of freedom of layout of the exhaust device can be increased. Therefore, it is possible to secure the degree of freedom of the layout of the exhaust device and to suppress the increase in the size of the straddled vehicle while maintaining the initial performance of the straddled vehicle with respect to exhaust gas purification.

At least a part of the upstream exhaust passage member is disposed at a position which is exposed to water splashed up by at least one of the front wheel unit or the rear wheel unit. When the upstream exhaust passage member is exposed to water at least one of the front wheel unit or the rear wheel unit splashes, the temperature of the exhaust gas flowing into the catalyst decreases. As the temperature of the exhaust gas flowing into the catalyst decreases, the temperature of the catalyst decreases. If the temperature of the catalyst is too low, the catalyst cannot exert its purification performance. Therefore, even if the catalyst is not actually deteriorated, there is a possibility that it is determined that the catalyst has deteriorated. By providing the catalyst deterioration determination unit, the catalyst can be downsized as described above. Therefore, compared with the case where the catalyst is large, the decreased range of the temperature of the catalyst is large with respect to the decreased range of the temperature of the exhaust gas flowing into the catalyst. Due to this, by providing the catalyst deterioration determination unit, erroneous determination of deterioration of the catalyst may occur more easily.

When the layout of the exhaust device of the straddled vehicle differs, the likeliness that the upstream exhaust passage member is exposed to water differs. Therefore, if the layout of the exhaust device differs, even if the traveling conditions are the same, the degree of water-exposition state of the upstream exhaust passage member differs. Specifically, for example, when the length of the upstream exhaust passage member differs, the degree of water-exposition state of the upstream exhaust passage member differs. As described above, because the degree of freedom of the layout of the exhaust device is high, the degree of water-exposition state of the upstream exhaust passage member significantly differs. In a straddled vehicle in which the degree of water-exposition state of the upstream exhaust passage member differs, the likeliness of the erroneous determination of deterioration of the catalyst differs. In general, it is difficult to secure the accuracy of the determination if the likeliness of the erroneous determination differs.

The upstream exhaust passage member water exposition detection unit detects a water-exposition state of the upstream exhaust passage member due to water splashed up by at least one of the front wheel unit or the rear wheel unit. In other words, the upstream exhaust passage member water exposition detection unit detects the state regarding water to which the upstream exhaust passage member is exposed, which is a problem specific to the straddled vehicle. The catalyst deterioration determination unit controls the determination of whether the catalyst is deteriorated based on the water-exposition state of the upstream exhaust passage member due to water splashed up by at least one of the front wheel unit or the rear wheel unit where the state is detected by the upstream exhaust passage member water exposition detection unit. Specifically, for example, when it is detected that the upstream exhaust passage member is exposed to water, the catalyst deterioration determination unit may decide not to determine whether the catalyst is deteriorated. Further, for example, the catalyst deterioration determination unit may change the criterion for determining whether the catalyst is deteriorated based on the detected water-exposition state of the upstream exhaust passage member. Then, the catalyst deterioration determination unit may determine whether the catalyst is deteriorated based on the changed criterion.

In this way, the catalyst deterioration determination unit controls the determination of whether the catalyst is deteriorated based on the water-exposition state of the upstream exhaust passage member due to water splashed up by at least one of the front wheel unit or the rear wheel unit. Therefore, erroneous determination of deterioration of the catalyst can be suppressed. In other words, it is possible to suppress reduction in the accuracy with which the deterioration of the catalyst is determined due to water to which the upstream exhaust passage member is exposed, which is a specific problem of the straddled vehicle. Therefore, it is not necessary to equalize the likeliness that the upstream exhaust passage member is exposed to water in order to improve the accuracy with which the deterioration of the catalyst is determined. In other words, it is not necessary to restrict the layout of the exhaust device in order to improve the accuracy with which the deterioration of the catalyst is determined. Specifically, for example, there is no restriction such as making the upstream exhaust passage members be the same in length. Therefore, it is possible to further enhance the degree of freedom of the layout of the exhaust device while securing the accuracy with which the deterioration of the catalyst is determined.

Further, at least a part of the upstream exhaust passage member is disposed at a position which is exposed to water splashed up by at least one of the front wheel unit or the rear wheel unit. That is, the upstream exhaust passage member is not required to be disposed so as to prevent the upstream exhaust passage member from being exposed to water splashed up by the front wheel unit and the rear wheel unit. Therefore, the degree of freedom of the layout of the exhaust device of the straddled vehicle can be further enhanced.

In addition, the upstream exhaust passage member of the straddled vehicle is disposed at a position which is exposed to water splashed up by at least one of the front wheel unit or the rear wheel unit. Therefore, the difference in the temperature of the exhaust gas flowing into the catalyst is large between the case where the upstream exhaust passage member is exposed to water splashed up by at least one of the front wheel unit or the rear wheel unit, and the case where it is not exposed to water. Due to this, it is easy to determine whether the upstream exhaust passage member has been exposed to water splashed up by at least one of the front wheel unit or the rear wheel unit. Therefore, it is possible to improve the accuracy with which the deterioration of the catalyst is determined according to the water-exposition state of the upstream exhaust passage member of the straddled vehicle.

In addition, by increasing the accuracy with which the deterioration of the catalyst is determined, the catalyst can be further downsized. As a result, the increase in the size of the straddled vehicle can be further suppressed.

As described above, whether the catalyst is deteriorated is determined by utilizing reduction in the temperature of the exhaust gas due to water to which the upstream exhaust passage member is exposed, which is a specific problem of the straddled vehicle. Then, when deterioration of the catalyst is detected, notification is made to prompt replacement of the catalyst, so that the initial performance of the catalyst can be maintained for a long period. Therefore, even if the upstream exhaust passage member is exposed to water, which is a problem specific to the straddled vehicle, the initial performance of the catalyst mounted on the straddled vehicle can be maintained for a long period.

### <2> According to one aspect of the present teaching, the straddled vehicle of the present teaching preferably has the following configuration.

The catalyst deterioration determination unit determines whether the catalyst is deteriorated when the upstream exhaust passage member water exposition detection unit detects that the upstream exhaust passage member is not exposed to water, and does not determine whether the catalyst is deteriorated when the upstream exhaust passage member water exposition detection unit detects that the upstream exhaust passage member is exposed to water splashed up by at least one of the front wheel unit or the rear wheel unit.

According to this configuration, the catalyst deterioration determination unit does not determine whether the catalyst is deteriorated when the upstream exhaust passage member water exposition detection unit detects that the upstream exhaust passage member is exposed to water. Therefore, it is possible to more reliably suppress erroneous determination that a catalyst that is not actually deteriorated has deteriorated. In addition, the catalyst deterioration determination unit determines whether the catalyst is deteriorated when the upstream exhaust passage member water exposition detection unit detects that the upstream exhaust passage member is not exposed to water. Therefore, deterioration of the catalyst can be detected when the catalyst is actually degraded. Due to this, it is possible to further improve the accuracy with which the deterioration of the catalyst is determined.

### <3> According to another aspect of the present teaching, the straddled vehicle of the present teaching preferably has the following configuration.

The catalyst deterioration determination unit determines whether the catalyst is deteriorated based on the water-exposition state of the upstream exhaust passage member where the state is detected by the upstream exhaust passage member water exposition detection unit when the upstream exhaust passage member water exposition detection unit detects that the upstream exhaust passage member is exposed to water splashed up by at least one of the front wheel unit or the rear wheel unit.

According to this configuration, the upstream exhaust passage member water exposition detection unit detects that the upstream exhaust passage member is exposed to water when the upstream exhaust passage member is exposed to water splashed up by at least one of the front wheel unit or the rear wheel unit. The catalyst deterioration determination unit determines whether the catalyst is deteriorated based on the water-exposition state of the upstream exhaust passage member where the state is detected by the upstream exhaust passage member water exposition detection unit. In this manner, even when the upstream exhaust passage member is exposed to water, the catalyst deterioration determination unit determines whether the catalyst is deteriorated while preventing erroneous determination. Therefore, it is possible to further reduce the situation in which the deterioration of the catalyst is not detected even though the catalyst is deteriorated. Due to this, it is possible to more reliably maintain the initial performance of the vehicle with respect to exhaust gas purification.

### <4> According to another aspect of the present teaching, the straddled vehicle of the present teaching preferably has the following configuration.

The engine unit includes a radiator which is at least partially disposed between the front wheel unit and the rear wheel unit when viewed in the left or right direction, the radiator radiating heat of a coolant medium for cooling the engine main body to an atmosphere, and a coolant medium temperature sensor configured to detect a temperature of the coolant medium.

The upstream exhaust passage member water exposition detection unit detects the water-exposition state of the upstream exhaust passage member due to water splashed up by at least one of the front wheel unit or the rear wheel unit based on a signal of the coolant medium temperature sensor.

According to this configuration, the engine unit includes the radiator. As in the engine main body, at least a part of the radiator is disposed between the front wheel unit and the rear wheel unit when viewed in the left or right direction. Therefore, when the straddled vehicle travels on the road surface where water has been accumulated, water splashed up by at least one of the front wheel unit or the rear wheel unit may be poured to the radiator. When the radiator is exposed to water, the temperature of the coolant medium in the radiator decreases. When the temperature of the coolant medium in the radiator decreases, the temperature of the entire coolant medium circulating through the radiator and the engine main body decreases. The radiator is a device that radiates heat of the coolant medium for cooling the engine main body to the atmosphere. Therefore, the radiator is disposed at a position that is susceptible to airflow generated by traveling of the straddled vehicle. The engine unit includes a coolant medium temperature sensor. The coolant medium temperature sensor detects the temperature of the coolant medium. When the temperature of the coolant medium detected by the coolant medium temperature sensor is lower than the predetermined temperature, there is a high possibility that the radiator is exposed to water. When the radiator is exposed to water splashed up by at least one of the front wheel unit or the rear wheel unit, there is a high possibility that the upstream exhaust passage member is also exposed to water splashed up by the at least one of the front wheel unit or the rear wheel unit. Therefore, the upstream exhaust passage member water exposition detection unit can detect the water-exposition state of the upstream exhaust passage member due to water splashed up by at least one of the front wheel unit or the rear wheel unit based on the signal of the coolant medium temperature sensor. Specifically, for example, it is determined whether the temperature of the coolant medium detected by the coolant medium temperature sensor is lower than the temperature of the coolant medium estimated from the operating conditions of the engine main body. When the temperature of the coolant medium detected by the coolant medium temperature sensor is lower than the estimated temperature, it may be determined that the upstream exhaust passage member is exposed to water.

As described above, the radiator is disposed to receive airflow generated by traveling of the straddled vehicle. For this reason, the radiator is exposed to water splashed up by the front wheel unit in the same extent as the upstream exhaust passage member, or more likely to be exposed to water than the upstream exhaust passage member. Thus, it is possible to secure the accuracy of detection of the water-exposition state of the upstream exhaust passage member. As a result, it is possible to secure the accuracy with which the deterioration of the catalyst is determined by the catalyst deterioration determination unit. Therefore, because the catalyst can be downsized, it is possible to suppress the increase in size of the straddled vehicle.

In addition, when cooling the engine main body with a coolant medium, a coolant medium temperature sensor is generally provided. The upstream exhaust passage member water exposition detection unit detects the water-exposition state of the upstream exhaust passage member by using the coolant medium temperature sensor. Therefore, it is possible to detect the water-exposition state of the upstream exhaust passage member while suppressing an increase in the number of sensors. As a result, it is possible to further suppress the increase in size of the straddled vehicle.

### <5> According to another aspect of the present teaching, the straddled vehicle of the present teaching preferably has the following configuration.

The exhaust device includes a downstream exhaust passage member connected to a downstream end of the catalyst unit.

The engine unit includes an exhaust gas temperature sensor for detecting the temperature of the exhaust gas in the upstream exhaust passage member or the downstream exhaust passage member. The upstream exhaust passage member water exposition detection unit detects the water-exposition state of the upstream exhaust passage member due to water splashed up by at least one of the front wheel unit or the rear wheel unit based on a signal of the exhaust gas temperature sensor.

According to this configuration, the exhaust device includes a downstream exhaust passage member. The downstream exhaust passage member is connected to the downstream end of the catalyst unit. When the upstream exhaust passage member is exposed to water splashed up by at least one of the front wheel unit or the rear wheel unit, the temperature of the exhaust gas in the upstream exhaust passage member decreases. As a result, the temperature of the exhaust gas downstream of the upstream exhaust passage member also decreases. The engine unit includes an exhaust gas temperature sensor. The exhaust gas temperature sensor detects the temperature of the exhaust gas in the upstream exhaust passage member or the downstream exhaust passage member. When the temperature of the exhaust gas detected by the exhaust gas temperature sensor is low, there is a high possibility that the upstream exhaust passage member is exposed to water. Therefore, the upstream exhaust passage member water exposition detection unit can detect the water-exposition state of the upstream exhaust passage member due to water splashed up by at least one of the front wheel unit or the rear wheel unit based on the signal of the exhaust gas temperature sensor. Specifically, for example, when the temperature of the exhaust gas detected by the exhaust gas temperature sensor is lower than the predetermined temperature, it may be determined that the upstream exhaust passage member is exposed to water.

Because the water-exposition state of the upstream exhaust passage member is detected based on the temperature of the exhaust gas, the detection accuracy can be improved. As a result, it is possible to improve the accuracy with which the deterioration of the catalyst is determined by the catalyst deterioration determination unit. Thus, the catalyst can be further downsized. As a result, it is possible to further suppress the increase in size of the vehicle.

### <6> According to another aspect of the present teaching, the straddled vehicle of the present teaching preferably has the following configuration.

The engine unit includes an upstream oxygen sensor configured to detect an oxygen concentration in an exhaust gas in the upstream exhaust passage member, and an element impedance detection unit configured to detect impedance of a detection element of the upstream oxygen sensor.

The upstream exhaust passage member water exposition detection unit detects a water-exposition state of the upstream exhaust passage member due to water splashed up by at least one of the front wheel unit or the rear wheel unit based on the impedance of the detection element of the upstream oxygen sensor detected by the element impedance detection unit.

According to this configuration, the engine unit includes an upstream oxygen sensor and an element impedance detection unit. The upstream oxygen sensor detects the oxygen concentration in the exhaust gas in the upstream exhaust passage member. The element impedance detection unit detects the impedance of the detection element of the upstream oxygen sensor. When the upstream exhaust passage member is exposed to water splashed up by at least one of the front wheel unit or the rear wheel unit, the temperature of the exhaust gas in the upstream exhaust passage member decreases. When the temperature of the exhaust gas in the upstream exhaust passage member changes, the temperature of the detection element of the upstream oxygen sensor also changes. When the temperature of the detection element of the upstream oxygen sensor changes, the impedance of the detection element of the upstream oxygen sensor changes. Therefore, the upstream exhaust passage member water exposition detection unit can detect the water-exposition state of the upstream exhaust passage member due to water splashed up by at least one of the front wheel unit or the rear wheel unit based on the impedance of the detection element of the upstream oxygen sensor detected by the element impedance detection unit.

An upstream oxygen sensor is generally provided upstream of the catalyst to control the amount of the fuel supply. The upstream exhaust passage member water exposition detection unit detects a water-exposition state of the upstream exhaust passage member by using a generally provided upstream oxygen sensor. Thus, it is possible to detect the water-exposition state of the upstream exhaust passage member while suppressing an increase in the number of sensors. As a result, it is possible to further suppress the increase in size of the straddled vehicle.

### <7> According to another aspect of the present teaching, the straddled vehicle of the present teaching preferably has the following configuration.

The exhaust device includes a downstream exhaust passage member connected to a downstream end of the catalyst unit and the engine unit includes a downstream oxygen sensor for detecting an oxygen concentration in an exhaust gas in the downstream exhaust passage member.

The element impedance detection unit detects impedance of a detection element of the downstream oxygen sensor.

The upstream exhaust passage member water exposition detection unit detects the water-exposition state of the upstream exhaust passage member due to water splashed up by at least one of the front wheel unit or the rear wheel unit based on the impedance of the detection element of the downstream oxygen sensor detected by the element impedance detection unit.

According to this configuration, the exhaust device includes a downstream exhaust passage member. The downstream exhaust passage member is connected to the downstream end of the catalyst unit. The engine unit includes a downstream oxygen sensor. The downstream oxygen sensor detects the oxygen concentration in the exhaust gas in the downstream exhaust passage member. The element impedance detection unit detects impedance of the detection element of the downstream oxygen sensor. When the upstream exhaust passage member is exposed to water splashed up by at least one of the front wheel unit or the rear wheel unit, the temperature of the exhaust gas in the upstream exhaust passage member decreases. As a result, the temperature of the exhaust gas downstream of the upstream exhaust passage member also decreases. When the temperature of the exhaust gas in the downstream exhaust passage member changes, the temperature of the detection element of the downstream oxygen sensor also changes. When the temperature of the detection element of the downstream oxygen sensor changes, the impedance of the detection element of the downstream oxygen sensor changes. Therefore, the upstream exhaust passage member water exposition detection unit can detect the water-exposition state of the upstream exhaust passage member due to water splashed up by at least one of the front wheel unit or the rear wheel unit based on the impedance of the detection element of the downstream oxygen sensor detected by the element impedance detection unit.

### [Advantageous Effects]

According to the present teaching, it is possible to secure the degree of freedom of the layout of the exhaust device and to suppress the increase in the size of the straddled vehicle while maintaining the initial performance of the straddled vehicle with respect to exhaust gas purification in a configuration different from the conventional configuration.

### [Definition of Upstream Exhaust Passage Member]

In the present teaching, the description that at least a part of the upstream exhaust passage member is disposed at a position which is exposed to water splashed up by the front wheel unit means that at least a part of the upstream exhaust passage member is disposed at a position which may be exposed to water splashed up by the front wheel unit. It does not mean that every time water is splashed by the front wheel unit, at least a part of the upstream exhaust passage member is necessarily exposed to the water. The same also applies to the description that at least a part of the upstream exhaust passage member is disposed at a position which is exposed to water splashed up by the rear wheel unit.

### [Definition of Upstream Exhaust Passage Member Water exposition detection unit]

In the present teaching, the upstream exhaust passage member water exposition detection unit may detect the water-exposition state of the upstream exhaust passage member due to rainfall. In the present teaching, the water-exposition state of the upstream exhaust passage member where the state is detected by the upstream exhaust passage member water exposition detection unit may be the presence or absence of water to which the upstream exhaust passage member is exposed. Further, in addition to the presence or absence of water to which the upstream exhaust passage member is exposed, the degree of water-exposition state of the upstream exhaust passage member is exposed to water may be included. The degree of water-exposition state may be based on the amount of water per unit time or may be based on the duration of the situation in which the upstream exhaust passage member is exposed to water.

### [Definition of catalyst deterioration determination unit]

In the present teaching, that the catalyst deterioration determination unit controls the determination of whether the catalyst is deteriorated based on the water-exposition state of the upstream exhaust passage member specifically includes the following cases. That is, it includes deciding whether to determine whether the catalyst is deteriorated based on the water-exposition state of the upstream exhaust passage member. Also, it includes determining whether the catalyst is deteriorated based on the water-exposition state of the upstream exhaust passage member.

In the present teaching, the catalyst deterioration determination unit may control the determination of whether the catalyst is deteriorated based on a water-exposition state of the upstream exhaust passage member due to rainfall where the state is detected by the upstream exhaust passage member water exposition detection unit.

### [Definition of Notification Unit]

There is no particular limitation on the method for making notification of the deterioration of the catalyst by the notification unit of the present teaching. For example, letters or figures may be displayed on the screen or notification may be made by sound or vibration. The person to be notified by the notification unit is not limited to the rider of the straddled vehicle. A person who maintains the straddled vehicle may be the subject person. In other words, the notification method may be such that the rider does not find the notification.

### [Definition of Catalyst Unit]

At least a part of the catalyst unit may be disposed at a position which is exposed to water splashed up by at least one of the front wheel unit or the rear wheel unit. The catalyst unit may be disposed at a position which is not exposed to water splashed up by the front wheel unit and the rear wheel unit.

### [Definition of Exhaust Device]

In the present teaching, the exhaust device may or may not include a discharge port for discharging the exhaust gas to the atmosphere. The exhaust device may include a muffler.

### [Definition of Front Wheel Unit and Rear Wheel Unit]

The front wheel unit in the present teaching may be composed of only one front wheel or may include a plurality of front wheels. The rear wheel unit in the present teaching may be composed of only one rear wheel or may include a plurality of rear wheels. In the present teaching, the front wheel includes a tire and a wheel main body that holds the tire. The same definition applies to the rear wheels.

### [Definition of Seat]

In the present teaching, a seat of a straddled vehicle is a part on which a rider (driver) sits, and does not include a part on which a rider's waist or back leans. In addition, in the present teaching, the seat of the straddled vehicle does not include the part on which the tandem rider (passenger) sits.

### [Definition of straddled vehicle]

The straddled vehicle of the present teaching is not limited to a motorcycle. The straddled vehicle of the present teaching indicates all types of vehicles on which a rider rides in a manner of straddling on a saddle. The straddled vehicle of the present teaching includes motorcycles, tricycles, four-wheeled buggies (ATVs: All Terrain Vehicles), personal water crafts, snowmobiles, and the like. Motorcycles included in straddled vehicles include scooters, engine-equipped bicycles, mopeds and the like.

### [Other Definitions of Terms]

A passage member in the present teaching indicates members such as wall members which encompass a path to form a path. The path indicates a space where an object passes. An exhaust passage member indicates walls or the like which form the exhaust path by surrounding the exhaust path. The exhaust path indicates a space through which exhaust gas passes.

In this specification, an end portion of a member indicates a portion constituted by an end of the member and its surroundings.

In this specification, when a radial direction of B is used to explain A, this radial direction of B is a radiation direction of B, which passes A. A radial direction of B is used to explain A when, for example, A is along the radial direction of B or A is pressed in the radial direction of B.

In this specification, unless otherwise specified, an inclination angle of a linear line A with respect to a linear line B indicates a smaller one of the angles formed by the linear line A and the linear line B. This applies not only to the linear lines but also to directions.

In this specification, a direction along an A direction is not limited to the direction in parallel to the A direction. The direction along the A direction includes a direction which intersects with the A direction at an angle which falls within the range from -45 degrees to 45 degrees. In the present teaching, a linear line along the A direction is not limited to a linear line in parallel to the A direction. The linear line along the A direction includes a linear line which intersects with the A direction at an angle which falls within the range from -45 degrees to 45 degrees. The direction A does not indicate any specific direction. The direction A may be the horizontal direction or the front-rear direction.

In this specification, an expression "members A and B are lined up in an X direction" indicates the following state. When members A and B are viewed in any direction orthogonal to the X direction, members A and B are both provided on a linear line which is along the X direction.

In this specification, an expression "members A and B are lined up in an X direction when viewed in a Y direction" indicates the following state. When members A and B are viewed in the Y direction, members A and B are both provided on a linear line which is along the X direction. When members A and B are viewed in a direction different from the Y direction, members A and B may not be lined up in the X direction.

In these two definitions, members A and B may be in contact with each other. Members A and B may not be in contact with each other. A member C may be provided between members A and B.

In this specification, an expression "a member A is provided forward of a member B" indicates the following state. Member A is provided in front of a plane which passes the front-most end of member B and is orthogonal to the front-rear direction. In this connection, members A and B may or may not be lined up in the front-rear direction. This applies to expressions "a member A is provided rearward of a member B", "a member A is provided above or below a member B", and "a member A is provided rightward of or leftward of a member B".

In this specification, an expression "a member A is in front of a member B" is limited to cases where members A and B are lined up in the front-rear direction. When the front surface of member B is not orthogonal to the front-rear direction, the front-most end of a part of member B, which faces member A, may be positioned forward of the rear-most end of a part of member A, which faces member B. In other words, member A may not be forward of member B. This applies to expressions "a member A is provided behind a member B", "a member A is provided directly above or below a member B", and "a member A is provided to the right of or to the left of a member B".

In this specification, an expression "a member A is in front of a member B when viewed in an X direction different from the front-rear direction" is limited to cases where the members A and B are lined up in the front-rear direction when viewed in the X direction. When the front surface of member B is not orthogonal to the front-rear direction when viewed in the X direction, the front-most end of a part of member B, which faces member A, may be positioned forward of the rear-most end of a part of member A, which faces member B, when viewed in the X direction. In other words, member A may not be forward of member B when viewed in the X direction. When members A and B are viewed in a Y direction different from the X direction, members A and B may not be lined up in the X direction. This applies to expressions "a member A is provided behind a member B when viewed in the X direction", "a member A is provided directly above or below a member B when viewed in the X direction", and "a member A is provided to the right of or to the left of a member B when viewed in the X direction".

In the present teaching, terms "including", "comprising", "having", and derivatives thereof are used to encompass not only listed items and equivalents thereof but also additional items.

In the present teaching, the terms "mounted", "connected", "coupled", and "supported" are used in a broad sense. To be more specific, the terms encompass not only directly mounting, connection, coupling, and supporting but also indirectly mounting, connection, coupling, and supporting. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art of the technical field to which the present teaching belongs.

Terms defined in typical dictionaries indicate meanings used in related technologies and in the context of the present disclosure. The terms are not interpreted ideally or excessively formally.

In this specification, the term "preferable" is non-exclusive. The term "preferable" means "preferable but not limited to". In this specification, an arrangement which is "preferable" exerts at least the above-described effects of the arrangement <1> above. In this specification, the term "may" is non-exclusive. The term "may" indicate "may but not must". In this specification, an arrangement which is explained by using the term "may" exerts at least the above-described effects of the arrangement <1> above.

Unless otherwise specified in this specification, all terms (technical and scientific terms) used in this specification indicate meanings typically understood by a person with ordinary skill in the art of the technical field to which the present teaching belongs.

In the present teaching, preferred arrangements of the different aspects described above may be variously combined. Before an embodiment of the present teaching is detailed, it is informed that the present teaching is not limited to the configurations and layout of elements described below and/or shown in drawings. The present teaching may be implemented as an embodiment other than the below-described embodiment. The present teaching may be implemented as an embodiment other than the below-described embodiment. Furthermore, the present teaching may be implemented by suitably combining below-described modifications.

### [Brief Description of Drawings]

[FIG. 1] FIG. 1 is a right side view of a motorcycle according to an embodiment of the present teaching.
[FIG. 2] FIG. 2 is a right side view of the motorcycle according to Specific Example 1 of the embodiment of the present teaching.
[FIG. 3] FIG. 3 is a cross-sectional view taken along line II-II of FIG. 2.
[FIG. 4] FIG. 4 is a right side view of a part of an engine unit.
[FIG. 5] FIG. 5 is a front view of a part of the engine unit.
[FIG. 6] FIG. 6 is a schematic diagram showing a configuration of a part of the engine unit.
[FIG. 7] FIG. 7 is a schematic diagram showing a configuration of a water cooler of the engine unit.
[FIG. 8] FIG. 8 is a cross-sectional view of a muffler portion.
[FIG. 9] FIG. 9 is a control block diagram of the engine unit.
[FIG. 10] FIG. 10 is a graph showing a relation among feedback correction amount, an output voltage of an upstream oxygen sensor, and an output voltage of a downstream oxygen sensor.
[FIG. 11] FIG. 11 is a flowchart showing a procedure for detecting a water-exposition state of the upstream exhaust passage member of the Specific Example 1 of the embodiment of the present teaching.
[FIG. 12] FIG. 12 is a flowchart showing a procedure for determining whether a catalyst is deteriorated.
[FIG. 13] FIG. 13 is a graph showing the relationship between the distance from a combustion chamber exhaust port and the temperature of an exhaust gas.
[FIG. 14] FIG. 14 is a right side view of a part of an engine unit according to a Specific Example 2 of the embodiment of the present teaching.
[FIG. 15] FIG. 15 is a flowchart showing a procedure for detecting a water-exposition state of the upstream exhaust passage member of the Specific Example 2 of the embodiment of the present teaching.
[FIG. 16] FIG. 16 is a control block diagram of an engine unit according to a Specific Example 3 of the embodiment of the present teaching.
[FIG. 17] FIG. 17 is a graph showing a relation between the temperature and the impedance of a detection element of an oxygen sensor.
[FIG. 18] FIG. 18 is a flowchart showing a procedure for detecting a water-exposition state of the upstream exhaust passage member of the Specific Example 3 of the embodiment of the present teaching.
[FIG. 19] FIG. 19 is a right side view of a part of an engine unit according to another Specific Example of the embodiment of the present teaching.
[FIG. 20] FIG. 20 is a right side view of a motorcycle of another Specific Example of the embodiment of the present teaching.

### [Description of Embodiments]

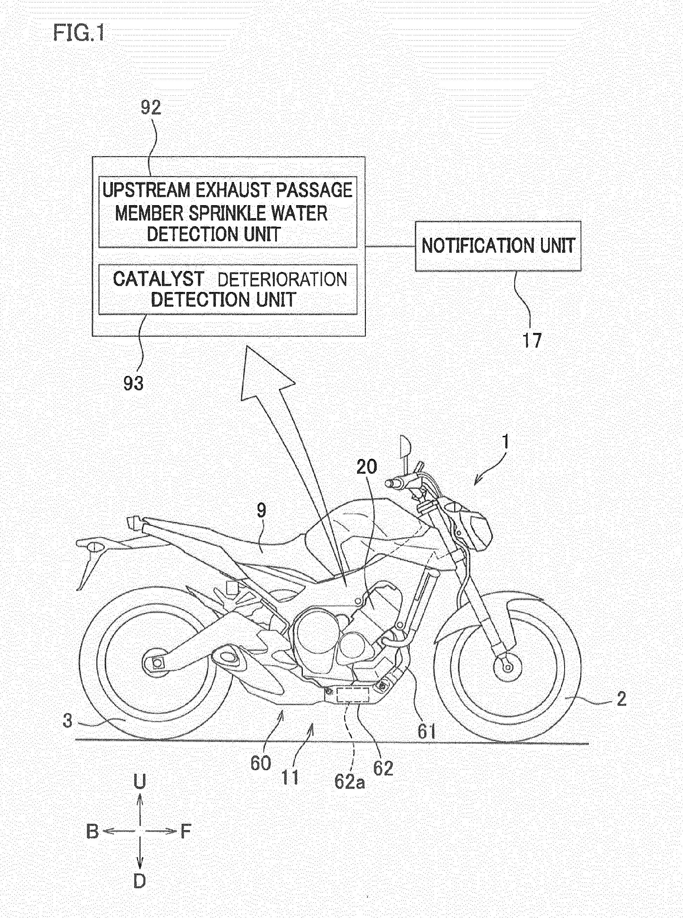

The following will describe an embodiment of the present teaching with reference to FIG. 1. The present embodiment is an example of applying the present teaching to a motorcycle.

As shown in FIG. 1, a motorcycle 1 includes a front wheel unit 2, a rear wheel unit 3, a seat 9, an engine unit 11, and a notification unit 17. Hereinafter, a front-rear direction indicates a vehicle front-rear direction for the rider seated on the seat 9 of the motorcycle 1. A left-right direction indicates a vehicle left-right direction (vehicle width direction) for the rider seated on the later-described seat 9. An up-down direction indicates an up-down direction of the motorcycle 1. To be more specific, this up-down direction is an up-down direction when the motorcycle 1 vertically stands up on a horizontal road surface. In each figure, arrows F, B, U, D, L, and R indicate forward, rearward, upward, downward, leftward, and rightward, respectively.

The front wheel unit 2 includes one front wheel. The rear wheel unit 3 is disposed rearward of the front wheel unit 2. The rear wheel unit 3 includes one rear wheel. At least a part of the engine unit 11 is disposed between the front wheel unit 2 and the rear wheel unit 3 when viewed in the left or right direction. The engine unit 11 includes an engine main body 20, an exhaust device 60, an upstream exhaust passage member water exposition detection unit 92, and a catalyst deterioration determination unit 93. The exhaust device 60 is connected to the engine main body 20. The exhaust device 60 includes a catalyst unit 62 and an upstream exhaust passage member 61. The catalyst unit 62 has a catalyst 62a for purifying exhaust gas discharged from the engine main body 20. The upstream exhaust passage member 61 connects the engine main body 20 and the catalyst unit 62. At least a part of the engine main body 20 is disposed behind the front wheel unit 2. At least a part of the engine main body 20 is disposed in front of the rear wheel unit 3. That is, at least a part of the engine main body 20 is disposed between the front wheel unit 2 and the rear wheel unit 3 when viewed in the left or right direction.

The catalyst deterioration determination unit 93 determines whether the catalyst 62a is deteriorated when the catalyst 62a is in the active state. For example, it is determined whether the catalyst 62a exerts a predetermined level of purification performance when the engine main body 20 is operating under the operating conditions under which the catalyst 62a is activated. When the catalyst 62a does not exert a predetermined level of purification performance, it is determined that the catalyst 62a deteriorates. The notification unit 17 is electrically connected to the engine unit 11. The notification unit 17 makes notification when the catalyst deterioration determination unit 93 determines that the catalyst 62a has deteriorated. Accordingly, it is possible to prompt a rider or the like to replace the deteriorated catalyst 62a. By replacing the catalyst 62a, the initial performance of the motorcycle 1 with respect to exhaust gas purification can be maintained. Therefore, the catalyst 62a can be downsized while maintaining the initial performance for exhaust gas purification of the motorcycle 1. By downsizing the catalyst 62a, the degree of freedom of layout of the exhaust device 60 can be increased. Therefore, while maintaining the initial performance of the motorcycle 1 with respect to exhaust gas purification, it is possible to secure the degree of freedom of the layout of the exhaust device 60 and to suppress the increase in the size of the motorcycle 1.

At least a part of the upstream exhaust passage member 61 is disposed at a position which is exposed to water splashed up by at least one of the front wheel unit 2 or the rear wheel unit 3. When the upstream exhaust passage member 61 is exposed to water at least one of the front wheel unit 2 or the rear wheel unit 3 splashes, the temperature of the exhaust gas flowing into the catalyst 62a decreases. As the temperature of the exhaust gas flowing into the catalyst 62a decreases, the temperature of the catalyst 62a decreases. If the temperature of the catalyst 62a is too low, the catalyst 62a cannot exert its purification performance. Therefore, even if the catalyst 62a is not actually deteriorated, there is a possibility that it is determined that the catalyst 62a has deteriorated. By providing the catalyst deterioration determination unit 93, the catalyst 62a can be downsized as described above. Therefore, as compared with the case where the catalyst 62a is large, the decreased range of the temperature of the catalyst 62a is large with respect to the decreased range of the temperature of the exhaust gas flowing into the catalyst 62a. Due to this, by providing the catalyst deterioration determination unit 93, erroneous determination of whether the catalyst 62a is deteriorated may occur more easily.

When the layout of the exhaust device 60 of the motorcycle 1 differs, the likeliness that the upstream exhaust passage member 61 is exposed to water differs. Therefore, if the layout of the exhaust device 60 differs, even if the traveling conditions are the same, the degree of water-exposition state of the upstream exhaust passage member 61 differs. Specifically, for example, when the length of the upstream exhaust passage member 61 differs, the degree of water-exposition state of the upstream exhaust passage member 61 differs. As described above, because the degree of freedom of the layout of the exhaust device 60 is high, the degree of water-exposition state of the upstream exhaust passage member 61 significantly differs. In the motorcycle 1 in which the degree of water-exposition state of the upstream exhaust passage member 61 differs, the likeliness of the erroneous determination of whether the catalyst 62a is deteriorated differs. In general, it is difficult to secure the accuracy of the determination if the likeliness of the erroneous determination differs.

The upstream exhaust passage member water exposition detection unit 92 detects the water-exposition state of the upstream exhaust passage member 61 due to water splashed up by at least one of the front wheel unit 2 or the rear wheel unit 3. In other words, the upstream exhaust passage member water exposition detection unit 92 detects the state regarding water to which the upstream exhaust passage member is exposed 61, which is a problem specific to a straddled vehicle including a motorcycle. Based on the water-exposition state of the upstream exhaust passage member 61 due to water splashed up by at least one of the front wheel unit 2 or the rear wheel unit 3 where the state is detected by the upstream exhaust passage member water exposition detection unit 92, the catalyst deterioration determination unit 93 controls the determination of whether the catalyst 62a is deteriorated. Specifically, for example, when it is detected that the upstream exhaust passage member 61 is exposed to water, the catalyst deterioration determination unit 93 may decide not to determine whether the catalyst 62a is deteriorated. Further, for example, the catalyst deterioration determination unit 93 may change the criterion for determining whether the catalyst 62a is deteriorated based on the detected water-exposition state of the upstream exhaust passage member 61. Then, the catalyst deterioration determination unit 93 may determine whether the catalyst 62a is deteriorated based on the changed criterion.

In this manner, the catalyst deterioration determination unit 93 controls the determination of whether the catalyst 62a is deteriorated based on the water-exposition state of the upstream exhaust passage member 61 due to water splashed up by at least one of the front wheel unit 2 or the rear wheel unit 3. Therefore, erroneous determination of whether the catalyst 62a is deteriorated can be suppressed. In other words, it is possible to suppress reduction in the accuracy with which the deterioration of the catalyst 62a is determined due to water to which the upstream exhaust passage member is exposed 61, which is a particular problem of the straddled vehicle. Therefore, it is not necessary to equalize the likeliness that the upstream exhaust passage member 61 is exposed to water in order to improve the accuracy with which the deterioration of the catalyst 62a is determined. In other words, it is not necessary to restrict the layout of the exhaust device 60 in order to improve the accuracy with which the deterioration of the catalyst 62a is determined. Specifically, for example, there is no restriction such as making the upstream exhaust passage members 61 be the same in length. Therefore, it is possible to further enhance the degree of freedom of the layout of the exhaust device 60 while securing the accuracy with which the deterioration of the catalyst 62a is determined.

Further, at least a part of the upstream exhaust passage member 61 is disposed at a position which is exposed to water splashed up by at least one of the front wheel unit 2 or the rear wheel unit 3. That is, the upstream exhaust passage member 61 is not required to be disposed so as to prevent the upstream exhaust passage member 61 from being exposed to water splashed up by the front wheel unit 2 and the rear wheel unit 3. Therefore, the degree of freedom of the layout of the exhaust device 60 of the motorcycle 1 can be further enhanced.

In addition, the upstream exhaust passage member 61 of the motorcycle 1 is disposed at a position exposed to water splashed up by at least one of the front wheel unit 2 or the rear wheel unit 3. Therefore, the difference in temperature of the exhaust gas flowing into the catalyst 62a is large between the case where the upstream exhaust passage member 61 is exposed to water splashed up by at least one of the front wheel unit 2 or the rear wheel unit 3 and the case where not exposed to water. Due to this, it is easy to determine whether the upstream exhaust passage member 61 has been exposed to water splashed up by at least one of the front wheel unit 2 or the rear wheel unit 3. Therefore, it is possible to improve the accuracy with which the deterioration of the catalyst 62a is determined according to the water-exposition state of the upstream exhaust passage member 61 of the motorcycle 1. Further, by improving the accuracy with which the deterioration of the catalyst 62a is determined, the catalyst 62a can be further downsized. As a result, it is possible to further suppress the increase in size of the motorcycle 1.

As described above, whether the catalyst 62a is deteriorated is determined by utilizing the temperature decrease of the exhaust gas due to water to which the upstream exhaust passage member is exposed 61, which is a particular problem of the straddled vehicle including the motorcycle. Then, when deterioration of the catalyst 62a is detected, notification is made to prompt replacement of the catalyst 62a, so that the initial performance of the catalyst 62a can be maintained for a long period. Therefore, even if the upstream exhaust passage member 61 is exposed to water, which is a problem specific to the straddled vehicle, the initial performance of the catalyst 62a mounted on the motorcycle 1 can be maintained for a long period.

### <Specific Example 1 of Embodiment>

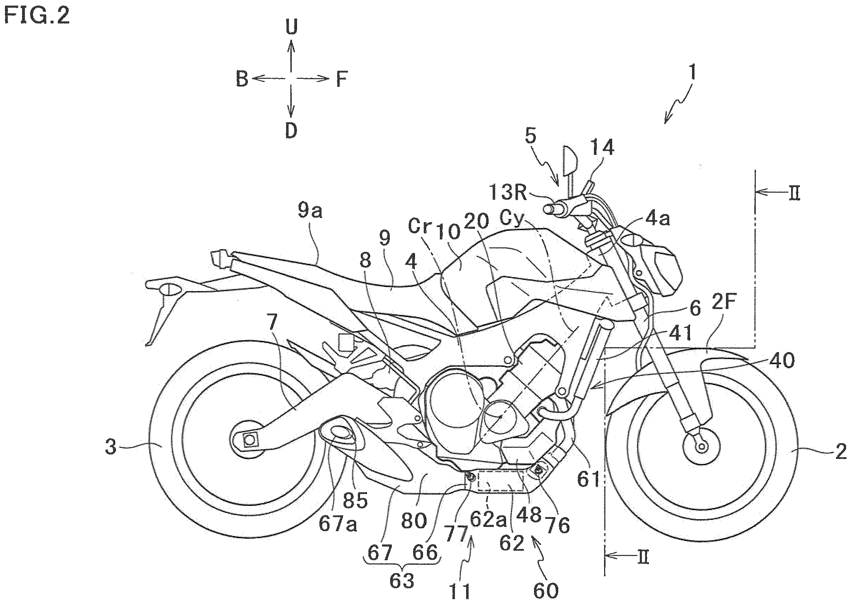

Next, Specific Example 1 of the above-described embodiment of the present teaching will be described with reference to FIGs. 2 to 13. In the descriptions below, members identical with those in the above-described embodiment of the present teaching are not explained again. Basically, Specific Example 1 of the embodiment of the present teaching encompasses all the embodiments of the present teaching described above. Specific Example 1 is an example in which the straddled vehicle of the present teaching is applied to a sports motorcycle.

### [Overall Structure of Motorcycle]

As shown in FIG. 2, the motorcycle 1 includes the front wheel unit 2, the rear wheel unit 3, and a vehicle body frame 4. The vehicle body frame 4 includes a head pipe 4a at a front portion thereof. A steering shaft (not illustrated) is rotatably inserted through the head pipe 4a. The upper end portion of the steering shaft is connected to a handle unit 5. The upper end portions of a pair of front forks 6 are fixed to the handle unit 5. The lower end portions of the pair of front forks 6 support the front wheel unit 2. The front forks 6 are configured to absorb impact in the up-down direction. The front wheel unit 2 is composed of one front wheel. The upper part of the front wheel unit 2 is covered with a fender 2F. The fender 2F is not included in the front wheel unit 2.

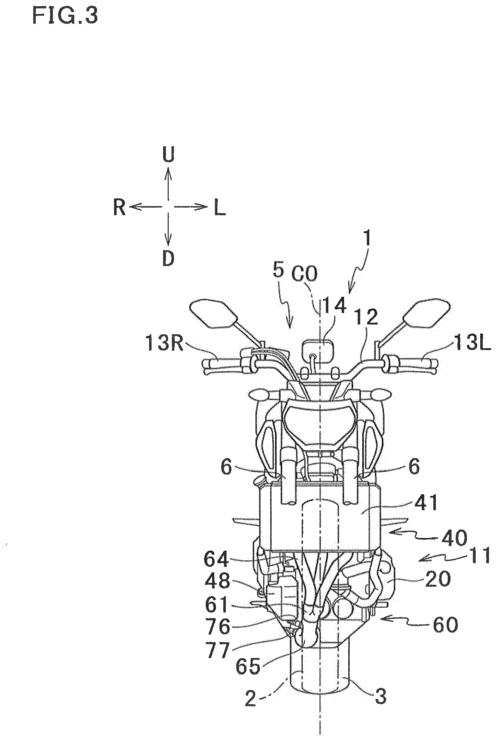

As shown in FIG. 3, the handle unit 5 includes one handlebar 12. Grips 13L and 13R are provided at the left end portion and the right end portion of the handlebar 12, respectively. The right grip 13R is an accelerator grip for adjusting the output of the engine. A display device 14 is attached to the handlebar 12. Although not shown, the display device 14 includes a screen on which the vehicle speed, the engine rotation speed, and the like are displayed. The display device 14 includes a warning lamp. Various switches are provided on the handlebar 12.

As shown in FIG. 2, a pair of swing arms 7 is swingably supported by the vehicle body frame 4. The rear end portions of the pair of swing arms 7 support the rear wheel unit 3. The rear wheel unit 3 is composed of one rear wheel. One end portion of a rear suspension 8 is attached to a position rearward of the swing center of each swing arm 7. The other end portion of the rear suspension 8 is attached to the vehicle body frame 4. The rear suspension 8 is configured to absorb impact in the up-down direction.

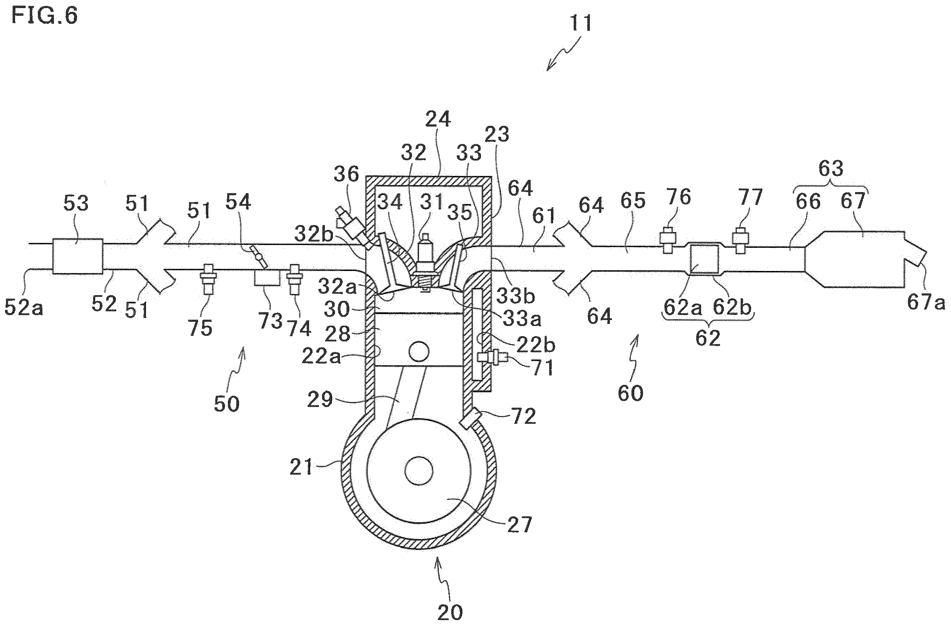

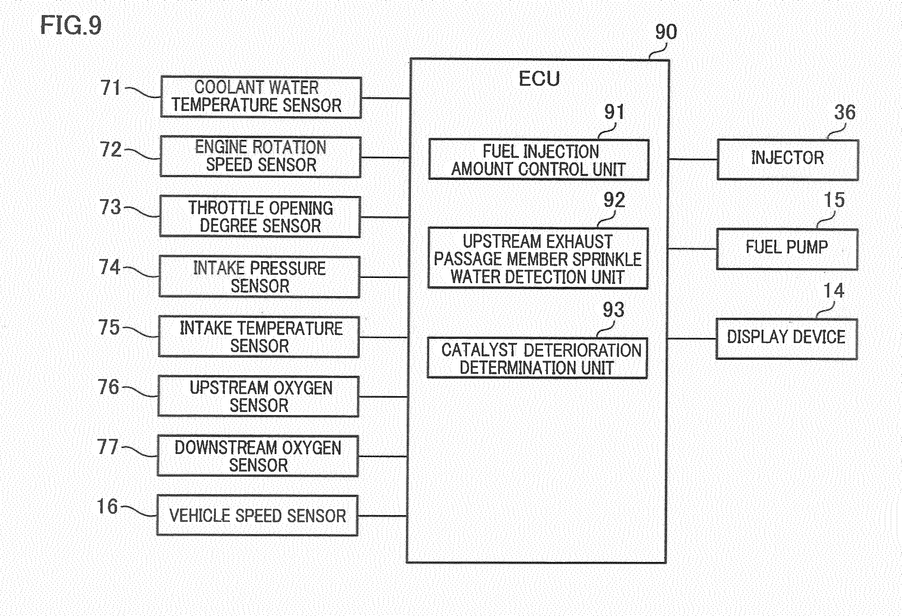

The vehicle body frame 4 supports the seat 9 and a fuel tank 10. The fuel tank 10 is in front of the seat 9. The vehicle body frame 4 supports the engine unit 11. The engine unit 11 may be directly connected to the vehicle body frame 4 or indirectly connected thereto. At least a part of the engine unit 11 is directly below the fuel tank 10. An upper end 9a of the seat 9 is above the engine unit 11. At least a part of the engine unit 11 is disposed behind the front wheel unit 2 and in front of the rear wheel unit 3 when viewed in the left or right direction. When viewed in the left or right direction, at least a part of the engine unit 11 is between the front wheel unit 2 and the rear wheel unit 3. As shown in FIG. 3, the width of the engine unit 11 in the left-right direction is greater than the left-right direction width of the front wheel unit 2. The width of the engine unit 11 in the left-right direction is larger than the width in the left-right direction of the rear wheel unit 3. Here, the width in the left-right direction is the maximum length in the left-right direction. The vehicle body frame 4 supports a battery (not illustrated). The battery supplies electric power to electronic devices such as an ECU 90 (see FIG. 9) controlling the engine unit 11 and sensors. The motorcycle 1 includes various sensors such as a vehicle speed sensor 16 (see FIG. 6) that detects the vehicle speed of the motorcycle 1.

### [Configuration of Engine Unit]

As shown in FIG. 2, the engine unit 11 includes an engine main body 20, a water cooler 40, and an exhaust device 60. Further, as shown in FIG. 6, the engine unit 11 includes an intake device 50. The engine main body 20 is connected to the water cooler 40, the intake device 50, and the exhaust device 60. The engine unit 11 is a three-cylinder engine having three cylinders. The engine unit 11 is a four-stroke type engine. The four-stroke type engine is an engine that repeats an intake process, a compression process, a combustion process (expansion stroke), and an exhaust process. The combustion process in the three-cylinder engine is performed at different timings in the respective three cylinders. In FIG. 6, only one of the three cylinders of the engine main body 20 is illustrated, and the remaining two cylinders are omitted.

The engine unit 11 is a water-cooled engine. The engine main body 20 is configured to be cooled with coolant water. Coolant water corresponds to the coolant medium in the present teaching. Instead of the coolant water, a coolant medium other than water may be used. High-temperature coolant water that absorbs the heat of the engine main body 20 is supplied to the water cooler 40 from the engine main body 20. The water cooler 40 reduces the temperature of the coolant water supplied from the engine main body 20 and returns it to the engine main body 20.

### [Configuration of Water Cooler]

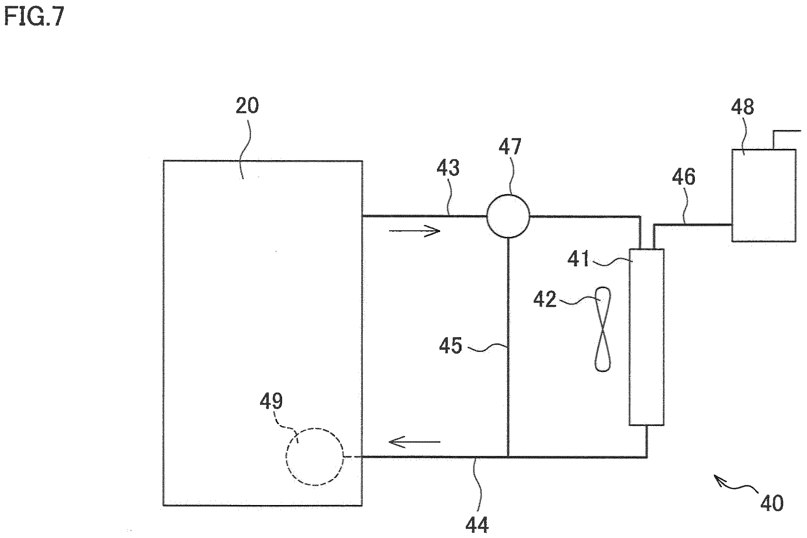

As shown in FIG. 7, the water cooler 40 includes a radiator 41, a radiator fan 42, pipes 43 to 46, a thermostat 47, and a reserve tank 48. The pipe 43 connects the engine main body 20 and the radiator 41. Coolant water discharged from the engine main body 20 flows through the pipe 43. The pipe 44 connects the engine main body 20 and the radiator 41. Coolant water supplied to the engine main body 20 flows through the pipe 44. A water pump 49 for circulating coolant water is provided in the engine main body 20 or the pipe 44. The radiator 41 radiates heat of the coolant water to the atmosphere. The radiator 41 is connected to the reserve tank 48 via the pipe 46. The thermostat 47 is provided in the midway of the pipe 43. One end of the bypass pipe 45 is connected to the thermostat 47. The other end of the bypass pipe 45 is connected to the midway of the pipe 44. When the temperature of the coolant water flowing into the thermostat 47 is equal to or higher than a predetermined temperature, the thermostat 47 causes the pipe 43 to communicate. In this case, the coolant water discharged from the engine main body 20 flows into the radiator 41 via the pipe 43. When the temperature of the coolant water flowing into the thermostat 47 is lower than the predetermined temperature, the thermostat 47 causes the pipe 43 and the bypass pipe 45 to communicate with each other. In this case, the coolant water discharged from the engine main body 20 returns to the engine main body 20 without passing through the radiator 41.

As shown in FIGs. 2 and 3, at least a part of the radiator 41 is disposed in front of the upper part of the engine main body 20. When viewed in the left or right direction, the radiator 41 is disposed behind the front wheel unit 2 and in front of the rear wheel unit 3. The radiator 41 is disposed between the front wheel unit 2 and the rear wheel unit 3 when viewed in the left or right direction. The radiator fan 42 is disposed between the engine main body 20 and the radiator 41. The reserve tank 48 is disposed in front of the engine main body 20. The reserve tank 48 is disposed in front of the right part of the engine main body 20. The position of the reserve tank 48 may be in front of the left part or the right and left central part of the engine main body 20.

### [Configuration of Engine Main Body]

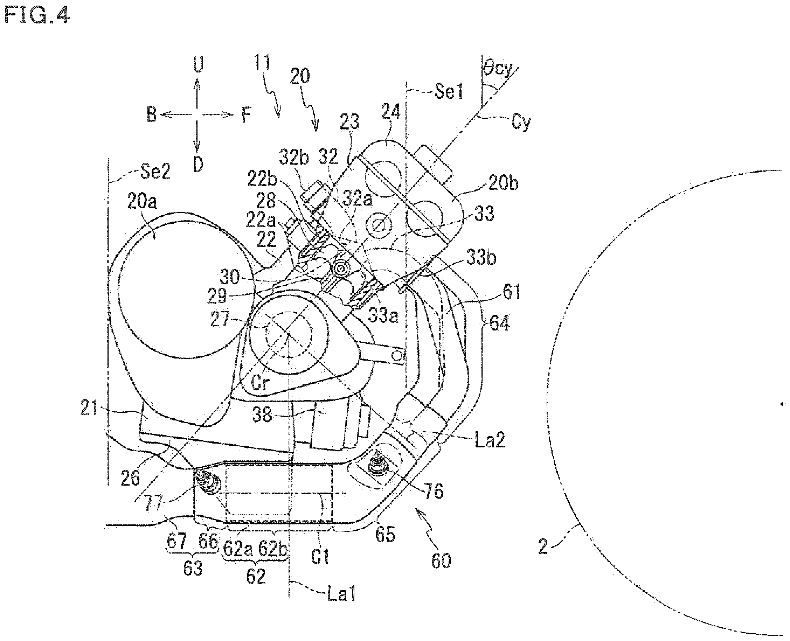

As shown in FIG. 2, when viewed in the left or right direction, at least a part of the engine main body 20 is disposed between the front wheel unit 2 and the rear wheel unit 3. More specifically, when viewed in the left or right direction, the entire engine main body 20 is disposed between the front wheel unit 2 and the rear wheel unit 3. As shown in FIG. 4, the engine main body 20 includes a crankcase member 20a and a cylinder portion 20b. The crankcase member 20a is provided at a lower portion of the engine main body 20. The cylinder portion 20b is provided at an upper portion of the engine main body 20. The cylinder portion 20b is connected to the upper end portion of the crankcase member 20a.

The crankcase member 20a includes a crankcase 21 and an oil pan 26. The crankcase 21 and the oil pan 26 may be integrally molded. The crankcase member 20a includes a crankshaft 27 accommodated in the crankcase 21. Although not shown, the crankcase member 20a includes a gearbox, a clutch, a starter motor, and a generator. These are also accommodated in the crankcase 21. A center axis Cr of the crank shaft 27 is referred to as a crankshaft axis Cr. The crankshaft axis Cr is along the left-right direction. More specifically, the crankshaft axis Cr is parallel to the left-right direction.

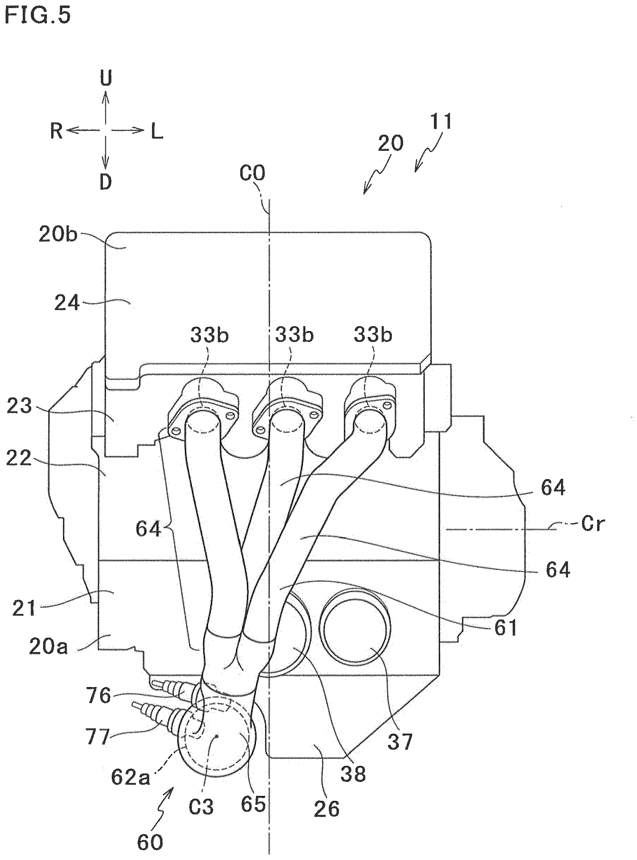

The oil pan 26 is connected to the lower end of the crankcase 21. As shown in FIG. 5, the right part of the oil pan 26 is recessed with respect to the left part of the oil pan 26. In other words, the lower end of the right part of the oil pan 26 is above the lower end of the left part of the oil pan 26. A part of the exhaust device 60 is disposed inside the recess of the oil pan 26. Lubrication oil is stored in the oil pan 26. The lubrication oil lubricates the engine main body 20. The crankcase member 20a includes an oil pump (not illustrated) for sucking up the lubrication oil stored in the oil pan 26.

As shown in FIG. 5, an oil filter 37 and an oil cooler 38 are provided at the front portion of the crankcase member 20a. As shown in FIG. 4, the oil cooler 38 protrudes forward from the front surface of the crankcase 21. As in the oil cooler 38, the oil filter 37 also protrudes forward from the front face of the crankcase 21. The oil filter 37 incorporates a filter body (not illustrated). The filter body removes foreign matter contained in the lubrication oil. The oil filter 37 is detachably attached to the crankcase 21 so that the filter body can be replaced. The oil cooler 38 is a water-cooled oil cooler. The oil cooler 38 cools lubrication oil for lubricating the engine main body 20 with coolant water. This coolant water is coolant water circulating through the water cooler 40 and the engine main body 20.

As shown in FIG. 4, the cylinder portion 20b includes a cylinder body 22, a cylinder head 23, and a head cover 24. The cylinder body 22 is connected to the upper end portion of the crankcase 21. The cylinder head 23 is connected to the upper end portion of the cylinder body 22. The head cover 24 is connected to the upper end portion of the cylinder head 23. Note that any two or three of the cylinder body 22, the cylinder head 23, and the head cover 24 may be integrally molded. Further, the cylinder body 22 may be integrally molded with the crankcase 21.

As shown in FIGs. 4 and 6, the cylinder body 22 includes a cylinder hole 22a. The cylinder body 22 includes three cylinder holes 22a. The three cylinder holes 22a are adjacent to each other along the left-right direction. A piston 28 is slidably housed inside each cylinder hole 22a. The three pistons 28 are connected to one crankshaft 27 via three connecting rods 29. A cooling passage 22b through which coolant water flows is provided around the three cylinder holes 22a. The cooling passage 22b is provided in the cylinder body 22 and the cylinder head 23.

A central axial line Cy of the cylinder hole 22a is referred to as a cylinder axial line Cy. The three cylinder axial lines Cy are parallel to each other. When viewed in the left or right direction, the three cylinder axial lines Cy coincide with each other. As shown in FIG. 4, the cylinder axial line Cy does not intersect the crankshaft axis Cr. The cylinder axial line Cy may intersect with the crankshaft axis Cr. The cylinder axial line Cy is along the up-down direction. When viewed in the left or right direction, the cylinder axial line Cy is inclined in the front or rear direction with respect to the up-down direction. More specifically, the cylinder axial line Cy is inclined so that the cylinder portion 20b is inclined forward. That is, the first point on the cylinder axial line Cy is forward of the second point on the cylinder axial line Cy below the first point. The inclination angle of the cylinder axial line Cy with respect to the up-down direction is defined as the inclination angle θcy when viewed in the left or right direction. The inclination angle θcy is not limited to the angle shown in FIG. 4. The inclination angle θcy is 0 degrees or greater than 0 degrees and 45 degrees or less than 45 degrees.

As shown in FIGs. 4 and 6, the cylinder portion 20b includes a combustion chamber 30. The cylinder portion 20b includes three combustion chambers 30. The three combustion chambers 30 are adjacent to each other along the left-right direction. Each combustion chamber 30 is formed by the lower surface of the cylinder head 23, the cylinder hole 22a, and the upper surface of the piston 28. The combustion chamber 30 may include a main combustion chamber and an auxiliary combustion chamber connected to the main combustion chamber.

As shown in FIG. 4, a linear line passing through the crankshaft axis Cr and parallel to the up-down direction when viewed in the left or right direction is defined as a straight line La1. When viewed in the left or right direction, the three combustion chambers 30 are disposed forward of the linear line La1. That is, when viewed in the left or right direction, the three combustion chambers 30 are disposed forward of the crankshaft axis Cr.

As shown in FIG. 6, the tip portion of an ignition plug 31 is disposed in the combustion chamber 30. The tip portion of the ignition plug 31 generates a spark discharge. By this spark discharge, the air-fuel mixture in the combustion chamber 30 is ignited. In this specification, the air-fuel mixture is a gas in which air and fuel are mixed. The ignition plug 31 is connected to an ignition coil (not illustrated). The ignition coil stores electric power for causing spark discharge of the ignition plug 31.

The cylinder head 23 is provided with an internal intake passage member 32 and an internal exhaust passage member 33. In this specification, the passage member means a structure forming a path. A path means a space through which a gas or the like passes. The internal intake passage member 32 is connected to the combustion chamber 30. The internal intake passage member 32 is provided for each combustion chamber 30. The internal exhaust passage member 33 is connected to the combustion chamber 30. The internal exhaust passage member 33 is provided for each combustion chamber 30. The internal intake passage member 32 is provided to introduce air into the combustion chamber 30. The internal exhaust passage member 33 is provided for discharging the exhaust gas generated in the combustion chamber 30 from the combustion chamber 30.

A combustion chamber intake port 32a and a combustion chamber exhaust port 33a are provided on a surface of the cylinder head 23 which forms the combustion chamber 30. The combustion chamber intake port 32a is a downstream end of the internal intake passage member 32. The combustion chamber exhaust port 33a is an upstream end of the internal exhaust passage member 33. An intake port 32b and an exhaust port 33b are provided on the outer surface of the cylinder head 23. The intake port 32b is an upstream end of the internal intake passage member 32. The exhaust port 33b is a downstream end of the internal exhaust passage member 33. The number of combustion chamber intake ports 32a provided for one combustion chamber 30 may be one, or two or more. The number of intake ports 32b is only one for one combustion chamber 30. For example, when two combustion chamber intake ports 32a are provided for one combustion chamber 30, the internal intake passage member 32 is bifurcated. The number of the combustion chamber exhaust ports 33a provided for one combustion chamber 30 may be one, or two or more. The number of exhaust ports 33b is only one for one combustion chamber 30. As shown in FIG. 4, the intake port 32b is provided on the front face of the cylinder head 23. The exhaust port 33b is provided on the front surface of the cylinder head 23. As shown in FIG. 5, the three exhaust ports 33b are adjacent to each other along the left-right direction.

As shown in FIG. 6, an intake valve 34 for opening and closing the combustion chamber intake port 32a is disposed in the internal intake passage member 32 One intake valve 34 is provided for each combustion chamber intake port 32a. An exhaust valve 35 for opening and closing the combustion chamber exhaust port 33a is disposed in the internal exhaust passage member 33. One exhaust valve 35 is provided for each combustion chamber exhaust port 33a. The intake valve 34 and the exhaust valve 35 are driven by a valve driving device (not illustrated) housed in the cylinder head 23. The valve driving device operates in conjunction with the crankshaft 27. The valve operating mechanism may have a variable valve timing device. A known variable valve timing device is applied. The variable valve timing device is configured to change opening and closing timing of the intake valve and/or the exhaust valve.

The engine main body 20 includes an injector 36. The injector 36 is a fuel supplier that supplies fuel to the combustion chamber 30. One injector 36 is provided for each combustion chamber 30. The injector 36 is disposed so as to inject fuel in the internal intake passage member 32. The injector 36 is connected to the fuel tank 10. A fuel pump 15 (see FIG. 6) is disposed inside the fuel tank 10. The fuel pump 15 supplies fuel in the fuel tank 10 toward the injector 36 with a pressure. It should be noted that the injector 36 may be disposed so as to inject fuel in the combustion chamber 30. In addition, the injector 36 may be disposed so as to inject fuel in a branched intake passage member 51 of the intake device 50, which will be described later. The engine main body 20 may have a carburetor as a fuel supplier instead of the injector 36. The carburetor utilizes the negative pressure in the combustion chamber 30 to supply fuel into the combustion chamber 30.

The engine main body 20 includes a coolant water temperature sensor 71 and an engine rotation speed sensor 72. The coolant water temperature sensor 71 detects the temperature of the coolant water in the cooling passage 22b. The coolant water temperature sensor 71 corresponds to the coolant medium temperature sensor of the present teaching. The engine rotation speed sensor 72 detects the rotation speed of the crankshaft 27, that is, the engine rotation speed.

### [Configuration of Intake Device]

The intake device 50 includes one intake passage member 52 and three branched intake passage members 51. The intake passage member 52 includes an atmosphere suction port 52a exposed to the atmosphere. The atmosphere suction port 52a is an upstream end of the intake passage member 52. The intake passage member 52 is provided with an air cleaner 53 for purifying air. The downstream end of the intake passage member 52 is connected to the upstream end of the three branched intake passage members 51. The downstream ends of the three branched intake passage members 51 are respectively connected to three intake ports 32b provided on the rear surface of the cylinder head 23. The atmosphere suction port 52a sucks air from the atmosphere. The air flowing into the intake passage member 52 from the atmosphere suction port 52a passes through the three branched intake passage members 51 and is supplied to the engine main body 20.

A throttle valve 54 is disposed in the branched intake passage member 51. One throttle valve 54 is provided for each combustion chamber 30. The opening degree of the throttle valve 54 is changed by the rider operating the accelerator grip 13R.

A throttle opening degree sensor (throttle position sensor) 73, an intake pressure sensor 74, and an intake temperature sensor 75 are provided on the branched intake passage member 51. A throttle opening degree sensor 73 outputs a signal indicating the position of the throttle valve 54, that is, a signal indicating the throttle opening degree. Hereinafter, the throttle opening degree refers to the position (opening degree) of the throttle valve 54. The intake pressure sensor 74 detects the internal pressure of the branched intake passage member 51. The intake temperature sensor 75 detects the temperature of the air in the branched intake passage member 51.

### [Configuration of Exhaust Device]

As shown in FIGs. 4 and 6, the exhaust device 60 includes an upstream exhaust passage member 61, a catalyst unit 62, and a downstream exhaust passage member 63. In the following description, upstream side and downstream side in the exhaust gas flow direction in the exhaust device 60 and the internal exhaust passage member 33 are simply referred to as upstream side and downstream side, respectively. The upstream exhaust passage member 61 includes three independent exhaust passage members 64 and an upstream collective exhaust passage member 65. One independent exhaust passage member 64 is provided for each combustion chamber 30. The downstream exhaust passage member 63 includes a downstream collective exhaust passage member 66 and a muffler portion 67.

The upstream exhaust passage member 61 connects the engine main body 20 and the catalyst unit 62. The upstream ends of the three independent exhaust passage members 64 are respectively connected to the three exhaust ports 33b provided on the front face of the cylinder head 23. The downstream ends of the three independent exhaust passage members 64 are connected to the upstream end of the upstream collective exhaust passage member 65. The upstream collective exhaust passage member 65 gathers (merges) the exhaust gases discharged from the three independent exhaust passage members 64. The downstream end of the upstream collective exhaust passage member 65 is connected to the upstream end of the catalyst unit 62. The catalyst unit 62 includes a catalyst 62a for purifying exhaust gas. The downstream end of the catalyst unit 62 is connected to the upstream end of the downstream collective exhaust passage member 66. The downstream end of the downstream collective exhaust passage member 66 is connected to the upstream end of the muffler portion 67. The muffler portion 67 includes an atmosphere discharge port 67a exposed to the atmosphere. The exhaust gas discharged from the three exhaust ports 33b of the engine main body 20 passes through the upstream exhaust passage member 61 and flows into the catalyst unit 62. The exhaust gas is purified by passing through the catalyst 62a, and then discharged to the atmosphere from the atmosphere discharge port 67a through the downstream exhaust passage member 63.

The upstream exhaust passage member 61 is made of metal. The upstream exhaust passage member 61 is a single pipe. The length of the independent exhaust passage member 64 may be longer or shorter than the length shown in FIG. 4 or the like. The length of the upstream collective exhaust passage member 65 may also be longer or shorter than the length shown in FIG. 4 or the like.

The catalyst unit 62 includes a cylinder member 62b and a catalyst 62a. The cylinder member 62b is connected to the downstream end of the upstream collective exhaust passage member 65 and the upstream end of the downstream collective exhaust passage member 66. The cylinder member 62b is made of metal. The length of the catalyst unit 62 in the exhaust gas flow direction is the same as the length of the catalyst 62a in the exhaust gas flow direction. The center of the upstream end of the catalyst 62a and the center of the upstream end of the catalyst unit 62 are at the same position. The catalyst 62a has a cylindrical shape. The outer peripheral surface of the catalyst 62a is partially fixed to the cylinder member 62b. Between a part of the outer peripheral surface of the catalyst 62a and a part of the inner peripheral surface of the cylinder member 62b, there is a gap in which only gas exists.

The catalyst 62a has a porous structure. The porous structure means a structure having a plurality of pores penetrating in the exhaust gas flow direction. The catalyst 62a is a three-way catalyst. In the three-way catalyst, three substances of hydrocarbon (HC), carbon monoxide (CO) and nitrogen oxide (NOx) in the exhaust gas is removed by oxidizing or reducing them. The three-way catalyst is one kind of oxidation-reduction catalyst. Note that the catalyst 62a may be a catalyst for removing any one or two of hydrocarbon, carbon monoxide, and nitrogen oxide. The catalyst 62a is not necessarily an oxidation-reduction catalyst. The catalyst may be an oxidation catalyst that removes harmful substances only by oxidation. The catalyst may be a reduction catalyst that removes harmful substances only by reduction. The catalyst 62a has a base material and a catalyst material attached to the surface of the base material. The catalyst material has a carrier and a noble metal. The carrier has a function of causing the noble metal to adhere to the base material. The noble metal has a function of purifying exhaust gas. As noble metal, for example, platinum, palladium, rhodium and the like, which remove hydrocarbons, carbon monoxide, and nitrogen oxides, respectively, can be mentioned. When the temperature of the catalyst 62a is lower than a predetermined temperature, the catalyst 62a is in an inactive state and does not exert purification performance. When the temperature of the catalyst 62a is equal to or higher than the predetermined activation temperature, the catalyst 62a becomes active and exerts purification performance. The catalyst 62a may be a metal base catalyst or a ceramic base catalyst. The metal base catalyst is a catalyst made of metal as base material. The ceramic base material catalyst is a catalyst made of ceramic as base material. The base material of the metal base catalyst is formed, for example, by alternately superimposing a metal corrugated plate and a metal flat plate and winding them. The base material of the ceramic base material catalyst has, for example, a honeycomb structure.

It should be noted that the catalyst 62a may have a configuration in which a plurality of catalyst pieces are disposed close to each other. Each catalyst piece has a base material and a catalyst material. Disposing a plurality of catalyst pieces in close proximity means the following state. This is a state in which a clearance between the catalyst pieces is shorter than the length of each catalyst piece in the exhaust gas flow direction. The compositions of the base materials of the plurality of catalyst pieces may be the same or different. The noble metals of the catalyst materials of the plurality of catalyst pieces may be the same or different.

As shown in FIG. 4, the central axial line of the catalyst unit 62 is defined as a central axial line C1. When viewed in the left or right direction, the central axial line C1 is along the front-rear direction. In more detail, when viewed in the left or right direction, the central axial line C1 is substantially parallel to the front-rear direction. As shown in FIG. 5, when viewed in the front or rear direction, the central axial line C1 is substantially parallel to the front-rear direction. Therefore, the central axial line C1 of the catalyst unit 62 is along the front-rear direction. That is, the flow direction of the exhaust gas flowing through the catalyst unit 62 is a direction along the front-rear direction. The central axial line C1 of the catalyst unit 62 may be along the left-right direction. Further, the central axial line C1 of the catalyst unit 62 may be along the up-down direction.

As shown in FIG. 4, a plane passing through the foremost end of the crankcase member 20a and orthogonal to the front-rear direction is defined as a plane Se1. A plane passing through the rearmost end of the crankcase member 20a and orthogonal to the front-rear direction is defined as a plane Se2. The catalyst unit 62 is disposed between the plane Se1 and the plane Se2. At least a part of the catalyst unit 62 may be disposed in front of the plane Se1. Further, at least a part of the catalyst unit 62 may be disposed behind the plane Se2. Although not shown, at least a part of the catalyst unit 62 overlaps with the crankcase member 20a when viewed in the up or down direction. Therefore, at least a part of the catalyst unit 62 is disposed directly below the crankcase member 20a. That is, at least a part of the catalyst unit 62 is disposed directly below the engine main body 20. At least a part of the catalyst unit 62 may be disposed in front of the engine main body 20.

When viewed in the left or right direction, a part of the catalyst unit 62 is disposed in front of the linear line La1. That is, the part of the catalyst unit 62 is disposed forward of the crankshaft axis Cr. A part of the catalyst unit 62 is disposed behind the linear line La1. That is, the part of the catalyst unit 62 is disposed rearward of the crankshaft axis Cr. The entire catalyst unit 62 may be disposed forward or rearward of the crankshaft axis Cr. It is preferable that at least a part of the catalyst unit 62 is disposed forward of the crankshaft axis Cr. A linear line that is orthogonal to the cylinder axial line Cy and passes through the crankshaft axis Cr when viewed in the left or right direction is defined as a linear line La2. When viewed in the left or right direction, the entire catalyst unit 62 is disposed behind the linear line La2. At least a part of the catalyst unit 62 may be disposed in front of the linear line La2 when viewed in the left or right direction.

As shown in FIG. 5, the catalyst unit 62 is disposed on the right part of the motorcycle 1. As shown in FIGs. 3 and 5, a plane passing through the center in the left-right direction of the front wheel unit 2 and the rear wheel unit 3 is defined as C0. The center in the left-right direction of the front wheel unit 2 and the rear wheel unit 3 is also the center in the left-right direction of the motorcycle 1. The center of the upstream end and the center of the downstream end of the catalyst unit 62 are to the right of the plane C0. That is, the center of the upstream end and the center of the downstream end of the catalyst unit 62 are to the right of the center of the motorcycle 1 in the left-right direction. The whole catalyst unit 62 is to the right of the plane C0. Note that the catalyst unit 62 may be disposed over both sides of the plane C0.

It should be noted that the catalyst unit 62 may be disposed on the left part of the motorcycle 1. That is, the center of the upstream end and the center of the downstream end of the catalyst unit 62 may be to the left of the plane C0. The center of the upstream end and the center of the downstream end of the catalyst unit 62 may oppose each other over the plane C0 in the left-right direction. At least one of the center of the upstream end or the center of the downstream end of the catalyst unit 62 may be disposed on the plane C0.

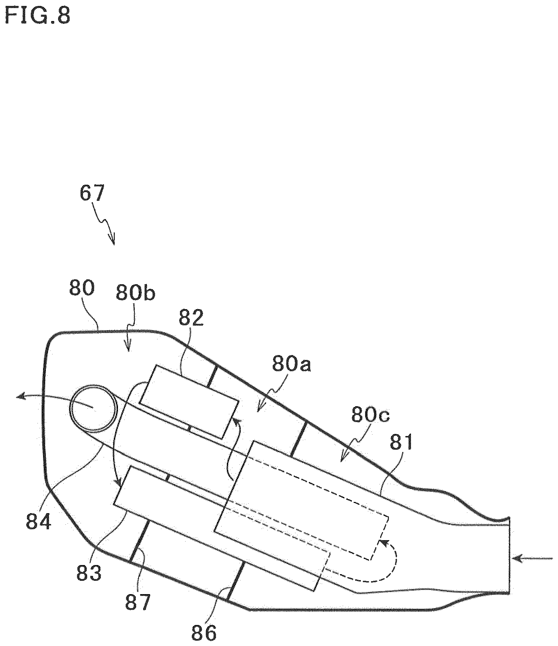

The muffler portion 67 is a device for reducing noise due to exhaust gas. The muffler portion 67 includes an external cylinder 80 and a tail pipe 85. As shown in FIG. 8, the muffler portion 67 includes four pipes 81 to 84 accommodated in the external cylinder 80. The inside of the external cylinder 80 is partitioned into three expansion chambers 80a, 80b, and 80c by two separators 86 and 87. The upstream end portion of a first pipe 81 may be integrally formed with the downstream end portion of the downstream collective exhaust passage member 66. The first pipe 81 causes the downstream collective exhaust passage member 66 and a central first expansion chamber 80a of the three expansion chambers to communicate with each other. A second pipe 82 causes the first expansion chamber 80a and a second expansion chamber 80b rearward of the first expansion chamber 80a to communicate with each other. A third pipe 83 causes the second expansion chamber 80b and a third expansion chamber 80c forward of the first expansion chamber 80a to communicate with each other. A fourth pipe 84 causes the third expansion chamber 80c and the tail pipe (see FIG. 2) to communicate with each other. The fourth pipe 84 is bent in the second expansion chamber 80b. The tail pipe 85 penetrates the right wall of the second expansion chamber 80b. In the second expansion chamber 80b, the tail pipe 85 is connected to the fourth pipe 84. The opening at the downstream end of the tail pipe 85 is the atmosphere discharge port 67a. The exhaust gas discharged from the downstream collective exhaust passage member 66 passes through the first pipe 81, the first expansion chamber 80a, the second pipe 82, the second expansion chamber 80b, the third pipe 83, the third expansion chamber 80c, the fourth pipe 84, and the tail pipe 85 in this order. Then, the exhaust gas is discharged to the atmosphere through the atmosphere discharge port 67a. A sound absorbing material such as glass wool may be disposed between the inner surface of the external cylinder 80 and the outer surface of the four pipes 81 to 84, or may not be disposed. The internal structure of the muffler portion 67 is not limited to the structure shown in FIG. 8.

As shown in FIGs. 4 and 5, the engine unit 11 includes an upstream oxygen sensor 76 and a downstream oxygen sensor 77. The upstream exhaust passage member 61 is provided on the upstream oxygen sensor 76. That is, the upstream oxygen sensor 76 is provided upstream of the catalyst unit 62. More specifically, the upstream collective exhaust passage member 65 is provided on the upstream oxygen sensor 76. The upstream oxygen sensor 76 detects the oxygen concentration in the exhaust gas in the upstream exhaust passage member 61. The downstream exhaust passage member 63 is provided on the downstream oxygen sensor 77. That is, the downstream oxygen sensor 77 is provided downstream of the catalyst unit 62. More specifically, the downstream collective exhaust passage member 66 is provided on the downstream oxygen sensor 77. Note that the downstream oxygen sensor 77 may be provided on the muffler portion 67.

The upstream oxygen sensor 76 detects whether the oxygen concentration in the exhaust gas brought into contact with the upstream oxygen sensor 76 is lower or higher than a predetermined reference concentration. The upstream oxygen sensor 76 outputs a signal of the voltage higher than a predetermined reference voltage when the oxygen concentration in the exhaust gas is lower than the reference concentration. The reference concentration is set to the oxygen concentration of the exhaust gas when the exhaust gas generated by combustion of the air-fuel mixture with stoichiometric air-fuel ratio is in the upstream exhaust passage member 61. The air-fuel ratio is a dimensionless number obtained by dividing the air mass by the fuel mass of the air-fuel mixture. In the present specification, when the fuel is excessive in the air-fuel ratio of the air-fuel mixture compared with the stoichiometric air-fuel ratio, it is said that the air-fuel mixture is in a rich state. When the air is excessive in the air-fuel ratio of the air-fuel mixture compared with the stoichiometric air-fuel ratio, it is said that the air-fuel mixture is in a lean state. When the air-fuel mixture is rich, the upstream oxygen sensor 76 outputs a signal of the voltage higher than the reference voltage. When the air-fuel mixture is lean, the upstream oxygen sensor 76 outputs a voltage signal lower than the reference voltage. That is, the upstream oxygen sensor 76 detects whether the air-fuel mixture is in a rich state or a lean state. In this specification, a voltage higher than the reference voltage is referred to as a rich side, and a voltage lower than the reference voltage is referred to as a lean side.

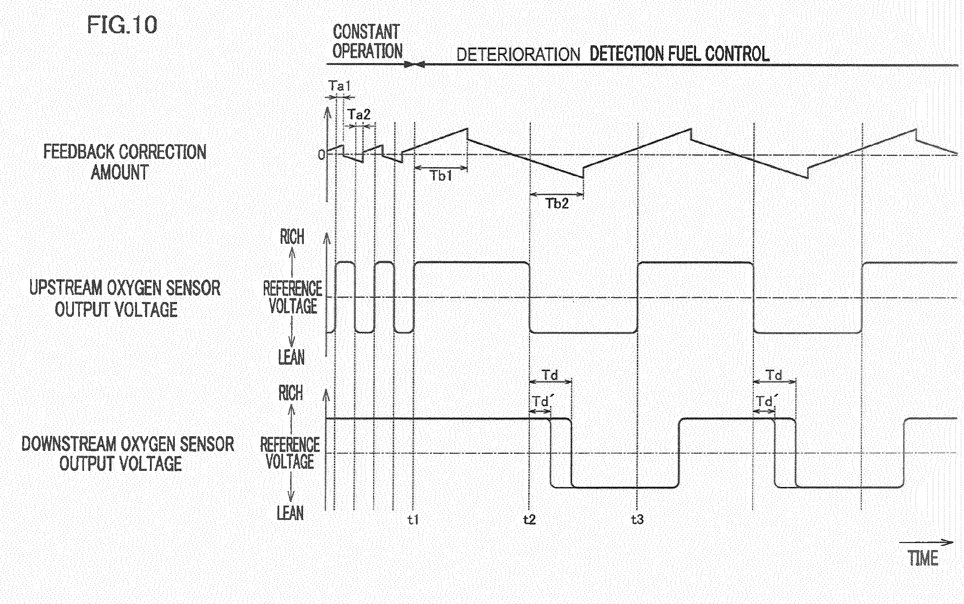

FIG. 10 shows a graph showing an example of the output voltage of the upstream oxygen sensor 76 during steady operation. The steady operation is an operation state in which the throttle opening degree and the engine rotation speed are constant. As shown in FIG. 10, during the steady operation, the output voltage of the upstream oxygen sensor 76 alternately changes to the rich side and the lean side. That is, during steady operation, the engine main body 20 is controlled so that the air-fuel mixture alternately changes between the rich state and the lean state.

It should be noted that the upstream oxygen sensor 76 may be a linear A/F sensor. The linear A/F sensor outputs a linear detection signal according to the oxygen concentration of the exhaust gas. In other words, the linear A/F sensor continuously detects a change in the oxygen concentration in the exhaust gas. The upstream oxygen sensor 76 includes a detection element made of a solid electrolyte body mainly composed of zirconia. The upstream oxygen sensor 76 can detect the oxygen concentration when the detection element is heated to a high temperature to be activated. This also applies to the case where the upstream oxygen sensor 76 is a linear A/F sensor. The upstream oxygen sensor 76 may incorporate a heater. Upon cold start of the engine unit 11, the detection element of the upstream oxygen sensor 76 is heated by the heater. Thus, it is possible to shorten the time for the detection element of the upstream oxygen sensor 76 to activate from the inactive state. The cold start of the engine unit 11 is to start the engine unit 11 in a state in which the temperature of the engine main body 20 is at or lower than the outside air temperature.

A sensor having the same configuration as that of the upstream oxygen sensor 76 is used as the downstream oxygen sensor 77. That is, the downstream oxygen sensor 77 detects whether the oxygen concentration in the exhaust gas brought into contact with the downstream oxygen sensor 77 is lower or higher than the above-mentioned reference concentration. It should be noted that the downstream oxygen sensor 77 may be a linear A/F sensor. The downstream oxygen sensor 77 may incorporate a heater.

FIG. 10 shows a graph showing an example of the output voltage of the downstream oxygen sensor 77 during steady operation. The graph of FIG. 10 is an example of the case where the catalyst 62a is not deteriorated. As described above, during the steady operation, the output voltage of the upstream oxygen sensor 76 alternately changes to the rich side and the lean side. Therefore, exhaust gas with high oxygen concentration and exhaust gas with low oxygen concentration flow alternately into the catalyst 62a. The catalyst 62a consumes oxygen when purifying the exhaust gas. Therefore, when the catalyst 62a is not deteriorated, even if the oxygen concentration in the exhaust gas flowing into the catalyst 62a is higher than the reference concentration, the oxygen concentration of the exhaust gas after passing through the catalyst 62a is lower than the reference concentration. Due to this, as shown in FIG. 10, during the steady operation, the output voltage of the downstream oxygen sensor 77 is maintained on the rich side.

The engine unit 11 includes an ECU (Electronic Control Unit) 90 as a controller for controlling the operation of the engine unit 11. The ECU 90 is connected to various sensors such as the sensors 71 to 77, and 16 and the like. The ECU 90 is electrically connected to an injector 36, the fuel pump 15, the ignition coil (not illustrated), the starter motor (not illustrated), the display device 14 and the like. The ECU 90 controls the operation of the engine unit 11 based on signals from various sensors. For example, the ECU 90 controls the operation of the fuel pump 15 and the injector 36, thereby controlling the fuel injection amount injected from the injector 36. The ECU 90 controls the ignition timing by controlling the timing of energization of the ignition coil. Further, the ECU 90 controls energization to the starter motor. Thus, the ECU 90 controls the start of the engine unit 11. Further, the ECU 90 determines whether the catalyst 62a is deteriorated. When the ECU 90 determines that the catalyst 62a has deteriorated, a warning lamp (not illustrated) of the display device 14 that receives the signal from the ECU 90 lights up. The rider and the like is notified by the lighting. Thus, it is possible to prompt the rider to replace the catalyst 62a. The notification unit 17 (see FIG. 1) for notifying the rider of the deterioration of the catalyst 62a is not limited to the warning lamp. Characters and figures for prompting replacement may be displayed on the liquid crystal screen of the display device 14. In addition, it may be notified to the rider by a device that generates sound or vibration. In this specification, the fact that the catalyst 62a is deteriorated means that the purification performance of the catalyst 62a is lower than a predetermined level.

The ECU 90 may be constituted by a single device or a plurality of devices disposed at separate positions. The ECU 90 includes a CPU, a ROM, a RAM, and the like. The CPU executes information processing based on programs and various data stored in the ROM and the RAM. As a result, the ECU 90 implements the functions of a plurality of function processors. The ECU 90 includes a fuel injection amount control unit 91, an upstream exhaust passage member water exposition detection unit 92, and a catalyst deterioration determination unit 93 as a function processor.

The fuel injection amount control unit 91 controls the fuel injection amount injected from the injector 36. Hereinafter, a method of controlling the fuel injection amount by the fuel injection amount control unit 91 will be described. First, the fuel injection amount control unit 91 calculates the intake air amount based on signals of the engine rotation speed sensor 72, the intake pressure sensor 74, the throttle opening degree sensor 73, and the like. Then, the fuel injection amount control unit 91 determines the basic fuel injection amount in accordance with the calculated intake air amount. Next, the fuel injection amount control unit 91 calculates the feedback correction amount based on the signal of the upstream oxygen sensor 76. The procedure of calculating the feedback correction amount will be described with reference to the graph of FIG. 10.

The graph of FIG. 10 shows an example of the relationship between the output voltage of the upstream oxygen sensor 76 and the feedback correction amount during steady operation. As shown in FIG. 10, during steady operation, the fuel injection amount control unit 91 increases the feedback correction amount when the output voltage of the upstream oxygen sensor 76 is on the lean side. While the output voltage of the upstream oxygen sensor 76 is on the lean side, the fuel injection amount control unit 91 continues to increase the feedback correction amount. Then, the output voltage of the upstream oxygen sensor 76 changes from the lean side to the rich side. The fuel injection amount control unit 91 continues to increase the feedback correction amount until a predetermined delay time Ta1 elapses from the time of the change. When the delay time Ta1 elapses, the fuel injection amount control unit 91 decreases the feedback correction amount. While the output voltage of the upstream oxygen sensor 76 is on the rich side, the fuel injection amount control unit 91 continues to decrease the feedback correction amount. Then, the output voltage of the upstream oxygen sensor 76 changes from the rich side to the lean side. The fuel injection amount control unit 91 continues to decrease the feedback correction amount until a predetermined delay time Ta2 elapses from the time of the change. When the delay time Ta2 has elapsed, the fuel injection amount control unit 91 increases the feedback correction amount.

The delay time Ta1 may be the same as or different from the delay time Ta2.

The fuel injection amount control unit 91 calculates the correction amount based on the coolant water temperature, the vehicle speed, the outside temperature, and the like. The outside temperature may be a temperature detected from a signal of the intake temperature sensor 75. The outside temperature may be a temperature detected from a signal of an outside temperature sensor provided separately from the intake temperature sensor 75. The fuel injection amount control unit 91 corrects the basic fuel injection amount based on the feedback correction amount and other correction amounts. Thus, the fuel injection amount control unit 91 calculates the fuel injection amount.

The upstream exhaust passage member water exposition detection unit 92 detects the water-exposition state of the upstream exhaust passage member 61. There are the two following factors due which the upstream exhaust passage member 61 is exposed to water. The first factor is water splashed up by at least one of the front wheel unit 2 or the rear wheel unit 3 when the motorcycle 1 travels on the road surface where water is collected. In other words, the upstream exhaust passage member water exposition detection unit 92 detects the water-exposition state of the upstream exhaust passage member 61 due to water splashed up by at least one of the front wheel unit 2 or the rear wheel unit 3. The second factor is rainfall. When the upstream exhaust passage member 61 is exposed to water, the temperature of the exhaust gas in the upstream exhaust passage member 61 and the exhaust gas downstream of the upstream exhaust passage member 61 decreases. The upstream exhaust passage member 61 and the front wheel unit 2 face each other without the presence of other members between them. For this reason, the upstream exhaust passage member 61 is particularly likely to be exposed to water splashed up by the front wheel unit 2. Except in the case of heavy rain, the amount of water due to splashing is higher than the amount of water due to rain. Therefore, the temperature of the exhaust gas in the upstream exhaust passage member 61 is greatly influenced by the splashed water rather than water due to rainfall.

The upstream exhaust passage member water exposition detection unit 92 detects the water-exposition state of the upstream exhaust passage member 61 based on the signal of the coolant water temperature sensor 71. When the upstream exhaust passage member 61 is exposed to water, there is a high possibility that the radiator 41 is also exposed to water. When the radiator 41 is exposed to water, the temperature of the coolant water in the radiator 41 decreases. As a result, the temperature of the entire coolant water circulating through the engine main body 20 and the water cooler 40 decreases. That is, the temperature of the coolant water in the cooling passage 22b also decreases. If the temperature of the coolant water in the cooling passage 22b is low despite the engine main body 20 being in the warm-up state, there is a high possibility that the radiator 41 is exposed to water. Therefore, the upstream exhaust passage member water exposition detection unit 92 detects the water-exposition state of the radiator 41 based on the signal of the coolant water temperature sensor 71. As a result, the water-exposition state of the upstream exhaust passage member 61 is detected. The upstream exhaust passage member water exposition detection unit 92 detects the water-exposition state of the upstream exhaust passage member 61 when the engine main body 20 is operating under the predetermined warm-up condition. The warm-up state refers to a state in which the engine main body 20 is sufficiently warmed up. The warm-up condition is a condition for the engine main body 20 to be in a warm-up state. For example, the warm-up condition may include a condition for a signal from at least one of the engine rotation speed sensor 72, the throttle opening degree sensor 73, the intake pressure sensor 74, or the vehicle speed sensor 16. Also, the warm-up condition may include a condition that the elapsed time from the engine startup is longer than a predetermined time.

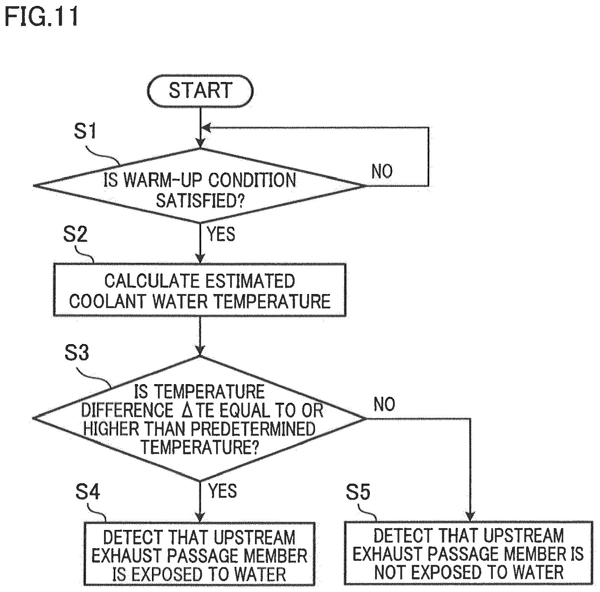

An example of a procedure for the upstream exhaust passage member water exposition detection unit 92 to detect the water-exposition state of the upstream exhaust passage member 61 will be described with reference to the flowchart of FIG. 11. First, the upstream exhaust passage member water exposition detection unit 92 determines whether the engine main body 20 satisfies the above-described warm-up condition (step S1). Then, when the warm-up condition is satisfied (step S1: YES), the upstream exhaust passage member water exposition detection unit 92 performs the following water exposition detection processing. First, the upstream exhaust passage member water exposition detection unit 92 calculates the estimated coolant water temperature (step S2). The estimated coolant water temperature is an estimated value of the temperature of the coolant water in the cooling passage 22b when the radiator 41 is not exposed to water. The upstream exhaust passage member water exposition detection unit 92 calculates the estimated coolant water temperature based on, for example, a signal of the engine rotation speed sensor 72 and a signal of either the throttle opening degree sensor 73 or the intake pressure sensor 74. Next, the upstream exhaust passage member water exposition detection unit 92 calculates a temperature difference ΔTe between the temperature of the coolant water detected based on the signal of the coolant water temperature sensor 71 and the estimated coolant water temperature. Then, the upstream exhaust passage member water exposition detection unit 92 determines whether the temperature difference ΔTe is equal to or higher than a predetermined temperature (step S3). The temperature difference ΔTe is a value obtained by subtracting the coolant water temperature detected by the coolant water temperature sensor 71 from the estimated coolant water temperature. When the temperature difference ΔTe is equal to or higher than the predetermined temperature (step S3: YES), the upstream exhaust passage member water exposition detection unit 92 determines that the upstream exhaust passage member 61 is exposed to water (step S4). When the temperature difference ΔTe is less than the predetermined temperature (step S3: NO), the upstream exhaust passage member water exposition detection unit 92 determines that the upstream exhaust passage member 61 is not exposed to water (step S5).

The upstream exhaust passage member water exposition detection unit 92 may detect the water-exposition state of the upstream exhaust passage member 61 based on the transition of at least one of the detected coolant water temperature or the estimated coolant water temperature in addition to the temperature difference ΔTe. This makes it possible to improve the accuracy of detection of the water-exposition state compared with the case where the water-exposition state is detected by only the temperature difference ΔTe. For example, the upstream exhaust passage member water exposition detection unit 92 may determine that the upstream exhaust passage member 61 is exposed to water when the temperature difference ΔTe is equal to or higher than the predetermined temperature continuously for a predetermined time.

In addition, the upstream exhaust passage member water exposition detection unit 92 may calculate the estimated coolant water temperature by using signals of sensors other than the engine rotation speed sensor 72, the throttle opening degree sensor 73, and the intake pressure sensor 74. For example, the upstream exhaust passage member water exposition detection unit 92 may correct the temperature estimated based on the engine rotation speed and one of the throttle opening degree or the intake pressure based on the vehicle speed, the intake temperature, or the outside temperature to calculate the estimated coolant water temperature. In addition, the upstream exhaust passage member water exposition detection unit 92 may detect the water-exposition state of the upstream exhaust passage member 61 by using a predetermined temperature stored in the ECU 90 instead of the estimated coolant water temperature.

The catalyst deterioration determination unit 93 determines whether the catalyst 62a is deteriorated. When the following three deterioration determination conditions are satisfied, the catalyst deterioration determination unit 93 starts determining whether the catalyst 62a is deteriorated. The first condition is that the engine main body 20 is in steady operation. The second condition is to satisfy the above-described warm-up condition. When the warm-up condition is satisfied, the temperature of the catalyst 62a is equal to or higher than the activation temperature. Therefore, when the catalyst 62a is not deteriorated, the catalyst 62a is in an activated state. Due to this, the catalyst deterioration determination unit 93 determines whether the catalyst 62a is deteriorated when the catalyst 62a exerts the purification performance in the activated state. The third condition is that the upstream exhaust passage member water exposition detection unit 92 detects that the upstream exhaust passage member 61 is not exposed to water. That is, the catalyst deterioration determination unit 93 controls the determination of whether the catalyst 62a is deteriorated based on the water-exposition state of the upstream exhaust passage member 61 where the state is detected by the upstream exhaust passage member water exposition detection unit 92. If the upstream exhaust passage member 61 is exposed to water, even when the engine main body 20 is in the warm-up state, the temperature of the catalyst 62a may be lower than the activation temperature. In this case, even if the catalyst 62a is not deteriorated, the catalyst 62a is in an inactive state and cannot exert its purification performance. Therefore, the catalyst deterioration determination unit 93 does not determine whether the catalyst 62a is deteriorated when the upstream exhaust passage member water exposition detection unit 92 detects that the upstream exhaust passage member 61 is exposed to water. The catalyst deterioration determination unit 93 determines whether the catalyst 62a is deteriorated when the upstream exhaust passage member water exposition detection unit 92 detects that the upstream exhaust passage member 61 is not exposed to water. Thus, erroneous determination that the catalyst 62a is deteriorated despite the fact that the catalyst 62a is not deteriorated can be suppressed.

When the above three deterioration determination conditions are satisfied, the catalyst deterioration determination unit 93 sends a signal to the fuel injection amount control unit 91. The signal is a signal for starting the deterioration detection fuel control. In the following description, the control of the fuel injection amount for detecting the deterioration of the catalyst 62a is referred to as deterioration detection fuel control. When the warm-up condition is not satisfied during the deterioration detection fuel control, the deterioration detection fuel control is canceled. For example, when the rider operates the accelerator grip, the deterioration detection fuel control is canceled. When the determination of whether the catalyst 62a is deteriorated is completed, the fuel injection amount control unit 91 resumes the control of the steady operation. The catalyst deterioration determination unit 93 determines whether the catalyst 62a is deteriorated only once from the engine start to the engine stop. However, the frequency with which the determination of the catalyst 62a is performed is not limited thereto. The frequency of performing the determination of the catalyst 62a may be higher or lower than once.

The catalyst deterioration determination unit 93 determines whether the catalyst 62a is deteriorated based on the signals of the upstream oxygen sensor 76 and the downstream oxygen sensor 77 during the deterioration detection fuel control. The graph of FIG. 10 shows an example of the relationship among the voltage signal of the upstream oxygen sensor 76, the voltage signal of the downstream oxygen sensor 77, and the feedback correction amount during the deterioration detection fuel control. The deterioration detection fuel control will be described with reference to FIG. 10. In the deterioration detection fuel control, the delay times Tb1 and Tb2 are used instead of the delay times Ta1 and Ta2 in the control of the steady operation. The delay time Tb2 is longer than the delay time Tb2. The difference between the delay time Tb1 and the delay time Ta1 may be the same as or different from the difference between the delay time Tb2 and the delay time Ta2. In the graph of FIG. 10, the deterioration detection fuel control is started from the timing t1. The timing t1 is the timing at which the output voltage of the upstream oxygen sensor 76 changes from the lean side to the rich side in the steady operation. The fuel injection amount control unit 91 continues to increase the feedback correction value until the delay time Tb1 elapses from the timing t1. When the delay time Tb1 has elapsed from the timing t1, the fuel injection amount control unit 91 decreases the feedback correction amount. The fuel injection amount control unit 91 continues to decrease the feedback correction amount while the output voltage of the upstream oxygen sensor 76 is on the rich side as in the steady operation. Thereafter, the output voltage of the upstream oxygen sensor 76 changes from the rich side to the lean side. This timing is timing t2. The fuel injection amount control unit 91 continues to decrease the feedback correction value until the delay time Tb2 elapses from the timing t2. When the delay time Tb2 has elapsed from the timing t2, the fuel injection amount control unit 91 increases the feedback correction amount. The fuel injection amount control unit 91 continues to increase the feedback correction amount while the output voltage of the upstream oxygen sensor 76 is on the lean side as in the steady operation. Thereafter, the output voltage of the upstream oxygen sensor 76 changes from the lean side to the rich side. This timing is timing t3. The control after the timing t3 is the same as the control after the above-mentioned timing t1. Assuming that one cycle is from the timing t1 to the timing t3, the deterioration detection fuel control is performed for a plurality of cycles.

The catalyst 62a consumes oxygen when purifying the exhaust gas. Therefore, as described above, during the steady operation, even when the output voltage of the upstream oxygen sensor 76 changes from the rich side to the lean side, the output voltage of the downstream oxygen sensor 77 is maintained on the rich side. In the deterioration detection fuel control, after the output voltage of the upstream oxygen sensor 76 changes from the rich side to the lean side, the feedback correction value is kept decreasing for a period longer than the delay time Ta2. As a result, the oxygen concentration of the exhaust gas that has passed through the catalyst 62a increases, and the output voltage of the downstream oxygen sensor 77 changes from the rich side to the lean side. The time from when the output voltage of the upstream oxygen sensor 76 changes from the rich side to the lean side until when the output voltage of the downstream oxygen sensor 77 changes from the rich side to the lean side is defined as the response delay time Td. In the graph of FIG. 10, the output voltage of the downstream oxygen sensor 77 in the deterioration detection fuel control when the catalyst 62a is deteriorated is indicated by a two-dot chain line. In the graph of FIG. 10, the response delay time Td when the catalyst 62a is deteriorated is indicated as the response delay time Td'. When the catalyst 62a deteriorates, the consumption amount of oxygen in the catalyst 62a decreases. Therefore, the response delay time Td' when the catalyst 62a is deteriorated is shorter than the response delay time Td when the catalyst 62a is not deteriorated.

When the response delay time Td is less than a predetermined time, the catalyst deterioration determination unit 93 determines that the catalyst 62a is deteriorated. When the response delay time Td is equal to or longer than the predetermined time, the catalyst deterioration determination unit 93 determines that the catalyst 62a is not deteriorated. The predetermined time may be a time previously stored in the ECU 90. It is preferable that the predetermined time be changed in accordance with the operation state of the engine main body 20. For example, the predetermined time is changed based on at least one of the engine rotation speed, the throttle opening degree, the intake pressure, the intake temperature, or the vehicle speed. It is preferable that the catalyst deterioration determination unit 93 determine whether the catalyst 62a is deteriorated by using the response delay time Td after performing the deterioration detection fuel control for predetermined cycles. The accuracy of the deterioration determination can be improved compared with the case where the response delay time Td of the first cycle is used. Further, the catalyst deterioration determination unit 93 may determine whether the catalyst 62a is deteriorated by using the plurality of response delay times Td. For example, when the average value of the response delay time Td is shorter than a predetermined time, the catalyst deterioration determination unit 93 may determine that the catalyst 62a is deteriorated.

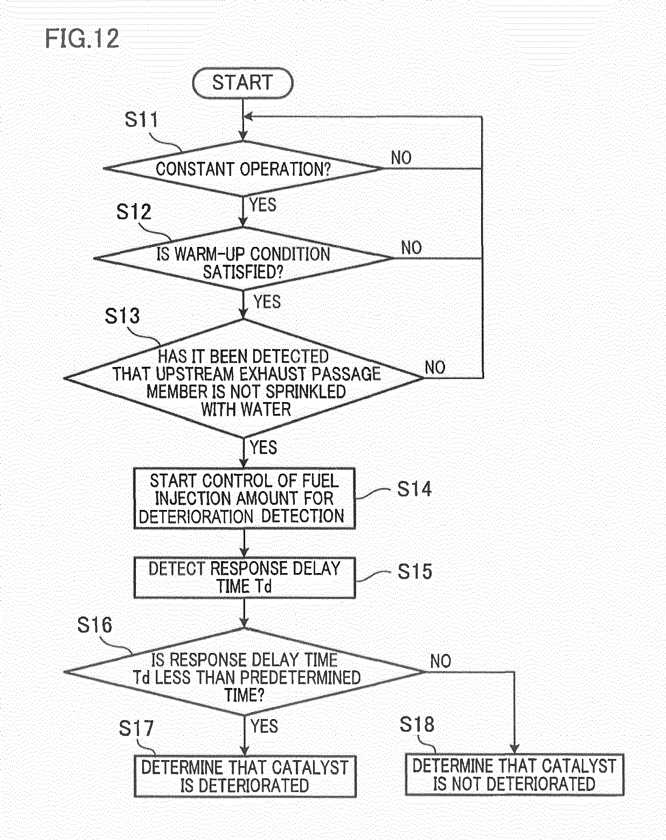

The flowchart of FIG. 12 shows the procedure for determining whether the catalyst 62a is deteriorated. The engine main body 20 is in steady operation (step S11: YES). The warm-up condition is satisfied (step S12: YES). The upstream exhaust passage member water exposition detection unit 92 has detected that the upstream exhaust passage member 61 is not exposed to water (step S13: YES). When these three conditions are satisfied, the fuel injection amount control unit 91 starts the deterioration detection fuel control (step S14). Thereafter, the catalyst deterioration determination unit 93 detects the response delay time Td (step S15). Then, when the response delay time Td is less than the predetermined time (step S16: YES), the catalyst deterioration determination unit 93 determines that the catalyst 62a is deteriorated (step S17). When the response delay time Td is equal to or longer than the predetermined time (step S16: NO), the catalyst deterioration determination unit 93 determines that the catalyst 62a is not deteriorated (step S18).

In the flowchart of FIG. 11, the upstream exhaust passage member water exposition detection unit 92 performs the water exposition detection processing only if the warm-up condition is satisfied. However, the upstream exhaust passage member water exposition detection unit 92 may perform the water exposition detection processing only when the warm-up condition is satisfied in the steady operation. In other words, the upstream exhaust passage member water exposition detection unit 92 may perform the water exposition detection processing only when the deterioration determination of the catalyst 62a is performed. Specifically, it is possible to detect the water-exposition state of the upstream exhaust passage member 61 based on the signal of the coolant water temperature sensor 71 detected after the deterioration detection fuel control is started. Further, it is also possible to detect the water-exposition state of the upstream exhaust passage member 61 based on the signal of the coolant water temperature sensor 71 detected before the deterioration detection fuel control is started.

The upstream exhaust passage member water exposition detection unit 92 may perform the water exposition detection processing irrespective of whether the warm-up condition is satisfied. In a case where the warm-up condition is not satisfied, the upstream exhaust passage member water exposition detection unit 92 sometimes determines that the upstream exhaust passage member 61 is exposed to water even though the upstream exhaust passage member 61 is not exposed to water. However, in the case where the warm-up condition is not satisfied, the catalyst deterioration determination unit 93 does not perform the deterioration determination of the catalyst 62a, so that erroneous determination of deterioration is not performed.

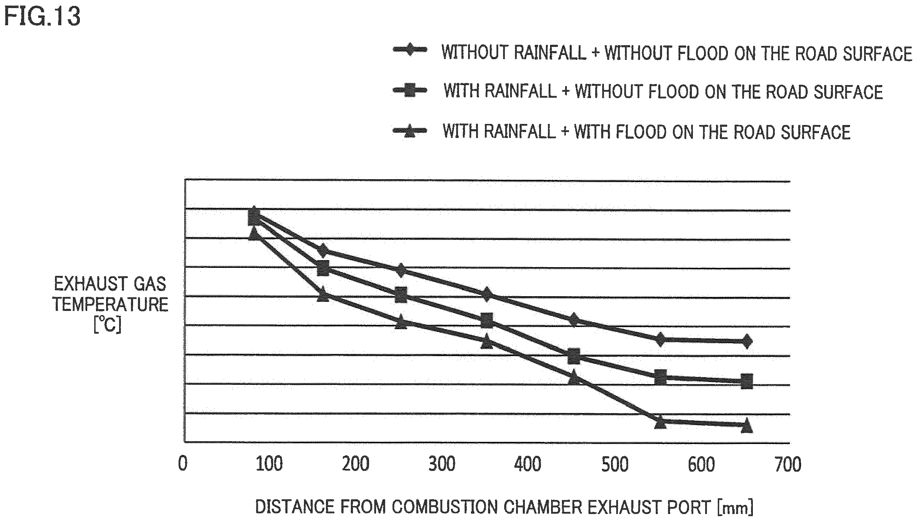

FIG. 13 is a graph showing the relationship between the distance from the exhaust port 33b and the temperature of the exhaust gas. This graph is the result of a test conducted by running a motorcycle in a test apparatus. This test apparatus is configured to reproduce rainfall and the flood of the road surface and perform running of the motorcycle. In each of the following three situations, tests were conducted. The first situation is that there is no rainfall or flood on the road surface. The second situation is that there is only rainfall. The third situation is that there are both rainfall and flood on the road surface. The water depth on the road surface in the situation when there is the flood on the road surface was set to 10 mm. The speed of the running of the motorcycle was set to 40 km/h. In the motorcycle used for the test, the catalyst unit 62 is not provided, and the catalyst is disposed in the muffler portion 67. The configuration other than the above is the same as that of the motorcycle 1 of Specific Example 1. As is apparent from FIG. 13, as the distance from the combustion chamber exhaust port 33a increases, the temperature of the exhaust gas decreases. In the situation where there is rainfall, the temperature of the exhaust gas is low in comparison with a situation where there is no rainfall or flood on the road surface. In a situation where there are both rainfall and flood on the road surface, the temperature of the exhaust gas is low compared with the situation where there is only rainfall.

In addition to the coolant water temperature sensor 71, the engine unit 11 may have a second coolant water temperature sensor for detecting the temperature of the coolant water. The second coolant water temperature sensor may be provided, for example, in the pipe 44 of the water cooler 40. The upstream exhaust passage member water exposition detection unit 92 may detect the water-exposition state of the upstream exhaust passage member 61 based on the signal of the second coolant water temperature sensor. When the radiator 41 is exposed to water, the temperature of the coolant water in the pipe 44 is greatly affected. Therefore, it is possible to improve the accuracy of detection of the water-exposition state.

Specific Example 1 of the embodiment of the present teaching has the following effects in addition to the effect obtained by the embodiment of the present teaching shown in FIG. 1.

The catalyst deterioration determination unit 93 does not determine whether the catalyst 62a is deteriorated when the upstream exhaust passage member water exposition detection unit 92 detects that the upstream exhaust passage member 61 is exposed to water. Therefore, it is possible to more reliably suppress erroneous determination that the catalyst 62a which is not actually deteriorated has deteriorated. In addition, the catalyst deterioration determination unit 93 determines whether the catalyst 62a is deteriorated when the upstream exhaust passage member water exposition detection unit 92 detects that the upstream exhaust passage member 61 is not exposed to water. Therefore, when the catalyst 62a is actually deteriorated, the deterioration of the catalyst 62a can be detected. Due to this, it is possible to further improve the accuracy with which the deterioration of the catalyst 62a is determined.

Further, the engine unit 11 includes a radiator 41. As in the engine main body 20, at least a part of the radiator 41 is disposed between the front wheel unit 2 and the rear wheel unit 3 when viewed in the left or right direction. Therefore, when the motorcycle 1 travels on the road surface where water has been accumulated, water splashed up by at least one of the front wheel unit 2 or the rear wheel unit 3 may be poured to the radiator 41. When the radiator 41 is exposed to water, the temperature of the coolant water in the radiator 41 decreases. When the temperature of the coolant water in the radiator 41 decreases, the temperature of the entire coolant water circulating through the radiator 41 and the engine main body 20 lowers. The engine unit 11 includes the coolant water temperature sensor 71. The coolant water temperature sensor 71 detects the temperature of the coolant water. When the temperature of the coolant water detected by the coolant water temperature sensor 71 is lower than the predetermined temperature, there is a high possibility that the radiator 41 is exposed to water. When the radiator 41 is exposed to water splashed up by at least one of the front wheel unit 2 or the rear wheel unit 3, there is a high possibility that the upstream exhaust passage member 61 is also exposed to water splashed up by the at least one of the front wheel unit 2 or the rear wheel unit 3. Accordingly, the upstream exhaust passage member water exposition detection unit 92 detects the water-exposition state of the upstream exhaust passage member 61 due to water splashed up by at least one of the front wheel unit 2 or the rear wheel unit 3 based on the signal of the coolant water temperature sensor 71. As described above, the radiator 41 is exposed to water splashed up by the front wheel unit 2 in the same extent as the upstream exhaust passage member 61, or more likely to be exposed to water than the upstream exhaust passage member 61. Therefore, it is possible to secure the accuracy of detection of the water-exposition state of the upstream exhaust passage member 61. As a result, it is possible to secure the accuracy with which the deterioration of the catalyst 62a is determined by the catalyst deterioration determination unit 93. Therefore, because the catalyst 62a can be downsized, it is possible to suppress the increase in size of a vehicle 1.

In addition, when cooling the engine main body with coolant water, a coolant water temperature sensor is generally provided. Therefore, it is possible to detect the water-exposition state of the upstream exhaust passage member 61 while suppressing an increase in the number of sensors. As a result, it is possible to further suppress the increase in size of the vehicle 1.

As described above, there is a gap in which only gas exists between the part of the outer peripheral surface of the catalyst 62a and the part of the inner peripheral surface of the cylinder member 62b. Therefore, the heat of the catalyst 62a is less likely to be transmitted to the cylinder member 62b, compared with the case where such a gap is not present. Therefore, even if the upstream exhaust passage member 61 or the cylinder member 62b is exposed to water, the temperature of the catalyst 62a is hardly lowered. In other words, the temperature of the catalyst 62a is not easily affected by water to which the upstream exhaust passage member is exposed 61. Therefore, the performance of purifying the exhaust gas of the catalyst 62a can be improved.

By changing the range and/or interval of the gap, the degree of influence of the water to which the upstream exhaust passage member is exposed 61 with respect to the temperature of the catalyst can be changed. When the temperature of the catalyst 62a is not easily affected by water to which the upstream exhaust passage member is exposed 61, there is a case where it is difficult to enhance the accuracy with which deterioration of the catalyst 62a is determined. Therefore, it is preferable to change the influence degree of water-exposition state of the upstream exhaust passage member 61 with respect to the temperature of the catalyst 62a according to the balance between the required level of the accuracy with which deterioration of the catalyst 62a is determined and the required level of the exhaust gas purification performance by the catalyst.

The upstream exhaust passage member 61 is a single pipe. Therefore, the temperature of the exhaust gas in the upstream exhaust passage member 61 is largely influenced by water to which the upstream exhaust passage member is exposed 61. Due to this, it is easy to determine whether the upstream exhaust passage member 61 has been exposed to water. Therefore, it is possible to further improve the accuracy with which the deterioration of the catalyst 62a is determined.

### <Specific Example 2 of Embodiment>

Next, Specific Example 2 of the above-described embodiment of the present teaching will be described. However, the same reference numerals are used for components having the same configuration as that of the above-described Specific Example 1, and description thereof is omitted when appropriate. Basically, Specific Example 2 of the embodiment of the present teaching includes all the embodiments of the present teaching described above. The Specific Example 2 is an example in which the straddled vehicle of the present teaching is applied to a sports-type motorcycle in the same manner as the Specific Example 1.

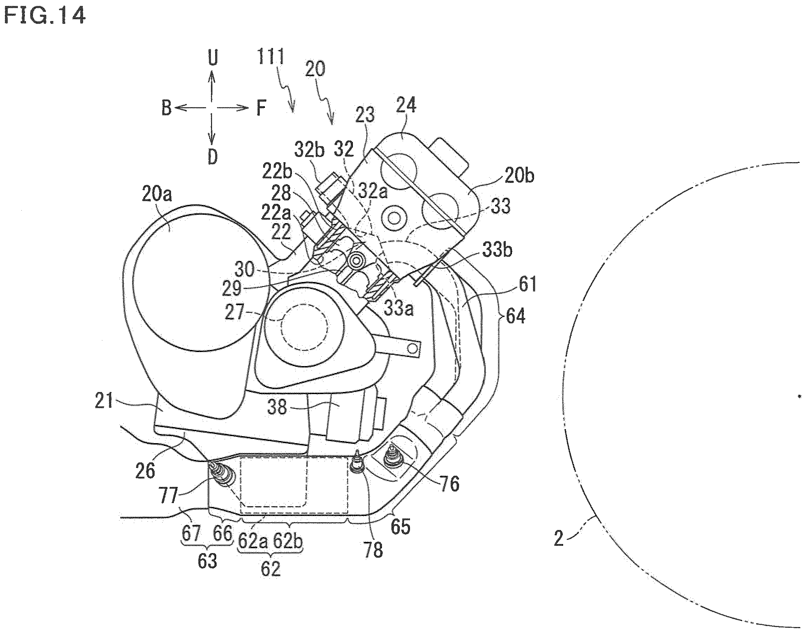

As shown in FIG. 14, an engine unit 111 of Specific Example 2 includes an exhaust gas temperature sensor 78. The upstream exhaust passage member water exposition detection unit 92 of the Specific Example 2 detects the water-exposition state of the upstream exhaust passage member 61 by using a signal of the exhaust gas temperature sensor 78 instead of a signal of the coolant water temperature sensor 71. Configurations other than these are the same as those of the motorcycle 1 of Specific Example 1.

The exhaust gas temperature sensor 78 is provided on the upstream exhaust passage member 61. More specifically, the upstream collective exhaust passage member 65 is provided on the exhaust gas temperature sensor 78. It is preferable that the exhaust gas temperature sensor 78 be provided on an upper portion or a side portion of the upstream collective exhaust passage member 65. A path length between the exhaust gas temperature sensor 78 and the catalyst unit 62 in the exhaust gas flow direction is defined as D1 (not illustrated). An average value of path lengths between the exhaust gas temperature sensor 78 and the exhaust port 33b in the exhaust gas flow direction is defined as D2 (not illustrated).

The path length D1 is shorter than the path length D2. The exhaust gas temperature sensor 78 is preferably provided at a position closer to the catalyst unit 62. The exhaust gas temperature sensor 78 is preferably disposed downstream of the upstream oxygen sensor 76. Specifically, for example, the exhaust gas temperature sensor 78 may be disposed at the same position as the downstream oxygen sensor 77. The exhaust gas temperature sensor 78 may be disposed upstream of the upstream oxygen sensor 76. The exhaust gas temperature sensor 78 may be disposed at the same position as the upstream oxygen sensor 76 in the exhaust gas flow direction.

The upstream exhaust passage member water exposition detection unit 92 detects the water-exposition state of the upstream exhaust passage member 61 based on the signal of the exhaust gas temperature sensor 78. When the upstream exhaust passage member 61 is exposed to water, the temperature of the exhaust gas that has passed through the position exposed to water is lowered. Therefore, the temperature of the exhaust gas in the upstream exhaust passage member 61, in the catalyst unit 62, and in the downstream exhaust passage member 63 decreases. If the temperature of the exhaust gas in the upstream exhaust passage member 61 and the exhaust gas downstream therefrom is low despite the engine main body 20 being in the warm-up state, there is a high possibility that the upstream exhaust passage member 61 is exposed to water. Therefore, the upstream exhaust passage member water exposition detection unit 92 detects the water-exposition state of the upstream exhaust passage member 61 based on the signal of the exhaust gas temperature sensor 78. The upstream exhaust passage member water exposition detection unit 92 detects the water-exposition state of the upstream exhaust passage member 61 when the engine main body 20 is operating under the predetermined warm-up condition. In the present embodiment, the warm-up condition may include a condition regarding the signal of the exhaust gas temperature sensor 78.

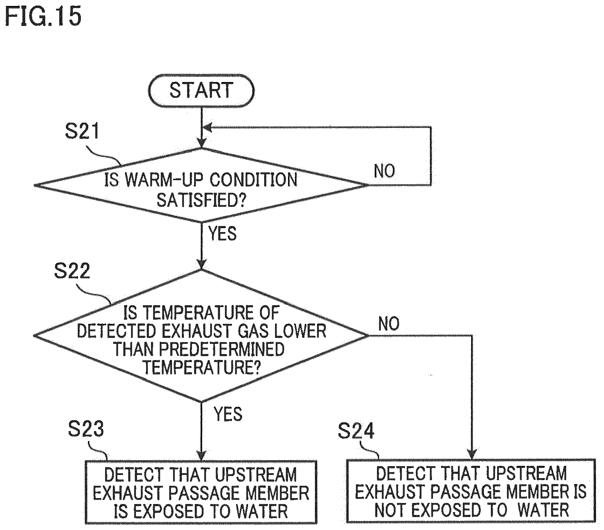

An example of the procedure for detecting by the upstream exhaust passage member water exposition detection unit 92 the water-exposition state of the upstream exhaust passage member 61 will be described with reference to the flowchart of FIG. 15. First, the upstream exhaust passage member water exposition detection unit 92 determines whether the engine main body 20 satisfies the warm-up condition (step S21). When the warm-up condition is satisfied (step S21: YES), the upstream exhaust passage member water exposition detection unit 92 performs the following water exposition detection processing. First, the upstream exhaust passage member water exposition detection unit 92 detects the temperature of the exhaust gas based on the signal of the exhaust gas temperature sensor 78. Then, the upstream exhaust passage member water exposition detection unit 92 compares the temperature of the exhaust gas detected by the signal of the exhaust gas temperature sensor 78 with a predetermined temperature (step S22). The predetermined temperature may be the temperature previously stored in the ECU 90. The predetermined temperature may be changed in accordance with the operation state of the engine main body 20. For example, the predetermined temperature may be changed based on at least one of the engine rotation speed, the throttle opening degree, the intake pressure, the vehicle speed, the intake temperature, or the outside temperature. When the detected temperature of the exhaust gas is lower than the predetermined temperature (step S22: YES), the upstream exhaust passage member water exposition detection unit 92 determines that the upstream exhaust passage member 61 is exposed to water (step S23). When the detected temperature of the exhaust gas is equal to or higher than the predetermined temperature (step S22: NO), the upstream exhaust passage member water exposition detection unit 92 determines that the upstream exhaust passage member 61 is not exposed to water (step S24).

The upstream exhaust passage member water exposition detection unit 92 may detect the water-exposition state of the upstream exhaust passage member 61 based not only on the comparison with the predetermined temperature but also on the transition of the temperature of the exhaust gas detected by the exhaust gas temperature sensor 78. This makes it possible to improve the accuracy of detection of the water-exposition state compared with the case where the water-exposition state is detected only by comparison with a predetermined temperature. For example, when the temperature of the detected exhaust gas is continuously equal to or higher than the predetermined temperature for a predetermined period of time, for example, the upstream exhaust passage member water exposition detection unit 92 may determine that the upstream exhaust passage member 61 is exposed to water.

In the flowchart of FIG. 15, the upstream exhaust passage member water exposition detection unit 92 performs the water exposition detection processing only if the warm-up condition is satisfied. However, the upstream exhaust passage member water exposition detection unit 92 may perform the water exposition detection processing only when the warm-up condition is satisfied in the steady operation. In other words, the upstream exhaust passage member water exposition detection unit 92 may perform the water exposition detection processing only when the deterioration determination of the catalyst 62a is performed. Specifically, it is possible to detect the water-exposition state of the upstream exhaust passage member 61 based on the signal of the exhaust gas temperature sensor 78 detected after the deterioration detection fuel control is started. Further, it is possible to detect the water-exposition state of the upstream exhaust passage member 61 based on the signal of the exhaust gas temperature sensor 78 detected before the deterioration detection fuel control is started.

The upstream exhaust passage member water exposition detection unit 92 may perform the water exposition detection processing irrespective of whether the warm-up condition is satisfied. In a case where the warm-up condition is not satisfied, the upstream exhaust passage member water exposition detection unit 92 sometimes determines that the upstream exhaust passage member 61 is exposed to water even though the upstream exhaust passage member 61 is not exposed to water. However, in the case where the warm-up condition is not satisfied, the catalyst deterioration determination unit 93 does not perform the deterioration determination of the catalyst 62a, so that erroneous determination of deterioration is not performed.

The exhaust gas temperature sensor 78 may be provided on the downstream exhaust passage member 63. The exhaust gas temperature sensor 78 may be provided on the downstream collective exhaust passage member 66 or on the muffler portion 67. When the exhaust gas temperature sensor 78 is provided on the downstream collective exhaust passage member 66, it is preferable that the exhaust gas temperature sensor 78 be provided on an upper portion or a side portion of the downstream collective exhaust passage member 66.

Specific Example 2 of the embodiment of the present teaching has the same effect as Specific Example 1 in the same configuration as Specific Example 1 of the embodiment of the present teaching. Specific Example 2 of the embodiment of the present teaching further has the following effects.

The exhaust device includes a downstream exhaust passage member 63. The downstream exhaust passage member 63 is connected to the downstream end of the catalyst unit 62. When the upstream exhaust passage member 61 is exposed to water splashed up by at least one of the front wheel unit 2 or the rear wheel unit 3, the temperature of the exhaust gas in the upstream exhaust passage member 61 decreases. As a result, the temperature of the exhaust gas downstream of the upstream exhaust passage member 61 also decreases. The engine unit 111 includes the exhaust gas temperature sensor 78. The exhaust gas temperature sensor 78 detects the temperature of the exhaust gas in the upstream exhaust passage member 61. When the temperature of the exhaust gas detected by the exhaust gas temperature sensor 78 is low, there is a high possibility that the upstream exhaust passage member 61 is exposed to water. Accordingly, the upstream exhaust passage member water exposition detection unit 92 detects the water-exposition state of the upstream exhaust passage member 61 due to water splashed up by at least one of the front wheel unit 2 or the rear wheel unit 3 based on the signal of the exhaust gas temperature sensor 78.

Because the water-exposition state of the upstream exhaust passage member 61 is detected based on the temperature of the exhaust gas, the accuracy of detection of the water-exposition state can be improved. Thus, it is possible to improve the accuracy with which the deterioration of the catalyst 62a is determined by the catalyst deterioration determination unit 93. Therefore, the catalyst 62a can be further downsized. As a result, the size of the vehicle 1 can be further suppressed.

Also, when the exhaust gas temperature sensor 78 is provided on the downstream collective exhaust passage member 66, the same effect as described above can be obtained. When the upstream exhaust passage member 61 is exposed to water, the temperature of the exhaust gas in the upstream exhaust passage member 61 decreases. As a result, the temperature of the exhaust gas downstream of the upstream exhaust passage member 61 also decreases. The exhaust gas temperature sensor 78 detects the temperature of the exhaust gas downstream of the upstream exhaust passage member 61. When the temperature of the exhaust gas detected by the exhaust gas temperature sensor 78 is low, there is a high possibility that the upstream exhaust passage member 61 is exposed to water. Accordingly, the upstream exhaust passage member water exposition detection unit 92 detects the water-exposition state of the upstream exhaust passage member 61 due to water splashed up by at least one of the front wheel unit 2 or the rear wheel unit 3 based on the signal of the exhaust gas temperature sensor 78. However, it is preferable that the exhaust gas temperature sensor 78 be provided on the upstream exhaust passage member 61 in order to improve the accuracy of detection of water to which the upstream exhaust passage member is exposed 61.

### <Specific Example 3 of Embodiment>

Next, Specific Example 3 of the above-described embodiment of the present teaching will be described. However, the same reference numerals are used for components having the same configuration as that of the above-described Specific Example 1, and description thereof is omitted when appropriate. Basically, Specific Example 3 of the embodiment of the present teaching encompasses all the embodiments of the present teaching described above. The Specific Example 3 is an example in which the straddled vehicle of the present teaching is applied to a sports-type motorcycle in the same manner as the specific examples 1 and 2.

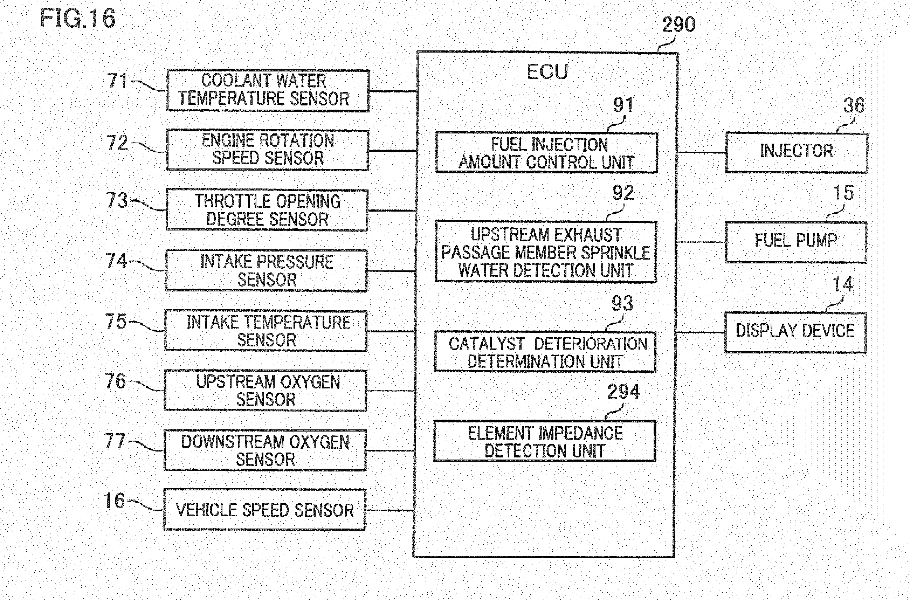

As shown in FIG. 16, the ECU 290 of Specific Example 3 includes an element impedance detection unit 294. The upstream exhaust passage member water exposition detection unit 92 of the Specific Example 3 detects the water-exposition state of the upstream exhaust passage member 61 based on the detection result of the element impedance detection unit 294, not the signal of the coolant water temperature sensor 71. Configurations other than these are the same as those of the motorcycle 1 of Specific Example 1. The oxygen sensors 76 and 77 may or may not be a linear A/F sensor.

The element impedance detection unit 294 detects the impedance of the detection element of at least one of the upstream oxygen sensor 76 or the downstream oxygen sensor 77. Hereinafter, a method of detecting the impedance by the element impedance detection unit 294 will be described. The element impedance detection unit 294 first switches the voltage applied to the oxygen sensor (76 or 77) from the voltage at the time of detecting the oxygen concentration to the voltage for detecting the impedance. The voltage change ΔV at that time and the current change ΔI caused by the voltage change ΔV are detected. Then, the impedance of the detection element of the oxygen sensor (76 or 77) is calculated from the voltage change ΔV and the current change ΔI. The impedance is a value obtained by dividing the voltage change ΔV by the current change ΔI.

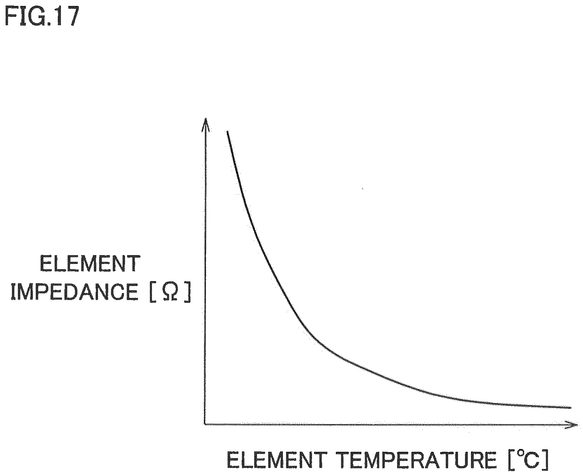

The upstream exhaust passage member water exposition detection unit 92 detects the water-exposition state of the upstream exhaust passage member 61 based on the impedance of the detection element of the oxygen sensor (76 or 77) detected by the element impedance detection unit 294. As shown in FIG. 17, the impedance of the detection element of the oxygen sensors 76 and 77 decreases as the temperature of the detection element of the oxygen sensors 76 and 77 decreases. Therefore, by detecting the impedance of the detection element of the oxygen sensor (76 or 77), the temperature of the detection element of the oxygen sensor (76 or 77) can be estimated. First, the upstream exhaust passage member water exposition detection unit 92 estimates the temperature of the detection element of the oxygen sensor (76 or 77) based on the impedance of the detection element of the oxygen sensor (76 or 77) detected by the element impedance detection unit 294. The temperature of the detection element of the upstream oxygen sensor 76 depends on the temperature of the exhaust gas in the upstream exhaust passage member 61. The temperature of the detection element of the downstream oxygen sensor 77 depends on the temperature of the exhaust gas in the downstream exhaust passage member 63. When the upstream exhaust passage member 61 is exposed to water, the temperature of the exhaust gas that has passed through the position exposed to water is lowered. Therefore, the temperature of the exhaust gas in the upstream exhaust passage member 61, in the catalyst unit 62, and in the downstream exhaust passage member 63 decreases. If the temperature of the exhaust gas in the upstream exhaust passage member 61 and the exhaust gas downstream therefrom is low despite the engine main body 20 being in the warm-up state, there is a high possibility that the upstream exhaust passage member 61 is exposed to water. Therefore, the upstream exhaust passage member water exposition detection unit 92 detects the water-exposition state of the upstream exhaust passage member 61 based on the estimated temperature of the detection element of the oxygen sensor (76 or 77). The upstream exhaust passage member water exposition detection unit 92 detects the water-exposition state of the upstream exhaust passage member 61 when the engine main body 20 is operating under the predetermined warm-up condition.

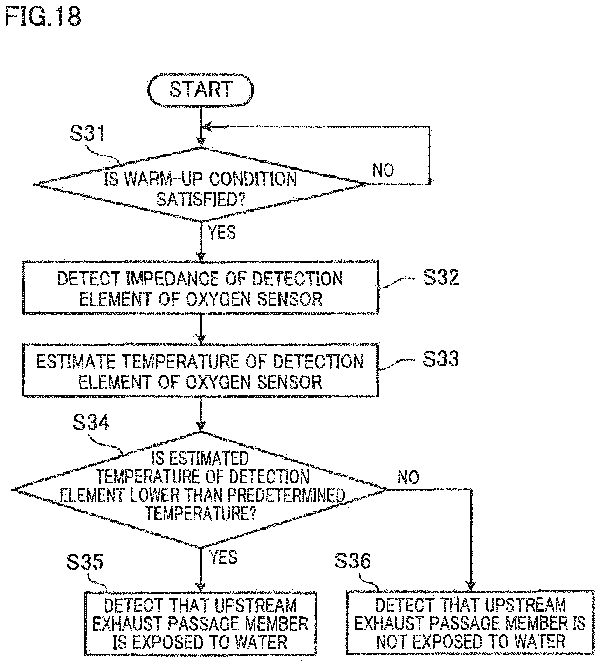

An example of the procedure for detecting by the upstream exhaust passage member water exposition detection unit 92 the water-exposition state of the upstream exhaust passage member 61 will be described with reference to the flowchart of FIG. 18. First, the upstream exhaust passage member water exposition detection unit 92 determines whether the engine main body 20 satisfies the warm-up condition (step S31). When the warm-up condition is satisfied (step S31: YES), a signal is sent from the upstream exhaust passage member water exposition detection unit 92 to the element impedance detection unit 294. The element impedance detection unit 294 detects the impedance of the detection element of the oxygen sensor (76 or 77) (step S32). The upstream exhaust passage member water exposition detection unit 92 estimates the temperature of the detection element of the oxygen sensor (76 or 77) based on the detected impedance of the detection element of the oxygen sensor (76 or 77) (step S33). Next, the upstream exhaust passage member water exposition detection unit 92 compares the estimated temperature of the detection element of the oxygen sensor (76 or 77) with a predetermined temperature (step S34). The predetermined temperature may be the temperature previously stored in ECU 290. The predetermined temperature may be changed in accordance with the operation state of the engine main body 20. For example, the predetermined temperature may be changed based on at least one of the engine rotation speed, the throttle opening degree, the intake pressure, the vehicle speed, the intake temperature, or the outside temperature.

When the estimated temperature of the detection element is lower than the predetermined temperature (step S34: YES), the upstream exhaust passage member water exposition detection unit 92 determines that the upstream exhaust passage member 61 is exposed to water (step S35). When the estimated temperature of the detection element is equal to or higher than the predetermined temperature (step S34: NO), the upstream exhaust passage member water exposition detection unit 92 determines that the upstream exhaust passage member 61 is not exposed to water (step S36).

The upstream exhaust passage member water exposition detection unit 92 may detect the water-exposition state of the upstream exhaust passage member 61 based not only on a comparison with a predetermined temperature but also on the transition of the estimated temperature of the detection element. This makes it possible to improve the accuracy of detection of the water-exposition state compared with the case where the water-exposition state is detected only by comparison with a predetermined temperature. For example, the upstream exhaust passage member water exposition detection unit 92 may determine that the upstream exhaust passage member 61 is exposed to water when the estimated temperature of the detection element is equal to or higher than the predetermined temperature continuously for a predetermined time.

In the flowchart of FIG. 18, the upstream exhaust passage member water exposition detection unit 92 performs the water exposition detection processing only if the warm-up condition is satisfied. However, the upstream exhaust passage member water exposition detection unit 92 may perform the water exposition detection processing only when the warm-up condition is satisfied in the steady operation. In other words, the upstream exhaust passage member water exposition detection unit 92 may perform the water exposition detection processing only when the deterioration determination of the catalyst 62a is performed. Specifically, it is possible to detect the water-exposition state of the upstream exhaust passage member 61 based on the impedance of the detection element detected after the deterioration detection fuel control is started. Further, it is possible to detect the water-exposition state of the upstream exhaust passage member 61 based on the impedance of the detection element detected before the deterioration detection fuel control is started.

The upstream exhaust passage member water exposition detection unit 92 may perform the water exposition detection processing irrespective of whether the warm-up condition is satisfied. In a case where the warm-up condition is not satisfied, the upstream exhaust passage member water exposition detection unit 92 sometimes determines that the upstream exhaust passage member 61 is exposed to water even though the upstream exhaust passage member 61 is not exposed to water. However, in the case where the warm-up condition is not satisfied, the catalyst deterioration determination unit 93 does not perform the deterioration determination of the catalyst 62a, so that erroneous determination of deterioration is not performed.

As shown in FIG. 17, the amount of change in the temperature of the detection element with respect to the unit change amount of the impedance of the detection element is smaller as the temperature of the detection element is lower. Due to this, in the low temperature range, even if there is an error between the detected impedance and the actual impedance, the difference between the temperature of the detection element estimated from the detected impedance and the actual temperature is small. Therefore, in the low temperature range, the estimation accuracy of the temperature of the detection element is high. When the upstream exhaust passage member 61 is exposed to water, the temperature of the detection element is low. Therefore, high detection accuracy can be secured by detecting the water-exposition state of the upstream exhaust passage member 61 based on the detected impedance of the detection element.

Specific Example 3 of the embodiment of the present teaching has the same effect as Specific Example 1 in the same configuration as Specific Example 1 of the embodiment of the present teaching. Specific Example 3 of the embodiment of the present teaching further has the following effects.

First, the case where the element impedance detection unit 294 detects the impedance of the detection element of the upstream oxygen sensor 76 will be described. The engine unit 11 includes the upstream oxygen sensor 76 and the element impedance detection unit 294. The upstream oxygen sensor 76 detects the oxygen concentration in the exhaust gas in the upstream exhaust passage member 61. When the upstream exhaust passage member 61 is exposed to water splashed up by at least one of the front wheel unit 2 or the rear wheel unit 3, the temperature of the exhaust gas in the upstream exhaust passage member 61 decreases. When the temperature of the exhaust gas in the upstream exhaust passage member 61 changes, the temperature of the detection element of the upstream oxygen sensor 76 also changes. When the temperature of the detection element of the upstream oxygen sensor 76 changes, the impedance of the detection element of the upstream oxygen sensor 76 changes. Therefore, the upstream exhaust passage member water exposition detection unit 92 can detect the water-exposition state of the upstream exhaust passage member 61 due to water splashed up by at least one of the front wheel unit 2 or the rear wheel unit 3 based on the impedance of the detection element of the upstream oxygen sensor 76 detected by the element impedance detection unit 294.

An upstream oxygen sensor is generally provided upstream of the catalyst to control the amount of the fuel supply. The upstream exhaust passage member water exposition detection unit 92 detects the water-exposition state of the upstream exhaust passage member 61 by using the generally provided upstream oxygen sensor 76. Therefore, it is possible to detect the water-exposition state of the upstream exhaust passage member 61 while suppressing an increase in the number of sensors. As a result, it is possible to further suppress the increase in size of the vehicle 1.

A case where the element impedance detection unit 294 detects the impedance of the detection element of the downstream oxygen sensor 77 will be described. The engine unit 11 includes the downstream oxygen sensor 77 and the element impedance detection unit 294. The downstream oxygen sensor 77 detects the oxygen concentration in the exhaust gas in the downstream exhaust passage member 63. When the upstream exhaust passage member 61 is exposed to water, the temperature of the exhaust gas in the upstream exhaust passage member 61 decreases. As a result, the temperature of the exhaust gas downstream of the upstream exhaust passage member 61 also decreases. When the temperature of the exhaust gas downstream of the upstream exhaust passage member 61 changes, the temperature of the detection element of the downstream oxygen sensor 77 also changes. When the temperature of the detection element of the downstream oxygen sensor 77 changes, the impedance of the detection element of the downstream oxygen sensor 77 changes. Therefore, the upstream exhaust passage member water exposition detection unit 92 can detect the water-exposition state of the upstream exhaust passage member 61 due to water splashed up by at least one of the front wheel unit 2 or the rear wheel unit 3 based on the impedance of the detection element of the downstream oxygen sensor 77 detected by the element impedance detection unit 294.

The upstream exhaust passage member water exposition detection unit 92 of the above embodiment detects the water-exposition state of the upstream exhaust passage member 61 based on the impedance of the detection element of the upstream oxygen sensor 76 or the downstream oxygen sensor 77. However, the upstream exhaust passage member water exposition detection unit 92 may detect the water-exposition state of the upstream exhaust passage member 61 based on the impedance of the detection elements of both the upstream oxygen sensor 76 and the downstream oxygen sensor 77. For example, the water-exposition state of the upstream exhaust passage member 61 may be detected based on both of the transition of the estimated temperature of the detection element of the upstream oxygen sensor 76 and the transition of the estimated temperature of the detection element of the downstream oxygen sensor 77.

Although Specific Examples 1 to 3 have been described as specific examples of embodiments of the present teaching, specific examples of embodiments of the present teaching are not limited thereto. Hereinafter, another Specific Example of the embodiment of the present teaching will be described.

The upstream exhaust passage member 61 of the above-described Specific Examples 1 to 3 is a single pipe. However, at least a part of the upstream exhaust passage member of the present teaching may be composed of a multi-walled pipe such as a double-walled pipe or the like. The multi-walled pipe includes an inner pipe and at least one outer pipe covering the inner pipe. Because at least a part of the upstream exhaust passage member 61 is constituted by the multi-walled pipe, it is possible to suppress a decrease in the temperature of the exhaust gas in the upstream exhaust passage member. Therefore, even if the upstream exhaust passage member is exposed to water, the temperature of the catalyst does not easily decrease. That is, the temperature of the catalyst is not easily affected by water to which the upstream exhaust passage member is exposed. Therefore, the performance of the catalyst purifying the exhaust gas can be improved.

By changing the ratio of the length of the multi-walled pipe in the upstream exhaust passage member, it is possible to change the influence degree of the water-exposition state of the upstream exhaust passage member with respect to the temperature of the catalyst. Because the temperature of the catalyst is not easily affected by water to which the upstream exhaust passage member is exposed, it may be difficult to enhance the accuracy with which deterioration of the catalyst is determined. Therefore, it is preferable to change the influence degree of the water-exposition state of the upstream exhaust passage member with respect to the temperature of the catalyst according to the balance between the required level of the accuracy with which deterioration of the catalyst is determined and the required level of exhaust gas purification performance by the catalyst.

In Specific Examples 1 to 3 described above, there is a gap in which only gas exists between a part of the outer peripheral surface of the catalyst 62a and a part of the inner peripheral surface of the cylinder member 62b. However, there may be no gap between the outer peripheral surface of the catalyst 62a and the inner peripheral surface of the cylinder member 62b, in which only gas exists. In other words, the entire outer circumferential surface of the catalyst 62a may be in contact with the inner circumferential surface of the cylinder member 62b directly or indirectly via a tubular member. In this case, the heat of the catalyst 62a is less likely to be transmitted to the cylinder member 62b. Therefore, the temperature of the catalyst 62a is greatly influenced by water to which the upstream exhaust passage member is exposed 61. Due to this, it is easy to determine whether the upstream exhaust passage member 61 has been exposed to water. Therefore, it is possible to improve the accuracy with which the deterioration of the catalyst 62a is determined.

At least a part of the catalyst 62a may be disposed in the muffler portion 67. Specifically, at least a part of the catalyst 62a may be disposed in, for example, the first pipe 81 (see FIG. 8). In this case, a combination of the catalyst 62a and the portion of the first pipe 81 where the catalyst 62a is disposed corresponds to the catalyst unit of the present teaching. An entire passage member connecting the catalyst unit 62 and the engine main body 20 corresponds to the upstream exhaust passage member of the present teaching.

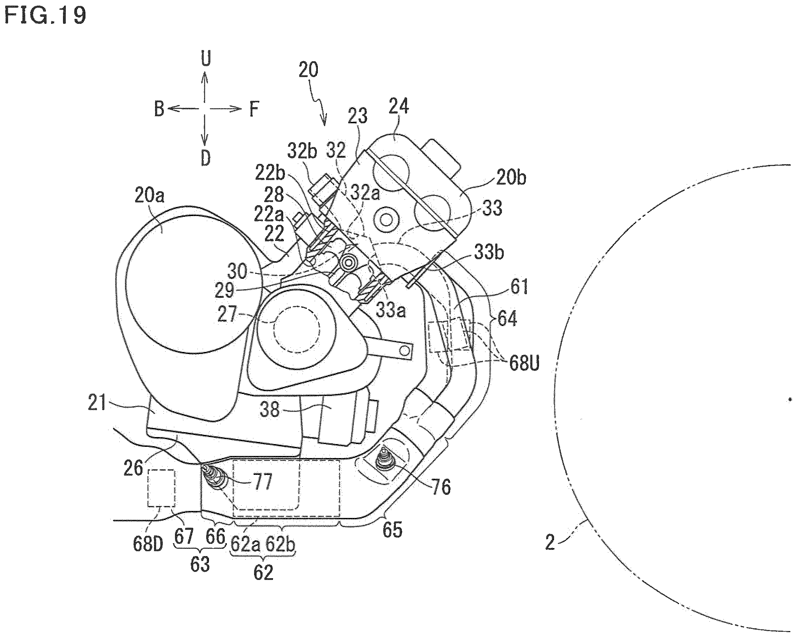

For example, as shown in FIG. 19, the exhaust device 60 may have at least one catalyst (68U, 68D) in addition to the catalyst 62a. A catalyst disposed upstream of the catalyst 62a is defined as an upstream catalyst 68U. The catalyst disposed downstream of the catalyst 62a is defined as a downstream catalyst 68D. In FIG. 19, the upstream catalyst 68U is disposed in each of a plurality of independent exhaust passage members 64. The upstream catalyst 68U may be disposed in at least one of the plurality of independent exhaust passage members 64. The upstream catalyst 68U may be disposed in the upstream collective exhaust passage member 65. In FIG. 19, the downstream catalyst 68D is disposed in the muffler portion 67. The downstream catalyst 68D may be disposed in the downstream collective exhaust passage member 66.

When the upstream catalyst 68U is disposed upstream of the upstream oxygen sensor 76, the catalyst deterioration determination unit 93 performs deterioration determination only for the catalyst 62a. By replacing the catalyst 62a determined to be deteriorated, the purification performance of the catalyst 62a can be maintained at the initial level. Therefore, even if the upstream catalyst 68U is deteriorated, the initial performance of the motorcycle with respect to exhaust gas purification can be maintained.

On the other hand, when the upstream catalyst 68U is disposed downstream of the upstream oxygen sensor 76, the catalyst deterioration determination unit 93 determines whether the catalyst including the catalyst 62a and the upstream catalyst 68U is deteriorated. In other words, the catalyst deterioration determination unit 93 determines whether the purification performance combined the purification performance of the catalyst 62a with the purification performance of the upstream catalyst 68U reaches a predetermined level. In this case, the catalyst constituted by combining the catalyst 62a with the upstream catalyst 68U corresponds to the catalyst of the present teaching. Further, a combination of the exhaust passage member from the upstream end of the upstream catalyst 68U to the downstream end of the catalyst 62a, the catalyst 62a, and the upstream catalyst 68U constitute the catalyst unit in the present teaching. By replacing the catalyst 62a and the upstream catalyst 68U which are determined to be deteriorated, it is possible to maintain the purification performance of the catalyst 62a and the upstream catalyst 68U at the initial level. Therefore, compared with a case where deterioration of only the catalyst 62a is determined, the exhaust gas purification performance of the motorcycle can be maintained at a higher level.

When the downstream catalyst 68D is disposed downstream of the downstream oxygen sensor 77, the catalyst deterioration determination unit 93 performs deterioration determination only for the catalyst 62a. By replacing the catalyst 62a determined to be deteriorated, the purification performance of the catalyst 62a can be maintained at the initial level. Therefore, even if the downstream catalyst 68D is deteriorated, the initial performance of the motorcycle with respect to exhaust gas purification can be maintained.

On the other hand, when the downstream catalyst 68D is disposed upstream of the downstream oxygen sensor 77, the catalyst deterioration determination unit 93 determines whether the catalyst constituted by combining the catalyst 62a with the downstream catalyst 68D is deteriorated. In other words, the catalyst deterioration determination unit 93 determines whether the purification performance combining the purification performance of the catalyst 62a with the purification performance of the downstream catalyst 68D reaches a predetermined level. In this case, the combination of the catalyst 62a and the downstream catalyst 68D corresponds to the catalyst of the present teaching. Further, a combination of the exhaust passage member from the upstream end of the catalyst 62a to the downstream end of the downstream catalyst 68D, the catalyst 62a, and the downstream catalyst 68D constitute the catalyst unit in the present teaching. By replacing the catalyst 62a and the downstream catalyst 68D which are determined to be deteriorated, the purification performance of the catalyst 62a and the downstream catalyst 68D can be maintained at the initial level. Therefore, compared with a case where deterioration of only the catalyst 62a is determined, the exhaust gas purification performance of the motorcycle can be maintained at a higher level.

The purification capability of the upstream catalyst 68U may be smaller or larger than the purification capability of the catalyst 62a. The purification capability of the downstream catalyst 68D may be smaller or larger than the purification capability of the catalyst 62a. Note that the state in which the purification capability of the upstream catalyst 68U is smaller than the purification capability of the catalyst 62a means the following state. That is the exhaust gas discharged from the atmosphere discharge port 67a when only the upstream catalyst 68U is provided is purified more than the exhaust gas discharged from the atmosphere discharge port 67a when only the catalyst 62a is provided. The degree of contribution to exhaust gas purification of the upstream catalyst 68U may be smaller or larger than the degree of contribution to exhaust gas purification of the catalyst 62a. The degree of contribution of exhaust gas purification of the downstream catalyst 68D may be smaller or larger than the contribution degree of exhaust gas purification of the catalyst 62a.

The upstream catalyst 68U and the downstream catalyst 68D may have a porous structure similarly to the catalyst 62a of the above-described Specific Examples 1 to 3. The upstream catalyst 68U and the downstream catalyst 68D may not have a porous structure. Specifically, for example, the upstream catalyst 68U may be composed only of a catalyst material attached to the inner surface of the upstream exhaust passage member 61. Further, for example, the upstream catalyst 68U may be structured by arranging a catalyst material to be adhered to a plate-shaped base material. The cross-sectional shape orthogonal to the exhaust gas flow direction of the plate-shaped base material is, for example, a circular shape, a C shape, or an S shape. When the upstream catalyst 68U or the downstream catalyst 68D has a porous structure, the catalyst 62a may not have a porous structure.

The engine main body 20 of Specific Examples 1 to 3 described above includes the same number of exhaust ports 33b as the number of the combustion chambers 30. However, the number of the exhaust ports 33b of the engine main body 20 may be smaller than the number of the combustion chambers 30. The number of exhaust port 33b may be at least one. In this case, the engine main body 20 is formed such that the exhaust gas discharged from the plurality of combustion chambers 30 gathers inside the engine main body 20. The number of the independent exhaust passage members 64 is the same as the number of the exhaust ports 33b.

The engine main body 20 of Specific Examples 1 to 3 is a three-cylinder engine having three combustion chambers 30. However, the engine main body to which the present teaching is applied may be a multi-cylinder engine having two, or four or more combustion chambers. Further, the engine main body to which the present teaching is applied may be a single-cylinder engine having only one combustion chamber.

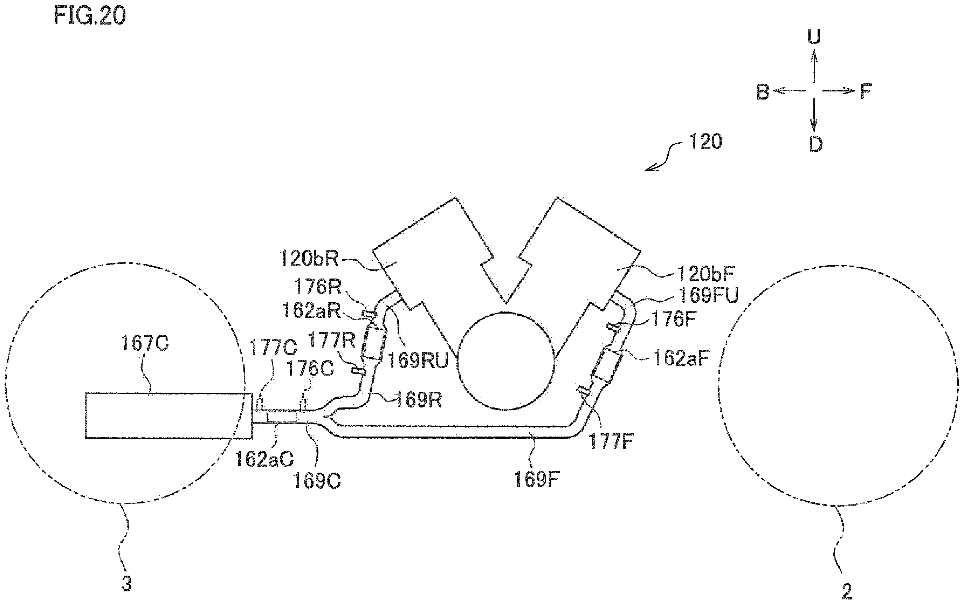

When the number of combustion chambers 30 is two or more, the engine main body may be an engine main body 120 of so-called V-type engine as shown in FIG. 20. The engine main body 120 is formed in a V shape when viewed in the left or right direction. The engine main body 120 includes a front cylinder portion 120bF and a rear cylinder portion 120bR. The front cylinder portion 120bF is disposed forward of the rear cylinder portion 120bR. When viewed in the left or right direction, the engine main body 120 is disposed behind the front wheel unit 2 and behind the rear wheel unit 3. The front cylinder portion 120bF and the rear cylinder portion 120bR each include at least one combustion chamber (not illustrated). The exhaust passage member connected to the front cylinder portion 120bF is defined as a front exhaust passage member 169F. The exhaust passage member connected to the rear cylinder portion 120bR is defined as a rear exhaust passage member 169R. In FIG. 20, the downstream end of the front exhaust passage member 169F and the downstream end of the rear exhaust passage member 169R are connected to a collective exhaust passage member 169C. The downstream end of the collective exhaust passage member 169C is connected to a muffler portion 167C. The front exhaust passage member 169F and the rear exhaust passage member 169R may be connected to individual muffler portions without through the collective exhaust passage member 169C.

A front catalyst 162aF is disposed in the front exhaust passage member 169F. A portion of the front exhaust passage member 169F which is upstream of the front catalyst 162aF is defined as a front upstream exhaust passage member 169FU. A front upstream oxygen sensor 176F and a front downstream oxygen sensor 177F are disposed upstream and downstream of the front catalyst 162aF in the front exhaust passage member 169F respectively. In the rear exhaust passage member 169R, a rear catalyst 162aR is disposed. A portion of the rear exhaust passage member 169R which is upstream of the rear catalyst 162aR is defined as a rear upstream exhaust passage member 169RU. A rear upstream oxygen sensor 176R and a rear downstream oxygen sensor 177R are disposed upstream and downstream of the rear catalyst 162aR in the rear exhaust passage member 169R respectively. The catalyst deterioration determination unit 93 determines whether at least one of the front catalyst 162aF or the rear catalyst 162aR is deteriorated. When the catalyst deterioration determination unit 93 determines whether the front catalyst 162aF is deteriorated, the upstream exhaust passage member water exposition detection unit 92 detects the water-exposition state of the front upstream exhaust passage member 169FU. The catalyst deterioration determination unit 93 controls the determination of whether the front catalyst 162aF is deteriorated based on the water-exposition state of the front upstream exhaust passage member 169FU where the state is detected by the upstream exhaust passage member water exposition detection unit 92. When the catalyst deterioration determination unit 93 determines whether the rear catalyst 162aR is deteriorated, the upstream exhaust passage member water exposition detection unit 92 may or may not detect the water-exposition state of a rear upstream exhaust passage member 169RU. The rear upstream exhaust passage member 169RU is harder to be exposed to water than the front upstream exhaust passage member 169FU. Therefore, even if whether a rear catalyst 162aR is deteriorated is determined without considering the water-exposition state of the rear upstream exhaust passage member 169RU, the determination accuracy can be secured.

The catalyst 162aC may be disposed in the collective exhaust passage member 169C or in the muffler portion 167C without providing the front catalyst 162aF and the rear catalyst 162aR. In this case, it is preferable that an upstream oxygen sensor 176C and a downstream oxygen sensor 177C are disposed upstream and downstream of the catalyst 162aC respectively. The catalyst deterioration determination unit 93 can determine whether the catalyst 162aC is deteriorated based on a signal of the oxygen sensors 176C and 177C. A passage member formed by combining the front exhaust passage member 169F, the rear exhaust passage member 169R, and a portion of the collective exhaust passage member 169C and of the muffler portion 167C which is upstream of the catalyst 162aC is referred to as an upstream exhaust passage member. The upstream exhaust passage member water exposition detection unit 92 detects the water-exposition state of this upstream exhaust passage member. The catalyst deterioration determination unit 93 controls the determination of whether a catalyst 162aC is deteriorated based on the water-exposition state of the upstream exhaust passage member where the state is detected by the upstream exhaust passage member water exposition detection unit 92.

In the Specific Examples 1 to 3 described above, the cylinder axial line Cy is along the up-down direction. However, the cylinder axial line Cy may be along the front-rear direction. In this case, the cylinder axial line Cy may be parallel to the front-rear direction. Further, the cylinder axial line Cy may be inclined in the up-down direction with respect to the front-rear direction. More specifically, the cylinder axial line Cy is inclined with respect to the front-rear direction so that the first point on the cylinder axial line Cy is located above the second point on the cylinder axial line Cy which is rearward of the first point.

In the Specific Examples 1 to 3 described above, during the operation of the engine unit, only the exhaust gas discharged from the combustion chamber 30 flows through the upstream exhaust passage member 61. However, the engine unit may have a secondary air supply mechanism for supplying air to the upstream exhaust passage member 61. A known configuration is employed as a specific configuration of the secondary air supply mechanism. The secondary air supply mechanism may be configured to forcibly supply air to the upstream exhaust passage member 61 by an air pump. Further, the secondary air supply mechanism may be configured to draw air into the upstream exhaust passage member 61 by the negative pressure in the upstream exhaust passage member 61. In the latter case, the secondary air supply mechanism includes a reed valve that opens and closes according to a change in pressure in the upstream exhaust passage member 61. In the case of providing the secondary air supply mechanism, the upstream oxygen sensor 76 provided on the upstream exhaust passage member 61 may be provided either upstream or downstream of the position of air inflow.

The engine unit according to Specific Examples 1 to 3 is a water-cooled engine. However, the engine unit to which the present teaching is applied may be an air-cooled engine. The engine unit to which the present teaching is applied may be a natural air-cooled type or a forced air-cooled type. When the engine unit is an air-cooling type, an engine temperature sensor is provided instead of the coolant water temperature sensor 71. The engine temperature sensor directly detects the temperature of the engine main body 20. When the engine unit is an air-cooling type, an air-cooled oil cooler is provided in place of the water-cooled oil cooler 38. The air-cooled oil cooler may be disposed at the same position as the radiator 41.

The engine unit to which the present teaching is applied may have a forced-induction compressor. The forced-induction compressor is a device for increasing the density of air drawn into the engine main body. The forced-induction compressor is a supercharger or a turbocharger. The turbocharger compresses the intake air by the exhaust gas motion and thermal energy. In the case of providing a turbocharger, an intercooler is provided to cool the intake air. The intercooler may be an air-cooled type or a water-cooled type. The coolant water flowing through the water-cooled intercooler may or may not serve as the coolant water for cooling the engine main body 20. When the water-cooled intercooler and the engine main body 20 do not share coolant water, a sub radiator is provided. The sub radiator cools the coolant water that has passed through the water-cooled intercooler. The air-cooled intercooler or sub radiator is disposed at a position where the air flow generated by traveling is likely to hit. Preferably, the air-cooled intercooler or sub radiator is disposed in front of the engine main body. When viewed in the left or right direction, the air-cooled intercooler or sub radiator is disposed rearward of the front wheel unit and forward of the rear wheel unit. When viewed in the left or right direction, at least a part of the air-cooled intercooler or sub radiator is disposed between the front wheel unit and the rear wheel unit.

The method of detecting the water-exposition state of the upstream exhaust passage member 61 may be a combination of the methods described in the above Specific Examples 1 to 3. The method of detecting the water-exposition state of the upstream exhaust passage member 61 may be a method other than the methods described in the above Specific Examples 1 to 3. The specific example will be described below.

A catalyst temperature sensor for detecting the temperature of the catalyst 62a may be provided. The upstream exhaust passage member water exposition detection unit 92 may detect the water-exposition state of the upstream exhaust passage member 61 based on the signal of the catalyst temperature sensor. More specifically, based on the temperature difference between the temperature of the catalyst 62a detected by the catalyst temperature sensor and a predetermined temperature, the water-exposition state is detected. The predetermined temperature may be the temperature previously stored in the ECU 90. Further, the predetermined temperature may be changed in accordance with the operation state of the engine main body 20. For example, the predetermined temperature may be changed based on at least one of the engine rotation speed, the throttle opening degree, the intake pressure, the vehicle speed, the intake temperature, or the outside temperature.

In the case where the upstream oxygen sensor 76 incorporates a heater, the upstream exhaust passage member water exposition detection unit 92 may detect the water-exposition state of the upstream exhaust passage member 61 based on the impedance of the heater of the upstream oxygen sensor 76. In the case where the downstream oxygen sensor 77 incorporates a heater, the upstream exhaust passage member water exposition detection unit 92 may detect the water-exposition state of the upstream exhaust passage member 61 based on the impedance of the heater of the downstream oxygen sensor 77.

In the case where the downstream oxygen sensor 77 incorporates a heater, the upstream exhaust passage member water exposition detection unit 92 may detect the water-exposition state of the upstream exhaust passage member 61 by the following method. When the output voltage of the downstream oxygen sensor 77 is maintained on the rich side, the heater of the downstream oxygen sensor 77 is turned off. The time until the output voltage of the downstream oxygen sensor 77 changes to the lean side from the time when it is turned off is measured. The measured time can be regarded as the time until the detection element in the active state of the downstream oxygen sensor 77 changes to the inactive state. The lower the temperature of the exhaust gas passing through the upstream exhaust passage member 61 is, the shorter the time until the detection element in the active state of the downstream oxygen sensor 77 changes to the inactive state is. When the temperature of the exhaust gas passing through the upstream exhaust passage member 61 is low, there is a high possibility that the upstream exhaust passage member 61 is exposed to water. Therefore, when the measured time is less than a predetermined time, it can be determined that the upstream exhaust passage member 61 is exposed to water.

In the case where a screen and a wiper are provided at the front portion of the motorcycle, the upstream exhaust passage member water exposition detection unit 92 may detect the water-exposition state of the upstream exhaust passage member 61 by the following method. The wiper is connected to a wiper switch provided on the handle unit. The wiper switch is operated by the rider. The wiper switch is connected to the ECU 90. Then, based on the operation state of the wiper switch, the water-exposition state of the upstream exhaust passage member 61 is detected. That is, when the wiper switch is turned on, it is determined that the upstream exhaust passage member 61 is exposed to water.

An oil temperature sensor for detecting the temperature of the lubrication oil may be provided. The upstream exhaust passage member water exposition detection unit 92 may detect the water-exposition state of the upstream exhaust passage member 61 based on the signal of the oil temperature sensor. In this case, the oil cooler may be air-cooled type or water-cooled type. The coolant water flowing through the water-cooled oil cooler may or may not serve as the coolant water for cooling the engine main body 20. When the water-cooled type oil cooler and the engine main body 20 do not share coolant water, a sub radiator is provided. The sub radiator cools the coolant water that has passed through the oil cooler. The air-cooled type oil cooler or the sub radiator is disposed at a position where the air flow generated by the travel easily hits. Preferably, the air-cooled oil cooler or sub radiator is disposed in front of the engine main body. When viewed in the left or right direction, the air-cooled oil cooler or sub radiator is disposed rearward of the front wheel unit and forward of the rear wheel unit. When viewed in the left or right direction, at least a part of the air-cooled intercooler or sub radiator is disposed between the front wheel unit and the rear wheel unit.

The oil cooler is likely to be exposed to water splashed up by the front wheel unit 2. When the oil cooler is exposed to water, the temperature of the lubrication oil detected by the oil temperature sensor decreases. When the oil cooler is exposed to water, there is a high possibility that the upstream exhaust passage member 61 is also exposed to water. Therefore, it is possible to detect the water-exposition state of the upstream exhaust passage member 61 based on the signal of the temperature of the oil temperature sensor.

In the case where the engine unit includes the supercharger and the air-cooled intercooler, the upstream exhaust passage member water exposition detection unit 92 may detect the water-exposition state of the upstream exhaust passage member 61 based on the signal of the intake temperature sensor 95. The intake temperature sensor 95 is disposed to detect the temperature of the intake air after passing through the air-cooled intercooler. The air-cooled intercooler is likely to be exposed to water splashed up by the front wheel unit 2. When the air-cooled intercooler is exposed to water, the temperature of the intake air detected by the intake temperature sensor 95 decreases. When the air-cooled intercooler is exposed to water, there is a high possibility that the upstream exhaust passage member 61 is also exposed to water. Therefore, it is possible to detect the water-exposition state of the upstream exhaust passage member 61 based on the signal of the intake temperature sensor 95.

As mentioned above, the engine unit may include a supercharger, a water-cooled intercooler and a sub radiator. Further, in the case where the coolant water circulating through the water-cooled intercooler and the sub radiator does not also serve as the coolant water for cooling the engine main body 20, the upstream exhaust passage member water exposition detection unit 92 may detect the water-exposition state of the upstream exhaust passage member 61 with the following method. A coolant water temperature sensor for detecting the temperature of the coolant water circulating through the water-cooled intercooler and the sub radiator is provided. The upstream exhaust passage member water exposition detection unit 92 may detect the water-exposition state of the upstream exhaust passage member 61 based on the signal of the coolant water temperature sensor. The sub radiator is likely to be exposed to water splashed up by the front wheel unit 2. When the sub radiator is exposed to water, the temperature of the coolant water circulating through the water-cooled intercooler and the sub radiator decreases. When the sub radiator is exposed to water, there is a high possibility that the upstream exhaust passage member 61 is also exposed to water. Therefore, it is possible to detect the water-exposition state of the upstream exhaust passage member 61 based on the temperature of the coolant water circulating through the water-cooled intercooler and the sub radiator.

The upstream exhaust passage member water exposition detection unit 92 of the above-described Specific Examples 1 to 3 detects onlywhether the upstream exhaust passage member 61 is exposed to water. However, the upstream exhaust passage member water exposition detection unit 92 may detect the more detailed water-exposition state. For example, the upstream exhaust passage member water exposition detection unit 92 may detect to which level the water-exposition state of the upstream exhaust passage member 61 corresponds, among the plurality of levels of the water-exposition state. The upstream exhaust passage member water exposition detection unit 92 detects the level of the water-exposition state of the upstream exhaust passage member 61 based on the temperature difference ΔTe and the vehicle speed. The level of the water-exposition state is set to be high as the decreased range of the temperature of the exhaust gas in the upstream exhaust passage member 61 due to water to which the upstream exhaust passage member is exposed 61 becomes large.

In the above-described modification, the upstream exhaust passage member water exposition detection unit 92 detects the detailed water-exposition state. In the case of employing this modified example, the catalyst deterioration determination unit 93 may also determine whether the catalyst 62a is deteriorated even when it is detected that the upstream exhaust passage member 61 is exposed to water. The catalyst deterioration determination unit 93 determines whether the catalyst 62a is deteriorated based on the water-exposition state of the upstream exhaust passage member 61 where the state is detected by the upstream exhaust passage member water exposition detection unit 92. For example, the catalyst deterioration determination unit 93 changes the predetermined time which is compared with the response delay time Td according to the level of the water-exposition state detected by the upstream exhaust passage member water exposition detection unit 92. When the response delay time Td is less than the predetermined time, the catalyst deterioration determination unit 93 determines that the catalyst 62a is deteriorated. When the response delay time Td is equal to or longer than the predetermined time, it is determined that the catalyst 62a is not deteriorated. The catalyst deterioration determination unit 93 of this modification determines whether the catalyst 62a is deteriorated based on the water-exposition state of the upstream exhaust passage member 61 where the state is detected by the upstream exhaust passage member water exposition detection unit 92. Even when the upstream exhaust passage member 61 is exposed to water, it is possible to detect that the catalyst 62a is deteriorated while preventing erroneous determination. Thus, it is possible to further reduce the situation in which the deterioration of the catalyst 62a is not detected even though the catalyst 62a is deteriorated. Therefore, the initial performance of the motorcycle with respect to exhaust gas purification can be more reliably maintained.

In Specific Examples 1 to 3 described above, after the presence or absence of water in the upstream exhaust passage member 61 is detected, the deterioration of the catalyst 62a is determined. However, after the deterioration of the catalyst 62a is determined, the presence or absence of water to which the upstream exhaust passage member is exposed 61 may be detected. Specifically, only when it is determined that the catalyst 62a is deteriorated, the presence or absence of water to which the upstream exhaust passage member is exposed 61 is detected after the deterioration determination. Then, when it is detected that the upstream exhaust passage member 61 is exposed to water, the catalyst deterioration determination unit 93 invalidates the result of the deterioration determination. When it is detected that the upstream exhaust passage member 61 is not exposed to water, the catalyst deterioration determination unit 93 validates the result of the deterioration determination. According to this modification, it is possible to reduce the frequency at which the water-exposition state is detected. Therefore, power required for control can be reduced.

The method of determining whether the catalyst 62a is deteriorated by the catalyst deterioration determination unit 93 may be a method other than the method described in the above-mentioned Specific Example 1. Further, as a method of determining whether the catalyst 62a is deteriorated by the catalyst deterioration determination unit 93, the method described in Specific Example 1 above may be combined with another method. As a result, the accuracy with which the deterioration is determined can be improved. Hereinafter, a Specific Example of the deterioration determination method other than the method described in Specific Example 1 will be described.

The number of times of rich/lean inversion of the output voltage of the upstream oxygen sensor 76 in a certain period is defined as PI. This period is a period during which the feedback control of the fuel injection amount is performed based on the output voltage of the upstream oxygen sensor 76. The number of times of rich/lean inversion of the output voltage is the number of times of changes in the output voltage from the rich side to the lean side, or the number of times changes in the output voltage from the lean side to the rich side. The number of times of rich/lean inversion of the output voltage of the downstream oxygen sensor 77 in the same period is defined as P2. The catalyst deterioration determination unit 93 may determine whether the catalyst 62a is deteriorated based on the ratio (P2/P1) of the number P2 to the number PI. Because the feedback control of the fuel injection amount is performed, the output voltage of the upstream oxygen sensor 76 periodically changes to the rich side and the lean side. However, the catalyst 62a consumes oxygen when purifying the exhaust gas. Therefore, the output voltage of the downstream oxygen sensor 77 does not follow the output voltage of the upstream oxygen sensor 76, and takes a smoothed (blunted) value. When feedback control is performed with a slightly rich air-fuel ratio as the target air-fuel ratio, the output voltage of the upstream oxygen sensor 76 periodically changes to the rich side and the lean side. In this case, if the catalyst 62a has not deteriorated, the output voltage of the downstream oxygen sensor 77 is maintained substantially on the rich side. On the other hand, when the catalyst 62a is deteriorated, when the output voltage of the upstream oxygen sensor 76 periodically changes to the rich side and the lean side, the output voltage of the downstream oxygen sensor 77 changes between the rich state and the lean side. Therefore, it is possible to determine whether the catalyst 62a is deteriorated based on the above ratio (P2/P1). When the ratio (P2/P1) is equal to or larger than a predetermined value, it is determined that the catalyst 62a is deteriorated. When the ratio (P2/P1) is less than the predetermined value, it is determined that the catalyst 62a is not deteriorated.

Further, the catalyst deterioration determination unit 93 may determine whether the catalyst 62a is deteriorated by using a signal of only the downstream oxygen sensor 77 without using the signal of the upstream oxygen sensor 76. Specifically, for example, the fuel injection amount is controlled such that the air-fuel mixture repeats the rich state and the lean state for a certain period (for example, for several seconds). Then, the catalyst deterioration determination unit 93 may determine whether the catalyst 62a is deteriorated based on the delay in the change of the signal of the downstream oxygen sensor 77 with respect to the change in the fuel injection amount. When the change in the signal change of the downstream oxygen sensor 77 is large, it is determined that the catalyst 62a has deteriorated.

When the catalyst deterioration determination unit 93 determines whether the catalyst 62a is deteriorated without using the signal of the oxygen sensors 76 and 77, the catalyst deterioration determination unit 93 may determine, based on the same determination method, whether the catalysts (68U, 68D) which are different from the catalyst 62a are deteriorated.

### [Reference Signs List]

1 motorcycle (straddled vehicle)
2 front wheel unit
3 rear wheel unit
9 seat
11, 111 engine unit
14 display device (notification unit)
17 notification unit
20 engine main body
41 radiator
60 exhaust device
61 upstream exhaust passage member
62 catalyst unit
62a catalyst
63 downstream exhaust passage member
68U upstream catalyst
68D downstream catalyst
71 coolant water temperature sensor (coolant medium temperature sensor)
76, 176C upstream oxygen sensor
77, 177C downstream oxygen sensor
78 exhaust gas temperature sensor
92 upstream exhaust passage member water exposition detection unit
93 catalyst deterioration determination unit
169FU front upstream exhaust passage member (upstream exhaust passage member)
169RU rear upstream exhaust passage member (upstream exhaust passage member)
162aF front catalyst
162aR rear catalyst
176F front upstream oxygen sensor (upstream oxygen sensor)
177F front downstream oxygen sensor (downstream oxygen sensor)
176R rear upstream oxygen sensor (upstream oxygen sensor)
177R rear downstream oxygen sensor (downstream oxygen sensor)
294 element impedance detection unit

## Claims

1. A straddled vehicle (1) comprising:
a front wheel unit (2) including at least one front wheel;
a rear wheel unit (3) disposed rearward of the front wheel unit (2) in a vehicle front-rear direction and including at least one rear wheel;
an engine unit (11, 111) which is at least partially disposed between the front wheel unit (2) and the rear wheel unit (3) when viewed in a vehicle left or right direction; and
a notification unit (14, 17) electrically connected to the engine unit (11, 111),
the engine unit (11, 111) including:
an engine main body (20, 120) which is at least partially disposed between the front wheel unit (2) and the rear wheel unit (3) when viewed in the left or right direction,
an exhaust device (60) connected to the engine main body (20, 120), the exhaust device (60) including a catalyst unit (62) having a catalyst (62a, 162aF, 162aR) for purifying exhaust gas discharged from the engine main body (20, 120) and an upstream exhaust passage member (61, 169FU, 169RU) connecting the engine main body (20, 120) and the catalyst unit (62), at least a part of the upstream exhaust passage member (61, 169FU, 169RU) being disposed at a position which is sprinkled with water splashed up by at least one of the front wheel unit (2) or the rear wheel unit (3),
an upstream exhaust passage member sprinkle water detection unit (92) configured to detect a water-sprinkle state of the upstream exhaust passage member (61, 169FU, 169RU) due to water splashed up by at least one of the front wheel unit (2) or the rear wheel unit (3), and
a catalyst deterioration determination unit (93) configured to determine whether the catalyst (62a, 162aF, 162aR) is deteriorated when the catalyst (62a, 162aF, 162aR) is in an active state, the catalyst deterioration determination unit (93) being configured to control the determination of whether the catalyst (62a, 162aF, 162aR) is deteriorated based on the water-sprinkle state of the upstream exhaust passage member (61, 169FU, 169RU) due to water splashed up by at least one of the front wheel unit (2) or the rear wheel unit (3) wherein the state is detected by the upstream exhaust passage member sprinkle water detection unit (92), and
the notification unit (14, 17) making notification when the catalyst deterioration determination unit (93) determines that the catalyst (62a, 162aF, 162aR) has deteriorated.

2. The straddled vehicle (1) according to claim 1, wherein the catalyst deterioration determination unit (93) is configured to determine whether the catalyst (62a, 162aF, 162aR) is deteriorated when the upstream exhaust passage member sprinkle water detection unit (92) detects that the upstream exhaust passage member (61, 169FU, 169RU) is not sprinkled with water, and not to determine whether the catalyst (62a, 162aF, 162aR) is deteriorated when the upstream exhaust passage member sprinkle water detection unit (92) detects that the upstream exhaust passage member (61, 169FU, 169RU) is sprinkled with water splashed up by at least one of the front wheel unit (2) or the rear wheel unit (3).

3. The straddled vehicle (1) according to claim 1 or claim 2, wherein the catalyst deterioration determination unit (93) is configured to determine whether the catalyst (62a, 162aF, 162aR) is deteriorated based on the water-sprinkle state of the upstream exhaust passage member (61, 169FU, 169RU) wherein the state is detected by the upstream exhaust passage member sprinkle water detection unit (92) when the upstream exhaust passage member sprinkle water detection unit (92) detects that the upstream exhaust passage member (61, 169FU, 169RU) is sprinkled with water splashed up by at least one of the front wheel unit (2) or the rear wheel unit (3).

4. The straddled vehicle (1) according to any one of claims 1 to 3,
wherein the engine unit (11, 111) includes
a radiator (41) which is at least partially disposed between the front wheel unit (2) and the rear wheel unit (3) when viewed in the left or right direction, the radiator (41) being configured to radiate heat of a coolant medium for cooling the engine main body (20, 120) to an atmosphere, and
a coolant medium temperature sensor (71) configured to detect a temperature of the coolant medium, and
wherein the upstream exhaust passage member sprinkle water detection unit (92) is configured to detect the water-sprinkle state of the upstream exhaust passage member (61, 169FU, 169RU) due to water splashed up by at least one of the front wheel unit (2) or the rear wheel unit (3) based on a signal of the coolant medium temperature sensor (71).

5. The straddled vehicle (1) according to any one of claims 1 to 3,
wherein the exhaust device (60) includes a downstream exhaust passage member (63) connected to a downstream end of the catalyst unit (62),
wherein the engine unit (11, 111) includes an exhaust gas temperature sensor (78) for detecting a temperature of an exhaust gas in the upstream exhaust passage member (61, 169FU, 169RU) or the downstream exhaust passage member (63), and
wherein the upstream exhaust passage member sprinkle water detection unit (92) is configured to detect the water-sprinkle state of the upstream exhaust passage member (61, 169FU, 169RU) due to water splashed up by at least one of the front wheel unit (2) or the rear wheel unit (3) based on a signal of the exhaust gas temperature sensor (78).

6. The straddled vehicle (1) according to any one of claims 1 to 3,
wherein the engine unit (11, 111) includes
an upstream oxygen sensor (76, 176C) configured to detect an oxygen concentration in an exhaust gas in the upstream exhaust passage member (61, 169FU, 169RU), and
an element impedance detection unit (294) configured to detect impedance of a detection element of the upstream oxygen sensor (76, 176C), and
wherein the upstream exhaust passage member sprinkle water detection unit (92) is configured to detect a water-sprinkle state of the upstream exhaust passage member (61, 169FU, 169RU) due to water splashed up by at least one of the front wheel unit (2) or the rear wheel unit (3) based on the impedance of the detection element of the upstream oxygen sensor (76, 176C) detected by the element impedance detection unit (294).

7. The straddled vehicle (1) according to any one of claims 1 to 3 and claim 6,
wherein the exhaust device (60) includes a downstream exhaust passage member (63) connected to a downstream end of the catalyst unit (62),
wherein the engine unit (11, 111) includes a downstream oxygen sensor (77, 177C) for detecting an oxygen concentration in an exhaust gas in the downstream exhaust passage member (63),
wherein the element impedance detection unit (294) is configured to detect impedance of a detection element of the downstream oxygen sensor (77, 177C), and
wherein the upstream exhaust passage member sprinkle water detection unit (92) is configured to detect the water-sprinkle state of the upstream exhaust passage member (61, 169FU, 169RU) due to water splashed up by at least one of the front wheel unit (2) or the rear wheel unit (3) based on the impedance of the detection element of the downstream oxygen sensor (77, 177C) detected by the element impedance detection unit (294).

## Patentansprüche

1. Ein Grätschsitzfahrzeug (1), das folgende Merkmale aufweist:
eine Vorderradeinheit (2), die zumindest ein Vorderrad umfasst;
eine Hinterradeinheit (3), die in einer Vorwärts-Rückwärts-Richtung des Fahrzeugs hinter der Vorderradeinheit (2) angeordnet ist und zumindest ein Hinterrad umfasst;
eine Motoreinheit (11, 111), die in einer Links- oder Rechtsrichtung des Fahrzeugs gesehen zumindest teilweise zwischen der Vorderradeinheit (2) und der Hinterradeinheit (3) angeordnet ist; und
eine Benachrichtungseinheit (14, 17), die mit der Motoreinheit (11, 111) elektrisch verbunden ist,
wobei die Motoreinheit (11, 111) folgende Merkmale umfasst:
einen Motorhauptkörper (20, 120), der in der Links- oder Rechtsrichtung gesehen zumindest teilweise zwischen der Vorderradeinheit (2) und der Hinterradeinheit (3) angeordnet ist,
eine Auspuffvorrichtung (60), die mit dem Motorhauptköper (20, 120) verbunden ist, wobei die Auspuffvorrichtung (60) eine Katalysatoreinheit (62), die einen Katalysator (62a, 162aF, 162aR) zum Reinigen von Abgas, das von dem Motorhauptköper (20, 120) abgelassen wird, und ein vorgeschaltetes Auspuffdurchgangsbauglied (61, 169FU, 169RU) umfasst, das den Motorhauptköper (20, 120) und die Katalysatoreinheit (62) verbindet, wobei zumindest ein Teil des vorgeschalteten Auspuffdurchgangsbauglieds (61, 169FU, 169RU) an einer Position angeordnet ist, die mit Wasser besprüht wird, das durch zumindest entweder die Vorderradeinheit (2) oder die Hinterradeinheit (3) hochgespritzt wird,
eine vorgeschaltete Auspuffdurchgangsbauglied-Sprühwassererfassungseinheit (92), die konfiguriert ist, um einen Wassersprühzustand des vorgeschalteten Auspuffdurchgangsbauglieds (61, 169FU, 169RU) aufgrund von Wasser, das durch zumindest entweder die Vorderradeinheit (2) oder die Hinterradeinheit (3) hochgespritzt wird, zu erfassen und
eine Katalysatorverschlechterungsbestimmungseinheit (93), die konfiguriert ist, um zu bestimmen, ob der Katalysator (62a, 162aF, 162aR) sich verschlechtert hat, wenn der Katalysator (62a, 162aF, 162aR) in einem aktiven Zustand ist, wobei die Katalysatorverschlechterungsbestimmungseinheit (93) konfiguriert ist, um die Bestimmung, ob der Katalysator (62a, 162aF, 162aR) sich verschlechtert hat, basierend auf dem Wassersprühzustand des vorgeschalteten Auspuffdurchgangsbauglieds (61, 169FU, 169RU) aufgrund von Wasser, das durch zumindest entweder die Vorderradeinheit (2) oder die Hinterradeinheit (3) hochgespritzt wird, zu steuern, wobei der Zustand durch die vorgeschaltete Auspuffdurchgangsbauglied-Sprühwassererfassungseinheit (92) erfasst wird und
wobei die Benachrichtungseinheit (14, 17) eine Benachrichtigung erteilt, wenn die Katalysatorverschlechterungsbestimmungseinheit (93) bestimmt, dass sich der Katalysator (62a, 162aF, 162aR) verschlechtert hat.

2. Das Grätschsitzfahrzeug (1) gemäß Anspruch 1, bei dem die Katalysatorverschlechterungsbestimmungseinheit (93) konfiguriert ist, um zu bestimmen, ob der Katalysator (62a, 162aF, 162aR) sich verschlechtert hat, wenn die vorgeschaltete Auspuffdurchgangsbauglied-Sprühwassererfassungseinheit (92) erfasst, dass das vorgeschaltete Auspuffdurchgangsbauglied (61, 169FU, 169RU) nicht mit Wasser besprüht ist, und nicht zu bestimmen, ob der Katalysator (62a, 162aF, 162aR) sich verschlechtert hat, wenn die vorgeschaltete Auspuffdurchgangsbauglied-Sprühwassererfassungseinheit (92) erfasst, dass das vorgeschaltete Auspuffdurchgangsbauglied (61, 169FU, 169RU) mit Wasser besprüht ist, das durch zumindest entweder die Vorderradeinheit (2) oder die Hinterradeinheit (3) hochgespritzt wird.

3. Das Grätschsitzfahrzeug (1) gemäß Anspruch 1 oder Anspruch 2, bei dem die Katalysatorverschlechterungsbestimmungseinheit (93) konfiguriert ist, um zu bestimmen, ob der Katalysator (62a, 162aF, 162aR) sich verschlechtert hat, basierend auf dem Wassersprühzustand des vorgeschalteten Auspuffdurchgangsbauglied (61, 169FU, 169RU), wobei der Zustand durch die vorgeschaltete Auspuffdurchgangsbauglied-Sprühwassererfassungseinheit (92) erfasst wird, wenn die vorgeschaltete Auspuffdurchgangsbauglied-Sprühwassererfassungseinheit (92) erfasst, dass das vorgeschaltete Auspuffdurchgangsbauglied (61, 169FU, 169RU) mit Wasser besprüht ist, das durch zumindest entweder die Vorderradeinheit (2) oder die Hinterradeinheit (3) hochgespritzt wird.

4. Das Grätschsitzfahrzeug (1) gemäß einem der Ansprüche 1 bis 3,
bei dem die Motoreinheit (11, 111) folgende Merkmale umfasst:
einen Kühler (41), der in der Links- oder Rechtsrichtung gesehen zumindest teilweise zwischen der Vorderradeinheit (2) und der Hinterradeinheit (3) angeordnet ist, wobei der Kühler (41) konfiguriert ist, um Wärme eines Kühlmediums zum Kühlen des Motorhauptköpers (20, 120) in eine Atmosphäre abzustrahlen und
einen Kühlmediumtemperatursensor (71), der konfiguriert ist, um eine Temperatur des Kühlmediums zu erfassen und
wobei die vorgeschaltete Auspuffdurchgangsbauglied-Sprühwassererfassungseinheit (92) konfiguriert ist, um den Wassersprühzustand des vorgeschalteten Auspuffdurchgangsbauglieds (61, 169FU, 169RU) aufgrund von Wasser, das durch zumindest entweder die Vorderradeinheit (2) oder die Hinterradeinheit (3) hochgespritzt wird, basierend auf einem Signal des Kühlmediumtemperatursensors (71) zu erfassen.

5. Das Grätschsitzfahrzeug (1) gemäß einem der Ansprüche 1 bis 3,
bei dem die Auspuffvorrichtung (60) ein nachgeschaltetes Auspuffdurchgangsbauglied (63) umfasst, das mit einem nachgeschalteten Ende der Katalysatoreinheit (62) verbunden ist,
wobei die Motoreinheit (11, 111) einen Abgastemperatursensor (78) zum Erfassen einer Temperatur eines Abgases in dem vorgeschalteten Auspuffdurchgangsbauglied (61, 169FU, 169RU) oder dem nachgeschalteten Auspuffdurchgangsbauglied (63) umfasst und
wobei die vorgeschaltete Auspuffdurchgangsbauglied-Sprühwassererfassungseinheit (91) konfiguriert ist, um den Wassersprühzustand des vorgeschalteten Auspuffdurchgangsbauglieds (61, 169FU, 169RU) aufgrund von Wasser, das durch zumindest entweder die Vorderradeinheit (2) oder die Hinterradeinheit (3) hochgespritzt wird, basierend auf einem Signal des Abgastemperatursensors (78) zu erfassen.

6. Das Grätschsitzfahrzeug (1) gemäß einem der Ansprüche 1 bis 3,
bei dem die Motoreinheit (11, 111) folgende Merkmale umfasst:
einen vorgeschalteten Sauerstoffsensor (76, 176C), der konfiguriert ist, um eine Sauerstoffkonzentration in einem Abgas in dem vorgeschalteten Auspuffdurchgangsbauglied (61, 169FU, 169RU) zu erfassen und
eine Elementimpedanzerfassungseinheit (294), die konfiguriert ist, um eine Impedanz eines Erfassungselements des vorgeschalteten Sauerstoffsensors (76, 176C) zu erfassen und
wobei die vorgeschaltete Auspuffdurchgangsbauglied-Sprühwassererfassungseinheit (92) konfiguriert ist, um einen Wassersprühzustand des vorgeschalteten Auspuffdurchgangsbauglieds (61, 169FU, 169RU) aufgrund von Wasser, das durch zumindest entweder die Vorderradeinheit (2) oder die Hinterradeinheit (3) hochgespritzt wird, basierend auf der Impedanz des Erfassungselements des vorgeschalteten Sauerstoffsensors (76, 176C) zu erfassen, die durch die Elementimpedanzerfassungseinheit (294) erfasst wird.

7. Das Grätschsitzfahrzeug (1) gemäß einem der Ansprüche 1 bis 3 und Anspruch 6, bei dem die Auspuffvorrichtung (60) ein nachgeschaltetes Auspuffdurchgangsbauglied (63) umfasst, das mit einem nachgeschalteten Ende der Katalysatoreinheit (62) verbunden ist,
wobei die Motoreinheit (11, 111) einen nachgeschalteten Sauerstoffsensor (77, 177C) zum Erfassen einer Sauerstoffkonzentration in einem Abgas in dem nachgeschalteten Auspuffdurchgangsbauglied (63) umfasst,
wobei die Elementimpedanzerfassungseinheit (294) konfiguriert ist, um eine Impedanz eines Erfassungselements des nachgeschalteten Sauerstoffsensors (77, 177C) zu erfassen und
wobei die vorgeschaltete Auspuffdurchgangsbauglied-Sprühwassererfassungseinheit (92) konfiguriert ist, um den Wassersprühzustand des vorgeschalteten Auspuffdurchgangsbauglieds (61, 169FU, 169RU) aufgrund von Wasser, das durch zumindest entweder die Vorderradeinheit (2) oder die Hinterradeinheit (3) hochgespritzt wird, basierend auf der Impedanz des Erfassungselements des nachgeschalteten Sauerstoffsensors (77, 177C) zu erfassen, die durch die Elementimpedanzerfassungseinheit (294) erfasst wird.

## Revendications

1. Véhicule à selle (1), comprenant:
une unité de roue avant (2) comportant au moins une roue avant;
une unité de roue arrière (3) disposée à l'arrière de l'unité de roue avant (2) dans une direction avant-arrière du véhicule et comportant au moins une roue arrière;
une unité de moteur (11, 111) qui est au moins partiellement disposée entre l'unité de roue avant (2) et l'unité de roue arrière (3) lorsque vue dans la direction à gauche ou à droite du véhicule; et
une unité de notification (14, 17) connectée électriquement à l'unité de moteur (11, 111),
l'unité de moteur (11, 111) comportant:
un corps principal de moteur (20, 120) qui est au moins partiellement disposé entre l'unité de roue avant (2) et l'unité de roue arrière (3) lorsque vu dans la direction à gauche ou à droite,
un dispositif d'échappement (60) connecté au corps principal de moteur (20, 120), le dispositif d'échappement (60) comportant une unité de catalyseur (62) présentant un catalyseur (62a, 162aF, 162aR) destiné à purifier les gaz d'échappement évacués du corps principal de moteur (20, 120) et un élément de passage d'échappement amont (61, 169FU, 169RU) connectant le corps principal de moteur (20, 120) et l'unité de catalyseur (62), au moins une partie de l'élément de passage d'échappement amont (61, 169FU, 169RU) étant disposée à une position qui est arrosée d'eau éclaboussée par au moins l'une parmi l'unité de roue avant (2) ou l'unité de roue arrière (3),
une unité de détection d'eau d'arrosage de l'élément de passage d'échappement amont (92) configurée pour détecter un état d'arrosage d'eau de l'élément de passage d'échappement amont (61, 169FU, 169RU) par suite de l'eau éclaboussée par au moins l'une parmi l'unité de roue avant (2) ou l'unité de roue arrière (3), et
une unité de détermination de détérioration de catalyseur (93) configurée pour déterminer si le catalyseur (62a, 162aF, 162aR) est détérioré lorsque le catalyseur (62a, 162aF, 162aR) est à l'état actif, l'unité de détermination de détérioration de catalyseur (93) étant configurée pour commander la détermination de si le catalyseur (62a, 162aF, 162aR) est détérioré sur base de l'état d'arrosage d'eau de l'élément de passage d'échappement amont (61, 169FU, 169RU) par suite de l'eau éclaboussée par au moins l'une parmi l'unité de roue avant (2) ou l'unité de roue arrière (3), où l'état est détecté par l'unité de détection d'eau d'arrosage de l'élément de passage d'échappement amont (92), et
l'unité de notification (14, 17) effectuant une notification lorsque l'unité de détermination de détérioration de catalyseur (93) détermine que le catalyseur (62a, 162aF, 162aR) s'est détérioré.

2. Véhicule à selle (1) selon la revendication 1, dans lequel l'unité de détermination de détérioration de catalyseur (93) est configurée pour déterminer si le catalyseur (62a, 162aF, 162aR) est détérioré lorsque l'unité de détection d'eau d'arrosage de l'élément de passage d'échappement amont (92) détecte que l'élément de passage d'échappement amont (61, 169FU, 169RU) n'est pas arrosé d'eau et pour ne pas déterminer si le catalyseur (62a, 162aF, 162aR) est détérioré lorsque l'unité de détection d'eau d'arrosage de l'élément de passage d'échappement amont (92) détecte que l'élément de passage d'échappement amont (61, 169FU, 169RU) est arrosé d'eau éclaboussée par au moins l'une parmi l'unité de roue avant (2) ou l'unité de roue arrière (3).

3. Véhicule à selle (1) selon la revendication 1 ou la revendication 2, dans lequel l'unité de détermination de détérioration de catalyseur (93) est configurée pour déterminer si le catalyseur (62a, 162aF, 162aR) est détérioré sur base de l'état d'arrosage d'eau de l'élément de passage d'échappement amont (61, 169FU, 169RU), où l'état est détecté par l'unité de détection d'eau d'arrosage de l'élément de passage d'échappement amont (92) lorsque l'unité de détection d'eau d'arrosage de l'élément de passage d'échappement amont (92) détecte que l'élément de passage d'échappement amont (61, 169FU, 169RU) est arrosé d'eau éclaboussée par au moins l'une parmi l'unité de roue avant (2) ou l'unité de roue arrière (3).

4. Véhicule à selle (1) selon l'une quelconque des revendications 1 à 3,
dans lequel l'unité de moteur (11, 111) comporte
un radiateur (41) qui est disposé au moins partiellement entre l'unité de roue avant (2) et l'unité de roue arrière (3) lorsque vu dans la direction à gauche ou à droite, le radiateur (41) étant configuré pour rayonner la chaleur d'un fluide de refroidissement pour refroidir le corps principal de moteur (20, 120) dans une atmosphère, et
un capteur de température de fluide de refroidissement (71) configuré pour détecter une température du fluide de refroidissement, et
dans lequel l'unité de détection d'eau d'arrosage de l'élément de passage d'échappement amont (92) est configurée pour détecter l'état d'arrosage d'eau de l'élément de passage d'échappement amont (61, 169FU, 169RU) par suite de l'eau éclaboussée par au moins l'une parmi l'unité de roue avant (2) ou l'unité de roue arrière (3) sur base d'un signal du capteur de température de liquide de refroidissement (71).

5. Véhicule à selle (1) selon l'une quelconque des revendications 1 à 3,
dans lequel le dispositif d'échappement (60) comporte un élément de passage d'échappement aval (63) connecté à une extrémité aval de l'unité de catalyseur (62),
dans lequel l'unité de moteur (11, 111) comporte un capteur de température de gaz d'échappement (78) destiné à détecter une température d'un gaz d'échappement dans l'élément de passage d'échappement amont (61, 169FU, 169RU) ou l'élément de passage d'échappement aval (63), et
dans lequel l'unité de détection d'eau d'arrosage de l'élément de passage d'échappement amont (92) est configurée pour détecter l'état d'arrosage d'eau de l'élément de passage d'échappement amont (61, 169FU, 169RU) par suite de l'eau éclaboussée par au moins l'une parmi l'unité de roue avant (2) ou l'unité de roue arrière (3) sur base d'un signal du capteur de température de gaz d'échappement (78).

6. Véhicule à selle (1) selon l'une quelconque des revendications 1 à 3,
dans lequel l'unité de moteur (11, 111) comporte
un capteur d'oxygène amont (76, 176C) configuré pour détecter une concentration d'oxygène dans un gaz d'échappement dans l'élément de passage d'échappement amont (61, 169FU, 169RU), et
une unité de détection d'impédance d'élément (294) configurée pour détecter l'impédance d'un élément de détection du capteur d'oxygène amont (76, 176C), et
dans lequel l'unité de détection d'eau d'arrosage de l'élément de passage d'échappement amont (92) est configurée pour détecter un état d'arrosage d'eau de l'élément de passage d'échappement amont (61, 169FU, 169RU) par suite de l'eau éclaboussée par au moins l'une parmi l'unité de roue avant (2) ou l'unité de roue arrière (3) sur base de l'impédance de l'élément de détection du capteur d'oxygène amont (76, 176C) détectée par l'unité de détection d'impédance d'élément (294).

7. Véhicule à selle (1) selon l'une quelconque des revendications 1 à 3 et la revendication 6,
dans lequel le dispositif d'échappement (60) comporte un élément de passage d'échappement aval (63) connecté à une extrémité aval de l'unité de catalyseur (62),
dans lequel l'unité de moteur (11, 111) comporte un capteur d'oxygène aval (77, 177C) destiné à détecter une concentration d'oxygène dans un gaz d'échappement dans l'élément de passage d'échappement aval (63),
dans lequel l'unité de détection d'impédance d'élément (294) est configurée pour détecter l'impédance d'un élément de détection du capteur d'oxygène aval (77, 177C), et
dans lequel l'unité de détection d'eau d'arrosage de l'élément de passage d'échappement amont (92) est configurée pour détecter l'état d'arrosage d'eau de l'élément de passage d'échappement amont (61, 169FU, 169RU) par suite de l'eau éclaboussée par au moins l'une parmi l'unité de roue avant (2) ou l'unité de roue arrière (3) sur base de l'impédance de l'élément de détection du capteur d'oxygène aval (77, 177C) détectée par l'unité de détection d'impédance d'élément (294).
